# EUROPÄISCHE PATENTSCHRIFT

(11) **EP 4 259 332 B1**
(45) Veröffentlichungstag und Bekanntmachung des Hinweises auf die Patenterteilung: **09.10.2024**
(21) Anmeldenummer: 21865351.7
(22) Anmeldetag: 10.12.2021
(51) Int. Cl.: B01F 31/22, B01F 35/43, G01N 1/38, B01F 31/20, B01L 9/00, G01N 35/00

(54) **LABORGERÄT MIT FIXIERMECHANISMUS ZUM FIXIEREN EINES OBJEKTTRÄGERS**
LABORATORY APPARATUS COMPRISING A FIXING MECHANISM FOR FIXING A SLIDE
APPAREIL DE LABORATOIRE POURVU D'UN MÉCANISME DE FIXATION POUR FIXER UN PORTE-OBJET

(30) Priorität: 14.12.2020 DE 102020133420
(43) Veröffentlichungstag der Anmeldung: 18.10.2023
(73) Patentinhaber: Qinstruments GmbH, 07749 Jena (DE)
(72) Erfinder: SIMMAT, Olaf, 07774 Dornburg-Camburg (DE); VESTER, Andreas, 07749 Jena (DE); BACHSEITZ, Michael, 07743 Jena (DE); GÖRSCH, Matthias, 07743 Jena (DE)
(74) Vertreter: Maiwald GmbH
(86) Internationale Anmeldenummer: PCT/EP2021/085280
(87) Internationale Veröffentlichungsnummer: WO 2022/128814

(56) Entgegenhaltungen:
- EP-A1- 2 547 431
- EP-B1- 2 547 431
- US-A1- 2003 174 394
- US-A1- 2013 011 224

## Beschreibung

Die Erfindung betrifft Laborgeräte und Verfahren zum Fixieren eines Objektträgers.

EP 2,547,431 offenbart eine Vorrichtung zum Positionieren einer Funktionseinrichtung, wobei die Vorrichtung einen Grundkörper, ein auf dem Grundkörper anordbares Trägerelement zum Aufnehmen der Funktionseinrichtung, Positionieranschläge, die zum Einspannen der Funktionseinrichtung verschiebbar gelagert sind, eine Betätigungseinrichtung, die derart eingerichtet ist, dass mittels Betätigens der Betätigungseinrichtung die Positionieranschläge zwischen einem die Funktionseinrichtung in Eingriff nehmenden Betriebszustand und einem die Funktionseinrichtung freigebenden Betriebszustand überführbar sind, und ein Kraftübertragungselement aufweist, das zum Übertragen einer Betätigungskraft von der Betätigungseinrichtung auf die Positionieranschläge eingerichtet ist. Die Betätigungseinrichtung und das Kraftübertragungselement sind derart gekoppelt, dass in dem die Funktionseinrichtung in Eingriff nehmenden Betriebszustand das Kraftübertragungselement eine Funktionseinrichtungskraft der Funktionseinrichtung derart auf die Betätigungseinrichtung überträgt, dass die Betätigungseinrichtung trotz Einwirkens der übertragenen Funktionseinrichtungskraft gegenüber dem Trägerelement in einer Ruhestellung verbleibt.

Es ist eine Aufgabe der vorliegenden Erfindung, Laborgeräte und Verfahren zum Fixieren eines Objektträgers in einfacher und fehlerrobuster Weise zu ermöglichen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel eines ersten Aspekts der vorliegenden Erfindung ist ein Laborgerät zum Fixieren eines Objektträgers geschaffen, wobei das Laborgerät ein Grundbauteil zum Aufnehmen des Objektträgers, einen bewegbaren ersten Positionieranschlag zum Anschlagen an einen ersten Randbereich des Objektträgers, einen zweiten Positionieranschlag zum Anschlagen an einen zweiten Randbereich des Objektträgers, einen Fixiermechanismus zum Fixieren des Objektträgers auf dem Grundbauteil zwischen dem ersten Positionieranschlag und dem zweiten Positionieranschlag mittels Bewegens zumindest des ersten Positionieranschlags (insbesondere relativ zu dem Grundbauteil), und eine Betätigungseinrichtung zum Betätigen des Fixiermechanismus zum Überführen zumindest des ersten Positionieranschlags zwischen einem den Objektträger fixierenden Betriebszustand und einem den Objektträger freigebenden Betriebszustand aufweist, wobei der Fixiermechanismus mindestens einen derart in mindestens einer Führungsaussparung (insbesondere hin und her verschiebbar) führbaren Führungskörper aufweist, dass eine Betätigungskraft zum Betätigen der Betätigungseinrichtung zum Überführen des Fixiermechanismus in den den Objektträger freigebenden Betriebszustand kleiner ist als eine von dem Objektträger auszuübende Lösekraft zum Lösen des fixierten Objektträgers.

Gemäß einem anderen Ausführungsbeispiel des ersten Aspekts der vorliegenden Erfindung ist ein Verfahren zum Fixieren eines Objektträgers bereitgestellt, wobei das Verfahren ein Aufnehmen des Objektträgers auf einem Grundbauteil aufweist. Ferner kann das Verfahren ein Betätigen eines Betätigungsmechanismus bzw. einer Betätigungseinrichtung zum Einwirken auf einen Fixiermechanismus zum Fixieren des Objektträgers auf dem Grundbauteil zwischen einem beweglichen ersten Positionieranschlag und einem zweiten Positionieranschlag mittels Bewegens zumindest des ersten Positionieranschlags derart aufweisen, dass der erste Positionieranschlag an einen ersten Randbereich des Objektträgers und der zweite Positionieranschlag an einen zweiten Randbereich des Objektträgers anschlägt. Darüber hinaus kann das Verfahren ein Führen mindestens eines Führungskörpers in mindestens einer Führungsaussparung des Fixiermechanismus derart aufweisen, dass eine Betätigungskraft zum Überführen des Fixiermechanismus in einen den (insbesondere zuvor fixierten) Objektträger freigebenden Betriebszustand kleiner ist als eine von dem Objektträger auszuübende Lösekraft zum Lösen des fixierten Objektträgers.

Gemäß einem Ausführungsbeispiel eines zweiten Aspekts der vorliegenden Erfindung ist ein Laborgerät zum Fixieren eines Objektträgers geschaffen, wobei das Laborgerät ein Grundbauteil zum Aufnehmen des Objektträgers, einen bewegbaren ersten Positionieranschlag zum Anschlagen an einen ersten Randbereich des Objektträgers, einen zweiten Positionieranschlag zum Anschlagen an einen zweiten Randbereich des Objektträgers, einen Fixiermechanismus zum Fixieren des Objektträgers auf dem Grundbauteil zwischen dem ersten Positionieranschlag und dem zweiten Positionieranschlag mittels Bewegens zumindest des ersten Positionieranschlags, und eine Betätigungseinrichtung zum Betätigen des Fixiermechanismus zum Überführen zumindest des ersten Positionieranschlags zwischen einem den Objektträger fixierenden Betriebszustand und einem den Objektträger freigebenden Betriebszustand aufweisen, wobei der Fixiermechanismus entlang zumindest eines Teils eines Umfangs des Grundbauteils unter Freilassung eines von dem Umfang umgebenen Zentralbereichs des Grundbauteils angeordnet ist.

Gemäß einem anderen Ausführungsbeispiel des zweiten Aspekts der vorliegenden Erfindung ist ein Verfahren zum Fixieren eines Objektträgers bereitgestellt, wobei das Verfahren ein Aufnehmen des Objektträgers auf einem Grundbauteil, ein Betätigen eines Betätigungsmechanismus bzw. einer Betätigungseinrichtung zum Einwirken auf einen Fixiermechanismus zum Fixieren des Objektträgers auf dem Grundbauteil zwischen einem beweglichen ersten Positionieranschlag und einem zweiten Positionieranschlag mittels Bewegens zumindest des ersten Positionieranschlags, sodass der erste Positionieranschlag an einen ersten Randbereich des Objektträgers und der zweite Positionieranschlag an einen zweiten Randbereich des Objektträgers anschlägt, und ein Anordnen des Fixiermechanismus entlang zumindest eines Teils eines Umfangs des Grundbauteils unter Freilassung eines von dem Umfang umgebenen Zentralbereichs des Grundbauteils aufweist.

Im Rahmen der vorliegenden Anmeldung können unter einem "Laborgerät" insbesondere in einem Chemielabor, Biochemielabor, Biophysiklabor, pharmazeutischen Labor und/oder medizinischen Labor verwendete Vorrichtungen, Werkzeuge und Hilfsmittel verstanden werden, die zur Durchführung von chemischen, biochemischen, biophysikalischen, pharmazeutischen und/oder medizinischen Verfahren wie Probenbehandlungen, Probenvorbereitungen, Probentrennungen, Probentests, Probenuntersuchungen, Synthesen und/oder Analysen verwendet werden können.

Im Rahmen der vorliegenden Anmeldung kann unter einem "Objektträger" insbesondere eine Vorrichtung verstanden werden, die zum Aufnehmen eines in einem Labor zu handhabenden Mediums (zum Beispiel eines Mediums, das flüssig und/oder fest und/oder gasförmig sein kann) ausgebildet ist. Insbesondere kann ein Objektträger zum Aufnehmen einer Substanz in einen Behälter oder vorzugsweise mehrerer Substanzen in unterschiedlichen Behältern ausgebildet sein. Beispielsweise kann ein Objektträger eine Probenträgerplatte sein, beispielsweise eine Mikrotiterplatte mit einer Vielzahl von Kavitäten.

Im Rahmen der vorliegenden Anmeldung kann unter einem "Positionieranschlag" insbesondere ein Körper, Bauteil oder Mechanismus verstanden werden, der oder das ausgebildet ist, an einen Randbereich eines Objektträgers anzugrenzen oder anzuschlagen, um dadurch auf den Objektträger einen diesen fixierenden und/oder positionierenden Einfluss auszuüben. Insbesondere kann ein Positionieranschlag auf einen Objektträger eine diesen zumindest temporär befestigende Befestigungskraft ausüben.

Im Rahmen der vorliegenden Anmeldung kann unter einem "Randbereich eines Objektträgers" eine Position an oder nahe einer umfänglichen Begrenzung eines Objektträgers verstanden werden. Insbesondere kann ein Rand eines Objektträgers durch eine Seitenwand des Objektträgers definiert werden.

Im Rahmen der vorliegenden Anmeldung kann unter einem "Fixiermechanismus" insbesondere eine Anordnung zusammenwirkender Elemente oder Bauteile verstanden werden, die gemeinsam auf einen Objektträger eine den Objektträger an einer vorbestimmten Position fixierende Fixierkraft ausüben.

Im Rahmen der vorliegenden Anmeldung kann unter einer "Betätigungseinrichtung" insbesondere eine mechanische Anordnung verstanden werden, die es einem Benutzer, Aktuator und/oder Handler-Roboter ermöglicht, das Laborgerät mit einer Betätigungskraft zum Vorgeben eines definierten Betriebsmodus zu beaufschlagen. Insbesondere kann zumindest ein Teil der Betätigungseinrichtung an einem Äußeren des Laborgeräts angebracht sein, um einen Zugriff insbesondere eines Benutzers und/oder Handler-Roboters auf die Betätigungseinrichtung zu ermöglichen. Es ist alternativ oder ergänzend auch möglich, zumindest einen Teil der Betätigungseinrichtung in einem Inneren des Laborgeräts anzubringen, um einen Zugriff insbesondere eines ebenfalls im Inneren des Laborgeräts angebrachten Aktuators zu ermöglichen. Das Betätigen der Betätigungseinrichtung kann zum Beispiel durch eine Längskraft auf ein längsverschiebbares Element und/oder durch eine Drehkraft auf einen schwenkbaren Hebel oder dergleichen erfolgen.

Im Rahmen der vorliegenden Anmeldung kann unter einer "einer Betätigungskraft zum Überführen des Fixiermechanismus in einen den Objektträger freigebenden Betriebszustand kleiner als eine von dem Objektträger auszuübende Lösekraft zum Lösen des fixierten Objektträgers" insbesondere eine asymmetrische Kraftübertragung verstanden werden, die ein kraftärmeres Betätigen der Betätigungseinrichtung mit einem vorteilhaft wesentlich kraftintensiveren unerwünschten Lösen des Objektträgers von dem Laborgerät kombiniert. Mit anderen Worten kann ein Kraftübertragungsmechanismus sicherstellen, dass eine von außen aufzubringende Betätigungskraft zum Überführen des Objektträgers zwischen Fixierung und Freigabe des Objektträgers geringer, insbesondere maximal die Hälfte, einer Lösekraft ist, die ein Objektträger (zum Beispiel während Durchführens einer orbitalen Misch- oder Schüttel-Bewegung) auf das Laborgerät ausübt.

Im Rahmen der vorliegenden Anmeldung kann unter einem "Fixiermechanismus entlang zumindest eines Teils eines Umfangs des Grundbauteils unter Freilassung eines von dem Umfang umgebenen Zentralbereichs des Grundbauteils" insbesondere ein Fixiermechanismus verstanden werden, dessen Elemente oder Bauteile ausschließlich entlang eines äußeren Randes des Laborgeräts angeordnet sind, sodass ein Großteil (insbesondere mindestens 50 %, weiter insbesondere mindestens 80 %) der Fläche des Grundbauteils von diesen Elementen oder Bauteilen umschlossen ist. Daher steht besagte Fläche zur Erfüllung von anderen Aufgaben zur Verfügung.

Gemäß einem exemplarischen Ausführungsbeispiel des ersten Aspekts der Erfindung (der mit dem zweiten Aspekt kombiniert werden kann oder unabhängig von dem zweiten Aspekt implementiert werden kann) wird ein Laborgerät geschaffen, das eine kraftarme Betätigung zur Montage bzw. Demontage eines zu fixierenden Objektträgers gestattet und gleichzeitig einen zuverlässigen Schutz vor einem unerwünschten Lösen eines montierten Objektträgers durch betätigungsfremde Kräfte (insbesondere Schüttelkräfte während eines Mischbetriebs) bietet. Die kraftarme Betätigung kann in benutzerfreundlicher Weise durch Muskelkraft eines Benutzers oder durch eine automatisierte Einheit, wie beispielsweise einen Aktuator oder einen Roboter, bewerkstelligt werden. Gleichzeitig kann zum Beispiel während eines Bewegens des Objektträgers auf einer Orbitalbahn zum Mischen von Medium in dem Objektträger zuverlässig vermieden werden, dass die Bewegungskräfte des Objektträgers diesen in unerwünschter Weise aus seiner fixierten Konfiguration lösen. Eine solche kraftarme Handhabung des Laborgeräts bei gleichzeitig ausgeprägter Selbsthemmung gegen ein unerwünschtes Lösen des Objektträgers aus dem Laborgerät kann durch einen asymmetrischen Kraftübertragungmechanismus erreicht werden, der eine Betätigungskraft entlang einer anderen Richtung auf einen Führungskörper in einer Führungsaussparung überträgt als eine Löse- oder Zentrifugalkraft oder dergleichen von dem Objektträger auf den Führungskörper in der Führungsaussparung. Zum Beispiel kann die Betätigungskraft den Führungskörper reibungsarm entlang der Führungsaussparung führen, wohingegen eine Löse- oder Zentrifugalkraft auf den Führungskörper winkelig oder sogar orthogonal zu einer Erstreckungsrichtung der Führungsaussparung einwirkt und dadurch ein Lösen verunmöglicht, blockiert oder zumindest wesentlich hemmt. Mit Vorteil können Führungskörper und Führungsaussparung an einer im Wesentlichen frei wählbaren Position des Laborgeräts untergebracht werden, zum Beispiel außerhalb eines Aufnahmebereichs des Objektträgers auf dem Grundbauteil des Laborgeräts. Auf diese Weise kann zum Beispiel eine funktional mit dem Objektträger zusammenwirkende Wechselwirkungseinrichtung (beispielsweise eine Temperiereinrichtung) beispielsweise in einem zentralen Raumbereich des Grundbauteils angeordnet werden, ohne mit dem Fixiermechanismus (beispielsweise einer Anordnung aus Führungskörper und Führungsaussparung - die beispielsweise in einer Ecke angeordnet sein können) in unerwünschte Wechselwirkung zu treten. Ein hoher Benutzerkomfort kann dadurch synergistisch mit einer wirksamen Selbsthemmung gegen Lösen des Objektträgers und mit einer hohen Designfreiheit zum Integrieren einer Wechselwirkungseinrichtung zum Wechselwirken mit einem montierten Objektträger kombiniert werden. Ferner kann ein solches Laborgerät kompakt gefertigt werden.

Gemäß einem exemplarischen Ausführungsbeispiel des zweiten Aspekts der Erfindung (der mit dem ersten Aspekt kombiniert werden kann oder unabhängig von dem ersten Aspekt implementiert werden kann) wird ein Fixiermechanismus zum Fixieren eines Objektträgers an einem Laborgerät mittels Betätigens einer Betätigungseinrichtung teilumfänglich oder vollumfänglich umlaufend um einen Zentralbereich eines Grundbauteils des Laborgeräts angeordnet. Anders ausgedrückt kann der Fixiermechanismus entlang eines Rands des Grundbauteils geführt sein und kann auch um einen äußeren Rand des Objektträgers herum geführt sein. Indem der Fixiermechanismus zum Fixieren des Objektträgers keine Komponenten aufweist, die sich in einen Innenbereich des Grundbauteils hinein erstrecken, über welchem Innenbereich zumindest ein Teil des Objektträgers positioniert ist, bleibt der Zentralbereich unterhalb des Objektträgers für das Aufnehmen einer Wechselwirkungseinrichtung zum funktionellen Zusammenwirken mit dem Objektträger frei. Dadurch kann erreicht werden, dass der Fixiermechanismus keinerlei Einschränkungen hinsichtlich einer direkten funktionalen Wechselwirkung zwischen dem Laborgerät und dem darauf aufgenommenen Objektträger mit sich bringt. Vorteilhaft kann mit einem solchen ringförmig umlaufenden Fixiermechanismus auch eine kraftarme Betätigung desselben durch eine außenseitig angebrachte Betätigungseinrichtung und eine robuste Selbsthemmung gegen ein unerwünschtes Lösen des Objektträgers von dem Laborgerät erreicht werden, selbst wenn auf den Objektträger während des Betriebs des Laborgeräts signifikante Betriebskräfte (beispielsweise eine Zentrifugalkraft zum Mischen von Medium in dem Objektträger) einwirken.

Im Weiteren werden zusätzliche exemplarische Ausführungsbeispiele der Laborgeräte und der Verfahren beschrieben.

Gemäß einem exemplarischen Ausführungsbeispiel kann der Führungskörper ein Führungsstift sein. Ein solcher Führungsstift kann einerseits in einer Führungsstruktur, insbesondere einer Führungsscheibe, oder dergleichen entlang einer darin gebildeten Führungsaussparung verfahren werden und kann andererseits mit einer Linearführung zusammenwirken oder einen Teil einer solchen Linearführung bilden, um eine mittels der Betätigungseinrichtung auf die Führungsscheibe ausgeübte Drehkraft kraftarm in eine Linearkraft umzuwandeln, welche einen oder mehrere der Positionieranschläge zum Montieren oder Demontieren eines Objektträgers nach außen verfährt oder zum Festklemmen des Objektträgers nach innen verfährt. Wenn im Rahmen dieser Anmeldung von einer "Führungsscheibe" gesprochen wird, kann es sich hierbei um eine runde Führungsscheibe oder um eine Führungsscheibe mit anderer Form handeln. Allgemeiner können statt Führungsscheiben Führungsstrukturen jeder anderen Art verwendet werden. Zum Beispiel kann ein starres Bauteil, das Positionierstifte eines Positionieranschlags und den Führungskörper aufweist, gegenüber einem Gehäuse des Grundbauteils linear verschiebbar montiert sein. Gleichzeitig kann der Führungskörper in die Führungsaussparung der Führungsscheibe eingreifen, die bei Betätigung der Betätigungseinrichtung mittels des Fixiermechanismus gedreht wird. Die Drehung der Führungsscheibe bewirkt aufgrund der Zwangsführung des Führungskörpers in der Führungsaussparung eine Kraft, die das starre Bauteil aus Führungskörper und Positionieranschlag in der Linearführung längs verfährt. Anschaulich kann bei Bewegen der Führungsscheibe infolge der Betätigung der Betätigungseinrichtung die Führungsscheibe den in der Führungsaussparung geführten Führungsstift entlang einer definierten Trajektorie mitnehmen. Dadurch kann der Führungsstift dazu gebracht werden, vermittels einer Linearführung einen zugeordneten Positionieranschlag in einem Eckbereich des Laborgeräts (zum Beispiel radial) nach außen zu verschieben. Wird die Betätigungskraft nicht länger ausgeübt, so kann zum Beispiel eine Vorspanneinrichtung (beispielsweise eine mechanische Feder) die Betätigungseinrichtung in eine Grundposition zurückführen, womit auch der Führungsstift entlang der Führungsaussparung zurückbewegt wird und der zugeordnete Positionieranschlag nach innen verfahren wird. Die Führungsscheibe hingegen kann drehbar an einem Gehäuse des Grundkörpers montiert sein.

Gemäß einem exemplarischen Ausführungsbeispiel kann die Führungsaussparung gekrümmt sein, insbesondere bogenförmig gekrümmt sein. Bevorzugt ist die Führungsaussparung bahnförmig gekrümmt und gibt daher eine geführte Bewegung des Führungskörpers zwischen einem Anfangsanschlag und einem Endanschlag der Führungsaussparung entlang einer dazwischen vordefinierten Bahn vor. Anders ausgedrückt kann die Führungsaussparung ein Bogen sein, der anfangsseitig und endseitig durch einen jeweiligen Anschlag begrenzt ist und entlang welchem der Führungsstift in vorbestimmter Weise gleiten kann.

Gemäß einem exemplarischen Ausführungsbeispiel kann die Führungsaussparung in einer Führungsscheibe gebildet sein. Eine Scheibe kann ein geometrischer Körper (zum Beispiel in Form eines Zylinders) sein, dessen Durchmesser größer, insbesondere um ein Vielfaches größer ist als seine Dicke. Eine Scheibe kann zum Beispiel eine Kreisscheibe oder eine polygonale Scheibe sein. Beispielsweise kann die Führungsaussparung als Führungsnut ausgebildet sein, d.h. als langgestreckte rinnenförmige Vertiefung, die sich bis zu einem durch die Führungsscheibe begrenzten Boden erstreckt. Alternativ kann die Führungsscheibe auch als Durchgangsloch ausgebildet sein.

Gemäß einem exemplarischen Ausführungsbeispiel kann die Führungsscheibe (die auch durch einen anders geformten Formkörper ersetzt werden kann) drehbar an dem Grundbauteil gelagert sein, insbesondere mittels eines Gleitlagers. Eine solche Führungsscheibe kann an ihrer zentralen Achse an dem Grundbauteil drehbar gelagert sein. Eine von der Betätigungseinrichtung auf die Führungsscheibe ausgeübte Drehkraft kann dann mittels des Führungsstifts in eine einen zugeordneten Positionieranschlag geradlinig verschiebende Linearkraft umgewandelt werden. In anderen Ausführungsbeispielen kann alternativ zu einer Führungsscheibe auch ein anders gestalteter Formkörper verwendet werden, in dem eine Führungsaussparung gebildet ist. Ein Gleitlager zur drehbaren Lagerung der Führungsscheibe an dem Grundbauteil stellt eine konstruktiv besonders einfache Lösung dar und führt zu einer höheren Robustheit als bei anderen Lagertypen. In anderen Ausführungsbeispielen können an den Führungsscheiben statt Gleitlagern aber auch andere Lagerarten bzw. Rotationslager eingesetzt werden, insbesondere Kugellager. Kugellager haben den Vorteil eines geringen Reibbeiwerts.

Gemäß einem exemplarischen Ausführungsbeispiel kann die Führungsscheibe in einer Ecke des Grundbauteils angeordnet sein. In einer Draufsicht des Laborgeräts kann die Führungsscheibe vollständig oder größtenteils außerhalb eines Zentralbereichs des Grundbauteils und daher des Objektträgers angeordnet sein, in welchen Zentralbereich mittels des Laborgeräts zu handhabendes Medium (insbesondere fluidische Proben) lokalisiert ist. Dadurch beeinflusst die Funktionalität der Führungsscheibe die Funktionalität des Objektträgers im Zusammenwirken mit dem Laborträger mit Vorteil im Wesentlichen nicht.

Gemäß einem exemplarischen Ausführungsbeispiel kann in mindestens einer anderen Ecke des Grundbauteils eine Umlenkrolle angeordnet sein, insbesondere drehbar gelagert mittels eines Gleitlagers. Eine solche Umlenkrolle kann zur Kraftübertragung zwischen der Betätigungseinrichtung und zumindest einem der Positionieranschläge beitragen bzw. kann in einen Kraftübertragungspfad zwischen der Betätigungseinrichtung und zumindest einem der Positionieranschläge integriert sein. Insbesondere kann eine solche Umlenkrolle eine Betätigungskraft an einer Ecke des Grundbauteils beispielsweise um 90° umleiten und dadurch einen Teil des rein umfänglich angeordneten Fixiermechanismus bilden. Es ist auch möglich, zwei Umlenkrollen an dem Laborgerät vorzusehen, vorzugsweise in zwei einander gegenüberliegenden Ecken. Ein Gleitlager zur drehbaren Lagerung der Umlenkrolle stellt eine konstruktiv besonders einfache Lösung dar und führt zu einer höheren Robustheit als bei anderen Lagertypen. In anderen Ausführungsbeispielen können an Umlenkrollen statt Gleitlagern aber auch andere Lagerarten bzw. Rotationslager eingesetzt werden, insbesondere Kugellager. Durch Einsatz von Kugellagern kann ein besonders geringer Reibbeiwert erreicht werden.

Gemäß einem exemplarischen Ausführungsbeispiel kann der Führungskörper starr an dem ersten Positionieranschlag angebracht sein. Wenn durch Drehung der Führungsscheibe, veranlasst durch eine Betätigung der Betätigungseinrichtung, der Führungskörper entlang der Führungsaussparung bewegt wird, bewegt sich folglich der Führungskörper gemeinsam mit dem ersten Positionieranschlag, und zwar vorzugsweise in linearer Weise relativ zu dem Grundbauteil. Aufgrund einer solchen Zwangsführung kann sichergestellt werden, dass durch Betätigung der Betätigungseinrichtung der erste Positionieranschlag bewegt werden kann.

Gemäß einem exemplarischen Ausführungsbeispiel kann der Fixiermechanismus zwei Führungsaussparungen (von denen beispielsweise jeder in einer zugeordneten Führungsscheibe gebildet sein kann) aufweisen, wobei in jeder der Führungsaussparungen ein jeweiliger Führungskörper (zum Beispiel ein jeweiliger Führungsstift) führbar ist. Eine solche Anordnung führt zu einer symmetrischeren Kraftübertragung und reduziert dadurch Lagerkräfte.

Gemäß einem exemplarischen Ausführungsbeispiel kann jede der Führungsaussparungen in einer jeweiligen Führungsscheibe angeordnet sein. Bevorzugt können zwei Führungsscheiben in einander gegenüberliegenden Ecken des Grundbauteils angeordnet sein. Dann kann jede der Führungsscheiben einen zugeordneten Positionieranschlag bewegen, was vorteilhaft zu einer gleichmäßigeren Krafteinleitung von der Betätigungseinrichtung auf den Fixiermechanismus und von dort auf den Objektträger führt. Es ist auch möglich, vier Führungsscheiben an dem Laborgerät vorzusehen, vorzugsweise in vier Ecken das Grundbauteils.

Gemäß einem exemplarischen Ausführungsbeispiel kann der Fixiermechanismus derart ausgebildet sein, dass bei Ausüben der Lösekraft durch den Objektträger zum Lösen des fixierten Objektträgers eine Verschiebekraft auf den Führungskörper winkelig (d.h. unter einem von Null verschiedenen Winkel, der insbesondere spitzwinklig oder rechtwinklig sein kann), insbesondere quer (vorzugsweise senkrecht) zu der Führungsaussparung wirkt. Wenn der Fixiermechanismus also so ausgebildet ist, in einer Kraftübertragungsrichtung von dem Objektträger auf den Fixiermechanismus den Führungskörper senkrecht zu der Führungsaussparung mit Kraft zu beaufschlagen, so ist ein unerwünschtes, den Objektträger von der Fixiereinrichtung lösendes Bewegen des Führungskörpers mechanisch verunmöglicht oder aufgrund hoher Reibungskräfte zumindest stark unterdrückt. Insbesondere kann ein Führungskörper in einer gekrümmten Führungsaussparung einer Führungsscheibe ohne Betätigung der Betätigungseinrichtung (und daher ohne Drehung der Führungsscheibe) bei Einwirkung einer Zentrifugalkraft (infolge Mischens) von dem Objektträger über einen Positionieranschlag auf den Führungskörper nicht unter Linearverschiebung des Positionieranschlags entlang der Führungsaussparung bewegt werden, sondern stößt winkelig oder quer zu der Führungsaussparung an die Führungsscheibe an.

Gemäß einem exemplarischen Ausführungsbeispiel kann der Fixiermechanismus derart ausgebildet sein, dass bei Betätigen der Betätigungseinrichtung zum Überführen des Fixiermechanismus in den den Objektträger freigebenden Betriebszustand eine Verschiebekraft auf den Führungskörper entlang bzw. längs der Führungsaussparung wirkt. Bei einer solchen Kraftübertragungsrichtung von der Betätigungseinrichtung auf den Fixiermechanismus ist es dem Führungskörper ermöglicht, reibungsarm entlang der Führungsaussparung zu gleiten, um einen zugeordneten Positionieranschlag in definierter Weise zu bewegen. Insbesondere kann der Führungskörper in einer gekrümmten Führungsaussparung der Führungsscheibe bei Betätigung der Betätigungseinrichtung (und daher bei Drehung der Führungsscheibe) unter Linearverschiebung eines Positionieranschlags entlang der Führungsaussparung bewegt werden, ohne winkelig oder quer zu der Führungsaussparung an die Führungsscheibe anzustoßen.

Gemäß einem exemplarischen Ausführungsbeispiel kann ein geschlossener Fixiermechanismus entlang dem Umfang des Grundbauteils unter Freilassung des von dem Umfang umgebenen Zentralbereichs des Grundbauteils angeordnet sein. Zum Beispiel kann der Fixiermechanismus vorteilhaft ringförmig geschlossen ausgebildet sein, sodass nur ein Umfang des Grundbauteils durch Komponenten des Fixiermechanismus belegt ist, wohingegen ein von dem Umfang eingeschlossener Zentralbereich vollständig von Komponenten des Grundbauteils frei sein kann. Der Zentralbereich kann zum Beispiel ganz oder teilweise frei bleiben (zum Beispiel als Strömungsraum für Kühlgas) oder kann mit einer Wechselwirkungseinrichtung bestückt sein, die zur Wechselwirkung mit Medium in dem montierten Objektträger konfiguriert sein kann. Zum Beispiel kann zumindest ein Teil des Zentralbereichs zur Kühlung des Objektträgers bzw. der Probenträger durch erzwungene Konvektion durch Luft- oder Gasströmung eingesetzt werden.

Gemäß einem exemplarischen Ausführungsbeispiel kann der Fixiermechanismus - vorzugsweise vollständig - entlang einer dem Objektträger abgewandten Unterseite des Grundbauteils angeordnet sein. Besonders bevorzugt ist es, wenn sich der Fixiermechanismus an der Unterseite des Grundbauteils vollumfänglich geschlossen randseitig erstreckt. In einer solchen Konfiguration ist nicht nur die gesamte Oberseite des Grundbauteils zum Aufnehmen eines selbst großen Objektträgers freigehalten, sondern kann auch ein großer Zentralbereich an der Unterseite des Grundbauteils zum Unterbringen einer Wechselwirkungseinrichtung verwendet werden.

Gemäß einem exemplarischen Ausführungsbeispiel kann der Fixiermechanismus entlang des gesamten Umfangs des Grundbauteils verlaufen. Insbesondere kann ein Kraftübertragungspfad des Fixiermechanismus in ringförmig geschlossener Weise entlang eines gesamten Außenumfangs des Grundbauteils verlaufen. Eine solche Kraftübertragung kann zum Beispiel durch einen Zahnriemen erfolgen, der sich vollumfänglich entlang aller Seitenkanten des Grundbauteils erstreckt und an jedem der Ecken des Grundbauteils mittels einer jeweiligen Komponente des Fixiermechanismus (insbesondere mittels einer oder mehrerer Führungsscheiben und/oder einem oder mehreren Umlenkelementen) eine kraftumlenkende Änderung seiner Erstreckungsrichtung erfährt.

Gemäß einem exemplarischen Ausführungsbeispiel kann das Laborgerät mindestens eine Wechselwirkungseinrichtung aufweisen, die vollständig oder teilweise in dem freigelassenen Zentralbereich des Grundbauteils (und/oder vollständig oder teilweise in einem freigelassenen Zentralbereich eines Trägerkörpers des Laborgeräts) angeordnet ist und/oder durch den freigelassenen Zentralbereich des Grundbauteils hindurch (insbesondere auf einen aufgenommenen Objektträger bzw. auf darin aufgenommenes Medium) wirkend ausgebildet ist. Im Rahmen der vorliegenden Anmeldung kann unter dem Begriff "Wechselwirkungseinrichtung" eine Einrichtung verstanden werden, die über das mittels des Fixiermechanismus und der Positionieranschläge bewerkstelligte Fixieren des Objektträgers und über eine entsprechende Betätigung durch die Betätigungseinrichtung (sowie über ein optionales Mischen) hinaus mindestens eine Zusatzfunktion zum funktionellen Beeinflussen von Medium in dem Objektträger bereitstellt. Bei einer solchen Wechselwirkungseinrichtung kann es sich zum Beispiel um eine Einrichtung handeln, die mindestens einen Betriebsparameter (zum Beispiel Temperatur) des Mediums in dem Objektträger einstellt oder beeinflusst, das Medium in dem Objektträger sensorisch charakterisiert (zum Beispiel durch optische Sensorik) und/oder das Medium in dem Objektträger gezielt manipuliert (zum Beispiel mittels elektromagnetischer Strahlung anregt oder mittels Magnetkräften trennt).

Gemäß einem exemplarischen Ausführungsbeispiel kann die Wechselwirkungseinrichtung aus einer Gruppe ausgewählt sein, die besteht aus einer Temperiereinrichtung zum Temperieren eines Mediums in dem Objektträger, einer optischen Apparatur zum optischen Wechselwirken mit einem Medium in dem Objektträger, und einem Magnetmechanismus zum magnetischen Wechselwirken mit einem Medium in dem Objektträger. Beispielsweise kann mittels einer Temperiereinrichtung des Grundbauteils unterhalb eines montierten Objektträgers eine Temperatur von Medium (beispielsweise einer flüssigen Probe) in dem Objektträger oder in einzelnen Kompartments des Objektträgers eingestellt werden. Dies kann ein Heizen des Mediums auf eine Temperatur oberhalb einer Umgebungstemperatur und/oder ein Kühlen des Mediums auf eine Temperatur unterhalb einer Umgebungstemperatur umfassen. Beispielsweise kann mittels eines Heizdrahts (zum Heizen) oder mittels eines Peltier-Elements (zum selektiven Heizen oder Kühlen) geheizt oder gekühlt werden. Indem ein Zentralbereich des Grundbauteils von dem Fixiermechanismus freigehalten wird, kann dieser zum Unterbringen einer Temperiereinrichtung oder zumindest eines Teils davon verwendet werden. Es ist aber auch möglich, eine optisch aktive Einrichtung in dem Zentralbereich des Grundbauteils unterzubringen, um optisch mit dem Medium in dem montierten Objektträger in Wechselwirkung zu treten. Beispielsweise kann eine solche optisch aktive Einrichtung eine elektromagnetische Strahlungsquelle aufweisen, die elektromagnetische Strahlung (insbesondere sichtbares Licht, ultraviolettes Licht, Infrarotlicht, Röntgenlicht, etc.) auf das Medium in dem Objektträger einstrahlt. Ein solches Beaufschlagen des Mediums in dem Objektträger mit elektromagnetischer Strahlung kann zum Beispiel zum Anregen des Mediums, zum Auslösen von chemischen Reaktionen in dem Medium und/oder zum Heizen des Mediums durchgeführt werden. Es ist auch möglich, dass eine solche optisch aktive Einrichtung einen elektromagnetischen Strahlungsdetektor aufweist, der von Medium in dem Objektträger propagierende elektromagnetische Strahlung detektiert. Ein in dem freien Zentralbereich des Grundbauteils und/oder des Trägerkörpers unterhalb des Objektträgers angeordneter Magnetmechanismus zum magnetischen Einwirken auf Medium in dem Objektträger kann das Medium beispielsweise magnetisch trennen, anregen oder in sonstiger Weise beeinflussen.

Gemäß einem exemplarischen Ausführungsbeispiel kann der Fixiermechanismus einen ringförmig geschlossenen Kraftübertragungsmechanismus, insbesondere einen Zahnriemen, entlang des Umfangs des Grundbauteils aufweisen. Ein solcher Zahnriemen kann mit Zähnen an einer Außenseite einer Führungsschreibe und/oder einer Umlenkrolle des Fixiermechanismus bzw. mit der Betätigungseinrichtung zusammenwirken. Beispielsweise kann mittels Zusammenwirkens von Zähnen der Betätigungseinrichtung mit dem Zahnriemen oder mittels Festklemmens der Betätigungseinrichtung an dem Zahnriemen eine Betätigungskraft eines Benutzers oder eines Roboters oder Aktuators auf den Zahnriemen übertragen werden, sodass der Zahnriemen entlang der Umfangsrichtung an dem Grundbauteil umlaufend verschoben wird, zum Beispiel hin und her verschoben wird. Durch das besagte umlaufende Anbringen des Zahnriemens kann der Zahnriemen die von der Betätigungseinrichtung ausgeübte Kraft auf mindestens eine Führungsscheibe übertragen, die dadurch verdreht wird. Das Verdrehen der Führungsscheibe wiederum bewegt einen Führungskörper in einer Führungsaussparung der Führungsscheibe. Der Führungskörper bewegt sodann einen zugeordneten Positionieranschlag nach außen.

Auch mindestens eine Umlenkrolle in mindestens einem Eck des Grundbauteils kann in die in Umfangsrichtung geschlossene Kraftübertragung unter Verwendung eines vollumfänglich umlaufenden Zahnriemens eingebunden sein. Mit Vorteil können also die mindestens eine Führungsscheibe und die mindestens eine Umlenkrolle mittels des ringförmig geschlossenen Kraftübertragungsmechanismus kraftgekoppelt sein.

Gemäß einem exemplarischen Ausführungsbeispiel kann der Fixiermechanismus mindestens einen derart in mindestens einer Führungsaussparung führbaren Führungskörper aufweisen, dass eine Betätigungskraft zum Betätigen der Betätigungseinrichtung zum Überführen des Fixiermechanismus in den den Objektträger freigebenden Betriebszustand höchstens halb so groß ist wie eine von dem Objektträger auszuübende Lösekraft zum Lösen des fixierten Objektträgers. Dadurch kann eine ausgeprägte Selbsthemmung mit einer kraftsparend betätigbaren Betätigungseinrichtung kombiniert werden.

Gemäß einem exemplarischen Ausführungsbeispiel kann der erste Positionieranschlag beim Überführen zwischen dem den Objektträger fixierenden Betriebszustand und dem den Objektträger freigebenden Betriebszustand mittels einer Linearführung linear verschiebbar sein. Eine solche Linearführung kann durch einen Führungskörper in einer Führungsaussparung einer Führungsscheibe mit einer Verschiebekraft beaufschlagt werden, sodass der zugehörige Positionieranschlag entlang einer linearen Trajektorie verfahren werden kann.

Gemäß einem exemplarischen Ausführungsbeispiel kann der erste Positionieranschlag einen ersten Positionierstift und/oder der zweite Positionieranschlag einen zweiten Positionierstift aufweisen, zwischen denen der Objektträger in Eingriff nehmbar sein kann. Zwei Positionierstifte des jeweiligen Positionieranschlags können miteinander (beispielsweise über ein L-Profil) starr gekoppelt sein und so angeordnet sein, dass sie an benachbarten Seitenkanten eines beispielsweise im Wesentlichen rechteckförmigen Objektträgers angrenzend an ein Eck von Objektträger und Laborgerät angreifen. Auf diese Weise kann der Objektträger an einander gegenüberliegenden Eckbereichen von entsprechenden Positionieranschlägen mit vorzugsweise jeweils zwei Positionierstiften zuverlässig in Eingriff genommen werden und gegen Lösekräfte in allen Richtungen geschützt werden.

Gemäß einem exemplarischen Ausführungsbeispiel kann zumindest einer des ersten Positionierstifts und des zweiten Positionierstifts ein vertikales Rückhalteprofil aufweisen, das ausgebildet ist, ein Lösen des Objektträgers von dem Grundbauteil in vertikaler Richtung zu hemmen (zum Beispiel durch eine konische Struktur), und bevorzugt zu verunmöglichen (zum Beispiel durch eine horizontale Anschlagfläche an einer Unterseite eines Kopfs des jeweiligen Positionierstifts). Zum Beispiel können die Positionierstifte zu diesem Zweck einen in vertikaler Richtung verdickten oder erweiterten Kopfabschnitt aufweisen, der selbst bei Auftreten einer vertikalen Lösekraft den Objektträger an einem vertikalen Verlassen des Laborgeräts hindert. Besonders bevorzugt ist es, das Rückhalteprofil mit einer horizontalen Anschlagfläche an einem Kopfabschnitt eines Positionierstifts zu versehen, das den Objektträger bei einem vertikalen Abheben zurückhält.

Gemäß einem exemplarischen Ausführungsbeispiel kann das Laborgerät den auf dem Grundbauteil aufgenommenen Objektträger aufweisen, insbesondere eine Probenträgerplatte. Insbesondere kann der Objektträger eine Probenträgerplatte sein, die vorzugsweise eine Vielzahl (insbesondere mindestens 10, weiter insbesondere mindestens 100) von zum Beispiel matrixförmig angeordneten Probenaufnahmebehältern oder Probenaufnahmevertiefungen aufweist. Weiter insbesondere kann eine solche Probenträgerplatte eine Mikrotiterplatte sein. Mit Vorteil können eine Objektträger-Aufnahmefläche an einer Oberseite des Grundbauteils und eine Unterseite des Objektträgers strukturell aufeinander angepasst sein.

Gemäß einem exemplarischen Ausführungsbeispiel kann das Laborgerät einen Trägerkörper mit einem Mischantriebsmechanismus aufweisen, insbesondere ausgebildet zum Erzeugen einer orbitalen Mischbewegung, wobei das Grundbauteil in einem bewegbar, insbesondere entlang einer Orbitalbahn bewegbar, auf dem Trägerkörper montieren Zustand mittels des Mischantriebs zum Mischen eines in dem Objektträger enthaltenen Mediums ausgebildet ist. Unter einer Orbitalbewegung kann hierbei die Bewegung des Objektträgers und des darin enthaltenen Mediums um Zentren verstanden werden, die durch (mindestens) zwei Exzenterwellen gebildet werden können. Anders ausgedrückt kann eine den Objektträger aufnehmende Platte des Grundbauteils durch zwei Exzenter (d.h. zwei exzentrisch ausgebildete Exzenterwellen) angetrieben werden, die wiederum synchron durch einen Elektromotor oder eine andere Antriebseinrichtung angetrieben werden. Eine resultierende Orbitalbewegung kann eine besonders wirksame Durchmischung von Medium (insbesondere einer Flüssigkeit, eines Feststoffs und/oder eines Gases) in einem Aufnahmebehälter des Objektträgers bewirken.

Gemäß einem exemplarischen Ausführungsbeispiel kann der Mischantriebsmechanismus entlang zumindest eines Teils eines Umfangs des Trägerkörpers unter Freilassung eines von dem Umfang umgebenen Zentralbereichs des Trägerkörpers angeordnet sein. Genau gesagt können Exzenter zum Bewirken der orbitalen Mischbewegung aus einem Gehäuse des Trägerkörpers vertikal hervorstehen, um kraftübertragend in zugehörige Aussparungen an einer Unterseite des Grundbauteils einzugreifen, sodass ein exzentrisches Drehen der Exzenter zu einem orbitalen Bewegen des Grundvorteils führt. Mit Vorteil können die Exzenter unter Freilassung eines Zentralbereichs an einer Oberseite des Trägerkörpers an einander gegenüberliegenden Seitenkanten des Trägerkörpers positioniert sein. Eine Antriebseinrichtung (insbesondere ein Elektromotor) zum Antreiben der Exzenter kann unterhalb der Exzenter in einem Bodenbereich des Trägerkörpers versenkt sein, um unterhalb eines freigelassenen Hohlraums an einer Oberseite des Grundbauteils zwischen den Exzentern den Zentralbereich zum Unterbringen einer Wechselwirkungseinrichtung freizulassen.

Gemäß einem exemplarischen Ausführungsbeispiel können der Mischantriebsmechanismus und der Fixiermechanismus voneinander entkoppelt sein. Vorteilhaft kann der Mischantriebsmechanismus ausschließlich in dem Trägerkörper ausgebildet sein und kann der Fixiermechanismus ausschließlich in dem Grundbauteil ausgebildet sein. Dadurch können der Mischantriebsmechanismus und der Fixiermechanismus räumlich und funktionell voneinander getrennt sein. Anders ausgedrückt kann der Fixiermechanismus durch Betätigen der Betätigungseinrichtung zum Freigeben des Objektträgers aktiviert bzw. zum Fixieren des Objektträgers deaktiviert werden, ohne dass dies eine Auswirkung auf den Mischantriebsmechanismus hat. Umgekehrt kann der Mischantriebsmechanismus mittels seiner Antriebseinrichtung zu einem Antreiben der Exzenter aktiviert werden, ohne dass dies einen Einfluss auf den Fixiermechanismus hat. Mit anderen Worten können die Betätigungseinrichtung und der Fixiermechanismus von dem Mischantriebsmechanismus mechanisch entkoppelt sein. Dadurch kann eine unerwünschte Wechselwirkung zwischen der Fixierfunktion und der Mischfunktion vermieden werden und können beide Funktionen unabhängig voneinander eingesetzt werden.

Gemäß einem exemplarischen Ausführungsbeispiel kann der Fixiermechanismus zum Klemmen des Objektträgers zwischen dem ersten Positionieranschlag und dem zweiten Positionieranschlag ausgebildet sein. Insbesondere kann der bewegbare erste Positionieranschlag zu einer Bewegung zwischen einem Klemmzustand und einem Freigabezustand veranlasst werden, indem die Betätigungseinrichtung und somit der Fixiermechanismus betätigt werden. Wenn auch der zweite Positionieranschlag bewegbar ausgebildet ist, kann auch dieser lediglich dadurch zu einer Bewegung zwischen einem Klemmzustand und einem Freigabezustand veranlasst werden, indem die Betätigungseinrichtung und somit der Fixiermechanismus betätigt wird. Die Bewegung des ersten Positionieranschlags und des zweiten Positionieranschlags können mittels des Fixiermechanismus synchronisiert sein, insbesondere mittels des Kraftübertragungsmechanismus.

Gemäß einem exemplarischen Ausführungsbeispiel kann das Laborgerät ein Vorspannelement aufweisen, das zum Vorspannen des Fixiermechanismus in den den Objektträger fixierenden Betriebszustand ausgebildet ist. Ein solches Vorspannelement kann über die Betätigungseinrichtung an den Fixiermechanismus angreifen und auf Letzteren eine Vorspannkraft ausüben, die einer Betätigungskraft zum Überführen des Fixiermechanismus von dem den Objektträger fixierenden Betriebszustand in den den Objektträger freigebenden Betriebszustand entgegengesetzt (d.h. antiparallel dazu) gerichtet ist. Wenn die Betätigungskraft nicht mehr ausgeübt wird, geht das zuvor gespannte Vorspannelement in seinen Gleichgewichtszustand zurück, wodurch auf den Objektträger die Fixierkraft ausgeübt wird. Mit anderen Worten kann mittels des Vorspannelements das Laborgerät in einem betätigungskraftfreien Zustand in den den Objektträger in Eingriff nehmenden Zustand vorgespannt werden. Dadurch kann die Betriebssicherheit des Laborgeräts weiter erhöht werden, da zum Freigeben des Objektträgers aktiv eine Betätigungskraft auszuüben ist. Bevorzugt kann das Vorspannelement durch mindestens eine mechanische Feder ausgebildet werden, insbesondere durch mindestens eine Schraubenfeder. Das Vorspannelement kann auch als Federpaar oder Federpaket ausgebildet sein. Es ist auch möglich, eine zum Bilden des Vorspannelements eingesetzte mechanische Feder als Blattfeder oder Spiralfeder auszubilden. Ferner kann gemäß einem anderen Ausführungsbeispiel das Vorspannelement mittels Zusammenwirkens von Magneten ausgebildet werden, beispielsweise durch ein Paar von einander abstoßenden Magneten, die beim Betätigen der Betätigungseinrichtung aufeinander zu bewegt werden oder durch ein Paar von einander anziehenden Magneten, die beim Betätigen der Betätigungseinrichtung voneinander weg bewegt werden.

Gemäß einem exemplarischen Ausführungsbeispiel kann der zweite Positionieranschlag relativ zu dem Grundbauteil bewegbar sein oder starr an dem Grundbauteil angebracht sein. Wenn der zweite Positionieranschlag ebenfalls bewegbar ausgebildet ist und vorzugsweise in einem dem ersten Positionieranschlag gegenüberliegenden Eck des Grundbauteils angeordnet ist, kann eine besonders symmetrische Kraftübertragung von dem Grundbauteil auf den Objektträger ausgeübt werden und kann der Objektträger zwischen den beiden bewegbaren Positionieranschlägen symmetrisch in Eingriff genommen werden. Wenn der zweite Positionieranschlag hingegen ortsfest an dem Grundbauteil angebracht ist, kann das Laborgerät in besonders einfacher Weise hergestellt werden.

Gemäß einem exemplarischen Ausführungsbeispiel kann das Laborgerät einen dritten Positionieranschlag zum Anschlagen an einen dritten Randbereich des Objektträgers und vorzugsweise zusätzlich einen vierten Positionieranschlag zum Anschlagen an einen vierten Randbereich des Objektträgers aufweisen. Jeder des dritten Positionieranschlags und des vierten Positionieranschlags kann wahlweise relativ zu dem Grundbauteil bewegbar sein oder starr an dem Grundbauteil angebracht sein. Vier Positionieranschläge in vier Ecken des Objektträgers sichern den fixierten Objektträger besonders zuverlässig.

Gemäß einem exemplarischen Ausführungsbeispiel kann das Laborgerät eine Funktionsbaugruppe mit einem Plattenträger aufweisen, an dem die Betätigungseinrichtung und der Fixiermechanismus vormontiert sind. Somit kann die besagte Funktionsbaugruppe als vormontiertes Modul bereitgestellt werden, bei dem Betätigungseinrichtung und Fixiermechanismus an einem plattenförmigen Träger, beispielsweise einem strukturierten Blech, vormontiert sind. Dies fördert eine Herstellbarkeit des Laborgeräts mit geringem Aufwand. Zudem erlaubt die Ausbildung der Funktionsbaugruppe mit einem Plattenträger ein flaches Design und somit eine kompakte Realisierung des Laborgeräts.

Gemäß einem exemplarischen Ausführungsbeispiel kann das Grundbauteil (das insbesondere einstückig, weiter insbesondere einstoffig, ausgebildet sein kann) zum Aufnehmen der vormontierten Funktionsbaugruppe sowie von Positionierbaugruppen ausgebildet sein, die den ersten Positionieranschlag bzw. den zweiten Positionieranschlag beinhalten. Insbesondere kann das Grundbauteil aus einem einzigen Körper herausgearbeitet oder als einziger Körper gegossen werden. Auch dies trägt zur einfachen Herstellbarkeit des Laborgeräts bei. Das Grundbauteil kann daher ein zweites Modul bzw. eine zweite Baugruppe des zu montierenden Laborgeräts sein. Darüber hinaus können die besagten Positionierbaugruppen vormontiert werden und bei einer Endmontage an der Funktionsbaugruppe angebracht werden. Ein solches vormontiertes bzw. modulares System erlaubt eine einfache Fertigung des Laborgeräts.

Gemäß einem exemplarischen Ausführungsbeispiel kann zumindest einer des ersten Positionieranschlags und des zweiten Positionieranschlags eine Positionierhülse mit einem Durchgangsloch aufweisen, in das ein Befestigungselement zum Befestigen der Positionierhülse einführbar oder eingeführt ist. Ein solcher hülsenförmiger Positionieranschlag kann insbesondere unter Verwendung einer Schraube (oder alternativ eines Bolzens, etc.) als Befestigungselement in sehr einfacher Weise montiert, demontiert oder ausgewechselt werden. Außerdem erlaubt diese Konfiguration eine einfache Höhenverstellung eines jeweiligen Positionieranschlags. Zum Befestigen eines Positionieranschlags kann das Befestigungselement, zum Beispiel eine Schraube, in das Durchgangsloch der Positionierhülse eingedreht werden und kann an einer Unterseite der Positionierhülse befestigend greifen.

Gemäß einem exemplarischen Ausführungsbeispiel kann zumindest einer des ersten Positionieranschlags und des zweiten Positionieranschlags eine außenseitige Profilierung, insbesondere ein Außengewinde, zum Ineingriffnehmen des Objektträgers aufweisen. Die besagte Profilierung kann vorzugsweise ein scharfkantiges Außengewinde oder alternativ eine andere Rändelung sein, oder auch eine Anordnung von Noppen. Mittels einer solchen vorzugsweise als Außengewinde ausgebildeten Profilierung ist es anschaulich möglich, einen in Eingriff genommenen Objektträger, beispielsweise eine Mikrotiterplatte, besonders zuverlässig zu halten und vor einer unerwünschten Bewegung relativ zu den Positionieranschlägen zu schützen. Anschaulich können sich zum Beispiel Windungen des Außengewindes in Kunststoffmaterial des Objektträgers einschneiden oder krallenartig verankern und dadurch die Betriebssicherheit des Laborgeräts verbessern.

Gemäß einem exemplarischen Ausführungsbeispiel kann das Laborgerät eine Spannvorrichtung zum toleranzausgleichenden Spannen eines ringförmig geschlossenen Kraftübertragungsmechanismus des Fixiermechanismus aufweisen. Eine solche Spannvorrichtung kann einen Längenausgleich des Kraftübertragungsmechanismus ermöglichen. Mittels einer solchen Spannvorrichtung kann die Länge eines ringförmig geschlossenen Kraftübertragungsmechanismus, insbesondere eines Zahnriemens, exakt auf die genauen Dimensionen der Komponenten des Laborgeräts angepasst werden, insbesondere auf die genauen Positionen und Dimensionen von Kurvenscheiben und Umlenkrollen. Vorzugsweise kann sich eine solche Spannvorrichtung im Bereich der Betätigungseinrichtung befinden. Der Kraftübertragungsmechanismus kann mittels einer solchen Spannvorrichtung abschnittsweise gespannt werden. Dadurch ist in einfacher und wirksamer Weise ein Ausgleich von Toleranzen der Komponenten des Laborgeräts ermöglicht. Bei Vorsehen einer solchen Spannvorrichtung können die Komponenten des Laborgeräts also mit größeren Toleranzen und daher geringerem Aufwand gefertigt werden, ohne dass die Betriebsgenauigkeit des Laborgeräts dadurch verringert wird.

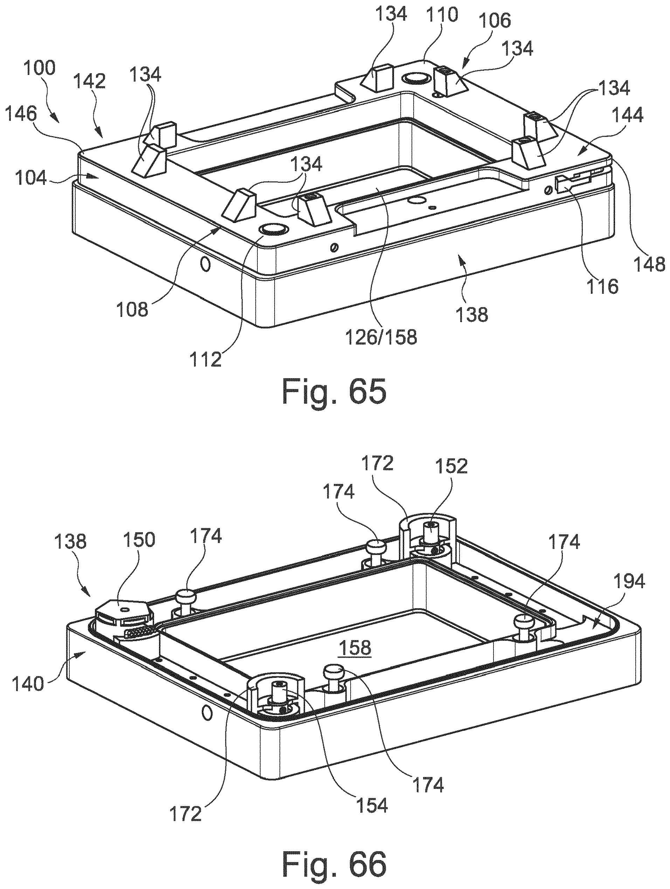

Gemäß einem exemplarischen Ausführungsbeispiel kann das Grundbauteil ein ringförmiger Körper mit einem zentralen Durchgangsloch (welches dem freigelassenen Zentralbereich des Grundbauteils entsprechen kann) sein. Alternativ oder ergänzend kann der Trägerkörper, auf dem das Grundbauteil bewegbar montiert sein kann, ein ringförmiger Körper mit einem zentralen Durchgangsloch (welches einem freigelassenen Zentralbereich des Trägerkörpers entsprechen kann) sein. Ein entsprechendes Ausführungsbeispiel findet sich beispielsweise in Figur 65 bis Figur 72. Bei einer solchen Konfiguration kann das Freilassen eines jeweiligen Zentralbereichs durch Bildung eines zentralen Durchgangslochs im Grundbauteil und durch Bildung eines zentralen Durchgangslaufs im Trägerkörper erfolgen. Besonders vorteilhaft ist eine Konfiguration, bei der sowohl das Grundbauteil als auch der Trägerkörper jeweils ringförmig ausgebildet ist, so dass Grundbauteil und Trägerkörper in einem aneinander montierten Zustand ebenfalls ein gemeinsames Durchgangsloch haben, das durch deren freigelassene Zentralbereiche gebildet ist. Vorteilhaft kann in einem solchen Laborgerät, bei dem auf dem Grundbauteil ein Objektträger montiert ist, darin aufgenommenes Medium von einer Unterseite des Laborgeräts aus durch die Durchgangslöcher von Trägerkörper und Grundbauteil hindurch zugänglich sein, um eine Wechselwirkungseinrichtung (zum Beispiel eine Temperiereinrichtung, eine optische Sensoreinrichtung und/oder eine magnetische Manipulation beispielsweise zum Zweck der Magnetseparation) mit dem Medium in Wechselwirkung zu bringen.

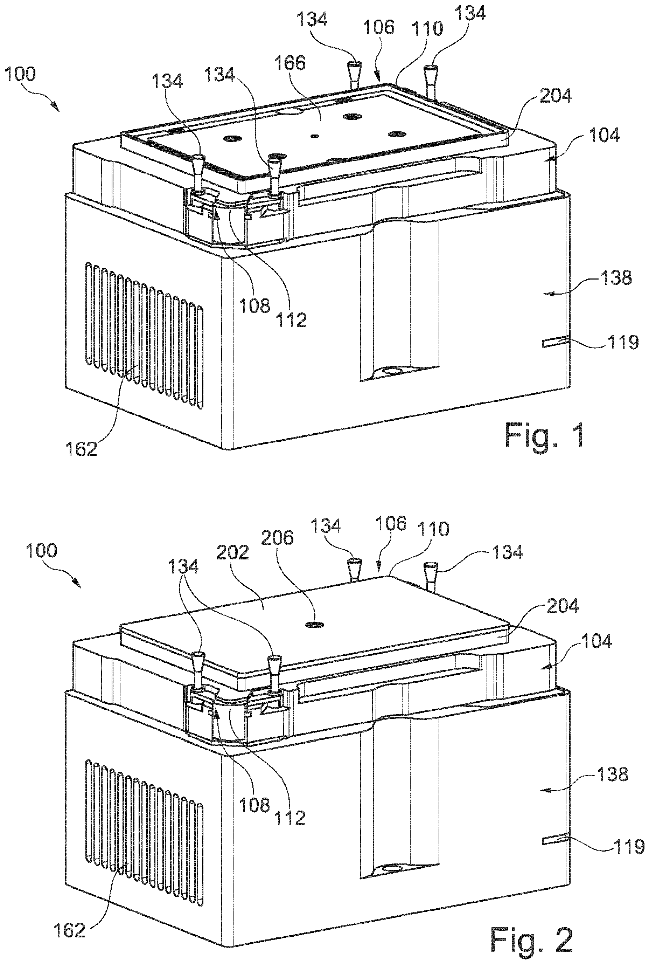

Gemäß einem exemplarischen Ausführungsbeispiel kann auf dem Grundbauteil ein abnehmbar montierter und thermisch leitfähiger Temperieradapter (insbesondere mit einer Wärmeleitfähigkeit von mindestens 50 W/mK, beispielsweise bestehend aus Metall wie Aluminium) zum Temperieren des Objektträgers oder von Gefäßen angeordnet sein (siehe zum Beispiel Figur 2, Figur 3 und Figur 9). Dies ermöglicht ein flexibles Montieren des Temperieradapters, wenn eine spezifische Temperierung des Objektträgers oder einzelner Probengefäße gewünscht wird.

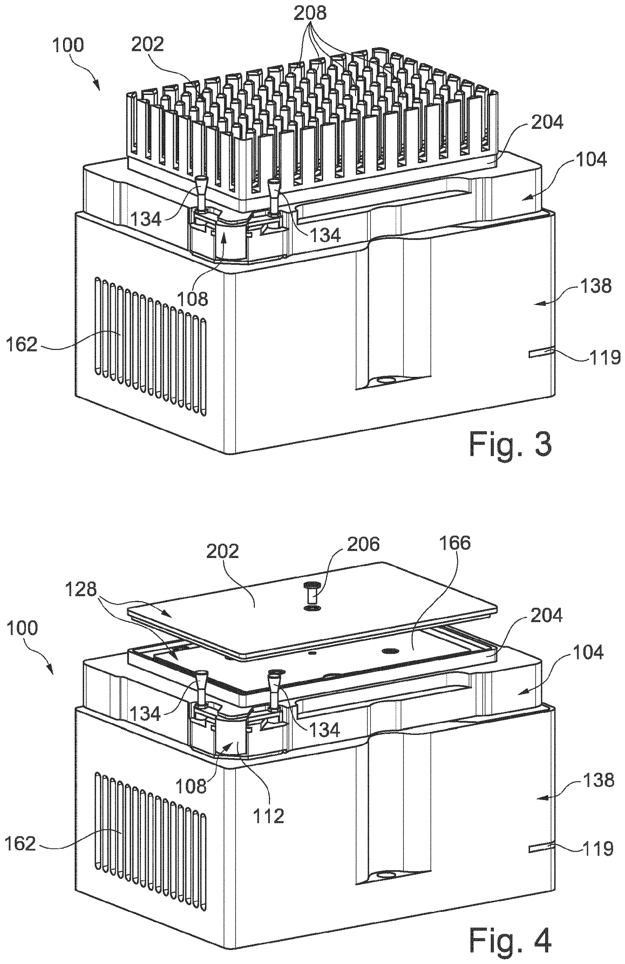

Insbesondere kann der Temperieradapter Aufnahmeöffnungen zum formschlüssigen Aufnehmen des Objektträgers oder der Gefäße aufweisen (siehe zum Beispiel Figur 3). Dies bietet eine thermisch hochleitfähige und für einen Benutzer intuitiv einsetzbare Möglichkeit, Objektträger oder Gefäße gezielt und einfach sowie flexibel zu temperieren.

Im Folgenden werden exemplarische Ausführungsbeispiele der vorliegenden Erfindung mit Verweis auf die folgenden Figuren detailliert beschrieben.
Figur 1 zeigt eine dreidimensionale Ansicht eines Laborgeräts gemäß einem exemplarischen Ausführungsbeispiel der Erfindung.
Figur 2 zeigt eine dreidimensionale Ansicht eines Laborgeräts mit einem Flachbodenadapter gemäß einem anderen exemplarischen Ausführungsbeispiel der Erfindung.
Figur 3 zeigt das Laborgerät gemäß Figur 1 mit einem darauf montierten Temperieradapter in Form eines thermisch leitfähigen Gestells mit Aufnahmeöffnungen zum Aufnehmen von Laborgefäßen oder eines Objektträgers.
Figur 4 zeigt eine Explosionsdarstellung des Laborgeräts gemäß Figur 2.
Figur 5 zeigt eine andere Explosionsdarstellung des Laborgeräts gemäß Figur 2.
Figur 6 zeigt ein Laborgerät ohne Temperierung gemäß einem anderen exemplarischen Ausführungsbeispiel der Erfindung.
Figur 7 zeigt ein Laborgerät mit Positionierstiften in allen vier Eckbereichen gemäß einem anderen exemplarischen Ausführungsbeispiel der Erfindung.
Figur 8 zeigt ein Laborgerät mit Positionierstiften in allen vier Eckbereichen und mit einem Flachbodenadapter gemäß einem anderen exemplarischen Ausführungsbeispiel der Erfindung.
Figur 9 zeigt das Laborgerät gemäß Figur 7 mit einem darauf montierten, gegenüber Figur 8 alternativen Temperieradapter.
Figur 10 zeigt eine andere dreidimensionale Ansicht des Laborgeräts gemäß Figur 7.
Figur 11 zeigt ein Laborgerät gemäß einem anderen exemplarischen Ausführungsbeispiel der Erfindung.
Figur 12 zeigt eine andere Darstellung des Laborgeräts gemäß Figur 11.
Figur 13 zeigt eine Unteransicht eines Grundbauteils eines Laborgeräts mit Positionierstiften in zwei Eckbereichen gemäß einem exemplarischen Ausführungsbeispiel der Erfindung.
Figur 14 zeigt eine Querschnittsansicht des Grundbauteils gemäß Figur 13.
Figur 15 zeigt eine Unteransicht eines Grundbauteils eines Laborgeräts mit Positionierstiften in vier Eckbereichen gemäß einem anderen exemplarischen Ausführungsbeispiel der Erfindung.
Figur 16 zeigt eine Querschnittsansicht des Grundbauteils gemäß Figur 15.
Figur 17 zeigt eine Unteransicht eines Laborgeräts gemäß einem anderen exemplarischen Ausführungsbeispiel der Erfindung.
Figur 18 zeigt eine Dockingstation für ein Laborgerät gemäß Figur 17.
Figur 19 zeigt eine Oberansicht und Figur 20 zeigt eine Unteransicht einer Dockingstation gemäß einem anderen exemplarischen Ausführungsbeispiel der Erfindung.
Figur 21 zeigt eine hier als Grundplatte ausgebildete Basisstation zum Montieren mehrerer Laborgeräte gemäß einem exemplarischen Ausführungsbeispiel der Erfindung unter Verwendung mehrerer Dockingstationen gemäß Figur 19, die in die Grundplatte eingesetzt sind.
Figur 22A zeigt eine Draufsicht einer Führungsscheibe eines Fixiermechanismus eines Laborgeräts gemäß einem exemplarischen Ausführungsbeispiel der Erfindung.
Figur 22B zeigt eine Führungsscheibe gemäß Figur 22A in einer Einbausituation und in einem Betriebszustand, in dem durch Betätigen einer Betätigungseinrichtung die Führungsscheibe gedreht worden ist.
Figur 22C zeigt die Führungsscheibe in der Einbausituation gemäß Figur 22B und in einem anderen Betriebszustand, in dem keine Betätigung der Betätigungseinrichtung und daher keine Drehung der Führungsscheibe erfolgt ist.
Figur 23 zeigt eine dreidimensionale Ansicht der Führungsscheibe gemäß Figur 22A.
Figur 24 zeigt eine dreidimensionale Ansicht eines Positionieranschlags gemäß einem exemplarischen Ausführungsbeispiel der Erfindung.
Figur 25 zeigt eine andere dreidimensionale Ansicht des Positionieranschlags gemäß Figur 24.
Figur 26 zeigt eine dreidimensionale Ansicht des Positionieranschlags gemäß Figur 24 samt Führungsscheibe gemäß Figur 23.
Figur 27 zeigt die Anordnung gemäß Figur 26 in einem Gehäuse eines Grundbauteils in Schnittansicht.
Figur 28 zeigt eine andere Ansicht der Anordnung gemäß Figur 27 in Schnittansicht.
Figur 29 zeigt eine dreidimensionale Ansicht eines Teils eines Laborgeräts gemäß einem exemplarischen Ausführungsbeispiel der Erfindung.
Figur 30 zeigt eine dreidimensionale Ansicht eines Teils eines Laborgeräts gemäß einem anderen exemplarischen Ausführungsbeispiel der Erfindung.
Figur 31 zeigt ein Innenaufbau eines Trägerkörpers eines Laborgeräts gemäß einem exemplarischen Ausführungsbeispiel der Erfindung.
Figur 32 zeigt eine Draufsicht des Innenaufbaus des Trägerkörpers gemäß Figur 31.
Figur 33 zeigt ein freigelegtes Inneres des Trägerkörpers gemäß Figur 31 und Figur 32.
Figur 34 zeigt eine Unteransicht des freigelegten Inneren des Trägerkörpers gemäß Figur 33.
Figur 35 zeigt eine Pendelstütze eines Laborgeräts gemäß einem exemplarischen Ausführungsbeispiel der Erfindung.
Figur 36 zeigt eine verkippte Pendelstütze zwischen einem Trägerkörper und einem Grundbauteil eines Laborgeräts gemäß einem exemplarischen Ausführungsbeispiel der Erfindung in Schnittansicht.
Figur 37 zeigt einen Aktuator zum automatisierten Betätigen einer Betätigungseinrichtung eines Laborgeräts gemäß einem exemplarischen Ausführungsbeispiel der Erfindung.
Figur 38 zeigt einen Innenaufbau eines Trägerkörpers eines Laborgeräts gemäß einem exemplarischen Ausführungsbeispiel der Erfindung.
Figur 39 zeigt eine andere Darstellung der Anordnung gemäß Figur 38.
Figur 40 zeigt eine Draufsicht eines Laborgeräts gemäß einem exemplarischen Ausführungsbeispiel der Erfindung mit daran montiertem Objektträger, der von Positionieranschlägen des Laborgeräts in Eingriff genommen ist.
Figur 41 zeigt die Anordnung gemäß Figur 40, wobei der Objektträger von den Positionieranschlägen freigegeben ist.
Figur 42 zeigt eine Draufsicht eines Trägerkörpers eines Laborgeräts gemäß einem exemplarischen Ausführungsbeispiel der Erfindung in einer Aktorstellung bei verriegeltem Objektträger.
Figur 43 zeigt die Anordnung gemäß Figur 42 in einer Aktorstellung bei entriegeltem Objektträger.
Figur 44 zeigt eine dreidimensionale Ansicht eines Laborgeräts gemäß einem exemplarischen Ausführungsbeispiel der Erfindung, wobei ein kühlender Luftstrom schematisch dargestellt ist.
Figur 45 zeigt eine Querschnittsansicht eines Laborgeräts gemäß einem exemplarischen Ausführungsbeispiel der Erfindung, wobei ein kühlender Luftstrom schematisch dargestellt ist.
Figur 46 zeigt eine Draufsicht eines Laborgeräts gemäß einem exemplarischen Ausführungsbeispiel der Erfindung.
Figur 47 zeigt eine Querschnittsansicht des Laborgeräts gemäß Figur 46 entlang einer Schnittlinie A-A.
Figur 48 zeigt eine Draufsicht eines Laborgeräts gemäß einem exemplarischen Ausführungsbeispiel der Erfindung.
Figur 49 zeigt eine Querschnittsansicht des Laborgeräts gemäß Figur 48 entlang einer Schnittlinie B-B.
Figur 50 zeigt eine dreidimensionale Ansicht eines Grundbauteils eines Laborgeräts gemäß einem exemplarischen Ausführungsbeispiel der Erfindung.
Figur 51 zeigt eine andere dreidimensionale Ansicht des Grundbauteils gemäß Figur 50.
Figur 52 zeigt eine dreidimensionale Ansicht eines Grundbauteils eines Laborgeräts gemäß einem anderen exemplarischen Ausführungsbeispiel der Erfindung.
Figur 53 zeigt eine Unteransicht des Grundbauteils gemäß Figur 52.
Figur 54 zeigt eine Draufsicht des Grundbauteils gemäß Figur 52 mit Positionieranschlägen in einem verriegelnden Zustand.
Figur 55 zeigt eine Draufsicht des Grundbauteils gemäß Figur 52 mit Positionieranschlägen in einem entriegelten Zustand.
Figur 56 zeigt eine transparente Draufsicht des Grundbauteils gemäß Figur 52.
Figur 57 zeigt eine dreidimensionale Ansicht eines Laborgeräts gemäß einem exemplarischen Ausführungsbeispiel der Erfindung.
Figur 58 zeigt eine Unteransicht eines Grundbauteils des Laborgeräts gemäß Figur 57.
Figur 59 zeigt eine dreidimensionale Ansicht eines Grundbauteils eines Laborgeräts gemäß einem exemplarischen Ausführungsbeispiel der Erfindung mit Positionieranschlägen in allen vier Ecken.
Figur 60 zeigt eine Draufsicht des Grundbauteils gemäß Figur 59.
Figur 61 zeigt eine dreidimensionale Ansicht einer Unterseite des Grundbauteils gemäß Figur 59.
Figur 62 zeigt eine Unteransicht, d.h. eine Unterseite, des Grundbauteils gemäß Figur 59.
Figur 63 zeigt eine Unteransicht des Grundbauteils gemäß Figur 59 und stellt in Figur 62 verdeckte Elemente dar.
Figur 64 zeigt eine dreidimensionale Ansicht eines Laborgeräts mit darauf montiertem Objektträger gemäß einem exemplarischen Ausführungsbeispiel der Erfindung.
Figur 65 zeigt eine dreidimensionale Ansicht eines Laborgeräts gemäß einem anderen exemplarischen Ausführungsbeispiel der Erfindung.
Figur 66 zeigt eine dreidimensionale Ansicht eines freigelegten Trägerkörpers des Laborgeräts gemäß Figur 65.
Figur 67 zeigt einen Exzenter mit Ausgleichsmasse eines Mischantriebsmechanismus eines Laborgeräts gemäß einem exemplarischen Ausführungsbeispiel der Erfindung.
Figur 68 zeigt das Laborgerät gemäß Figur 65 mit darauf montiertem Objektträger.
Figur 69 zeigt eine Unterseite des Laborgeräts gemäß Figur 65.
Figur 70 zeigt eine Unterseite des Laborgeräts gemäß Figur 65 ohne bodenseitige Abdeckung.
Figur 71 zeigt eine Draufsicht des Laborgeräts gemäß Figur 65.
Figur 72 zeigt eine Querschnittsansicht des Laborgeräts gemäß Figur 65.
Figur 73 zeigt unterschiedliche Ansichten von Komponenten des Laborgeräts gemäß Figur 65.
Figur 74 zeigt unterschiedliche Ansichten von Komponenten des Laborgeräts gemäß Figur 65.
Figur 75 zeigt eine dreidimensionale Ansicht eines Laborgeräts gemäß einem anderen Ausführungsbeispiel der Erfindung mit rahmenförmiger Ausgleichsmasse, wobei ferner zwei Darstellungen eines Doppelexzenters zu erkennen sind.
Figur 76 zeigt unterschiedliche Ansichten von Komponenten des Laborgeräts gemäß Figur 75.
Figur 77 zeigt eine dreidimensionale oberseitige Ansicht eines Grundbauteils mit Positionieranschlägen und Fixiermechanismus eines Laborgeräts gemäß einem anderen exemplarischen Ausführungsbeispiel der Erfindung.
Figur 78 zeigt eine dreidimensionale unterseitige Ansicht des Grundbauteils mit Positionieranschlägen und Fixiermechanismus gemäß Figur 77.
Figur 79 zeigt eine dreidimensionale unterseitige Ansicht einer Funktionsbaugruppe des Laborgeräts gemäß Figur 77 und Figur 78.
Figur 80 zeigt eine Querschnittsansicht der Funktionsbaugruppe gemäß Figur 79.
Figur 81 zeigt eine dreidimensionale Ansicht eines einstückigen Grundbauteils des Laborgeräts gemäß Figur 77 bis Figur 80.
Figur 82 zeigt eine Querschnittsansicht einer Positionierbaugruppe mit Positionieranschlag eines Laborgeräts gemäß einem exemplarischen Ausführungsbeispiel der Erfindung.
Figur 83 zeigt eine dreidimensionale unterseitige Ansicht eines Grundbauteils mit Positionieranschlägen und Fixiermechanismus sowie einem Kühlkörper eines Laborgeräts mit Normalkrafterzeugungseinrichtung gemäß einem weiteren exemplarischen Ausführungsbeispiel der Erfindung.
Figur 84 zeigt eine dreidimensionale oberseitige Ansicht eines Trägerkörpers des Laborgeräts mit Normalkrafterzeugungseinrichtung gemäß Figur 83.
Figur 85 zeigt eine Querschnittsansicht eines Laborgeräts mit Normalkrafterzeugungseinrichtung gemäß einem exemplarischen Ausführungsbeispiel der Erfindung und zeigt einen Kopplungsbereich zwischen dem Grundbauteil gemäß Figur 83 und dem Trägerkörper gemäß Figur 84.
Figur 86 zeigt eine dreidimensionale Ansicht eines Trägerkörpers eines Laborgeräts mit Normalkrafterzeugungseinrichtung gemäß einem exemplarischen Ausführungsbeispiel der Erfindung.
Figur 87 zeigt eine dreidimensionale unterseitige Ansicht eines Grundbauteils mit Positionieranschlägen und Fixiermechanismus sowie einem Kühlkörper eines Laborgeräts mit Normalkrafterzeugungseinrichtung zum Zusammenwirken mit dem Trägerkörper gemäß Figur 86.
Figur 88 zeigt eine dreidimensionale Ansicht eines Trägerkörpers eines Laborgeräts mit Normalkrafterzeugungseinrichtung gemäß einem anderen exemplarischen Ausführungsbeispiel der Erfindung.
Figur 89 zeigt eine Querschnittsansicht eines Laborgeräts mit Normalkrafterzeugungseinrichtung gemäß einem exemplarischen Ausführungsbeispiel der Erfindung, bei welcher der Trägerkörper gemäß Figur 88 implementiert sein kann.
Figur 90 zeigt eine dreidimensionale Ansicht eines Trägerkörpers eines Laborgeräts gemäß einem exemplarischen Ausführungsbeispiel der Erfindung.
Figur 91 zeigt eine Querschnittsansicht des Laborgeräts gemäß Figur 90.
Figur 92 zeigt eine Querschnittsansicht eines Laborgeräts mit Normalkrafterzeugungseinrichtung gemäß einem exemplarischen Ausführungsbeispiel der Erfindung.
Figur 93 zeigt eine Querschnittsansicht eines Laborgeräts mit Normalkrafterzeugungseinrichtung gemäß einem anderen exemplarischen Ausführungsbeispiel der Erfindung.
Figur 94 zeigt eine Querschnittsansicht eines Laborgeräts mit Normalkrafterzeugungseinrichtung und Magnetfeldabschirmeinrichtung gemäß einem anderen exemplarischen Ausführungsbeispiel der Erfindung.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte von Ausführungsbeispielen der Erfindung erläutert werden:
Bei herkömmlichen Laborgeräten erfolgt die einfache Begrenzung der Position einer Mikrotiterplatte durch feste Anschläge. Nachteilig sind dabei die hohen Fertigungstoleranzen der aus Kunststoff bestehenden und im Spritzgussverfahren hergestellten Probenträgerplatten. In automatisierten Handlingsystemen mit festen Positionieranschlägen werden die Positionen meist etwas größer gestaltet, um die Objekte sicher automatisch durch Greifer einsetzen und entnehmen zu können. Mit kleiner werdendem Durchmesser der Gefäße und Kavitäten, zum Beispiel für Mikrotiterplatten mit 384 oder 1536 Kavitäten, ist diese einfache Positionierung nicht ausreichend. Ferner besteht mit solchen herkömmlichen Laborgeräten die Gefahr der möglichen ungehinderten Verschiebung der Probenträgerplatte durch äußere mechanische Einflüsse. Es besteht außerdem die Gefahr der Beschädigung einer automatischen Pipettiervorrichtung oder dergleichen oder sogar die fehlerhafte Bearbeitung von angrenzenden Proben bei unkontrollierter Verschiebung.

Darüber hinaus werden herkömmlich Mechanismen zur Aufnahme einer Probenträgerplatte verwendet, bei denen eine eingesetzte Probenträgerplatte mittels Federelementen an die jeweils gegenüberliegenden festen Anschlagränder gedrückt werden. Nachteil dieser federbelasteten Mechanismen ist, dass die Probenträgerplatte gegen eine Kraft eingesetzt und entnommen werden muss. Viele Greifer können aufgrund ihrer Konstruktion oder der reibschlüssigen Verbindung zwischen Greifer und Probenträgerpatte nicht gegen hohe Kräfte arbeiten. Es besteht die Gefahr einer ungewollten Verschiebung zwischen Greifer und Probenträgerplatte. Ein Nachteil herkömmlicher Vorrichtungen ist, dass hier keine Selbsthemmung des Mechanismus vorhanden ist. Das bedeutet, dass hiermit zwar eine Positionierung erreicht werden kann, die Vorrichtung jedoch für Anwendungen wie zum Beispiel als Feststellvorrichtung für eine Mischvorrichtung oder zur Verhinderung einer Relativbewegung gegenüber starken äußeren Kräften nicht gut geeignet ist. Ein weiterer Nachteil ist, dass der Bauraum im Zentrum der Objektlagervorrichtung durch übliche Positioniervorrichtungen nahezu vollständig ausgenutzt ist und damit nicht zur Integration anderer Funktionen verwendet werden kann. Weiterhin ist die Selbsthemmung bei üblichen Mechanismen nicht unabhängig von der aktuellen Stellung der Positionieranschläge im verriegelten Zustand. Die genaue Stellung der Positionieranschläge im verriegelten Zustand unterscheidet sich aber aufgrund fertigungstechnischer Toleranzen, abweichender Dimensionen der Probenträgerplatten unterschiedlicher Typen und aufgrund unterschiedlicher Dimensionen der Sockelhöhen der Mikrotiterplatten.

Gemäß einem exemplarischen Ausführungsbeispiel der Erfindung ist ein Laborgerät geschaffen, das aufgrund des Führens eines Führungskörpers in einer Führungsaussparung eines Fixiermechanismus eine ausgeprägte Selbsthemmung gegen ein unerwünschtes Lösen eines aufgenommenen Objektträgers vom Laborgerät zeigt. Gleichzeitig kann die Konfiguration des Laborgeräts derart vorgenommen werden, dass in quasi umgekehrter Kraftübertragungsrichtung bereits eine geringe Betätigungskraft an einer Betätigungseinrichtung ausreicht, um Positionieranschläge zwischen einem Montagezustand und einem Demontagezustand eines Objektträgers zu verschieben. Wird der beschriebene Fixiermechanismus mit Selbsthemmung samt damit zusammenwirkender Betätigungseinrichtung an einem Umfangsrand eines Grundbauteils des Laborgeräts implementiert, ohne räumlich in einen Zentralbereich des Grundbauteils hineinzureichen, kann dieser Zentralbereich zum Unterbringen einer Wechselwirkungseinrichtung (zum Beispiel zum Temperieren, zum Durchführen optischer Messungen und/oder für eine magnetische Manipulation von Medium in dem Objektträger, zum Beispiel zwecks Magnetseparation) verwendet werden, ohne auf den Fixiermechanismus und die Betätigungseinrichtung zurückzuführende Beschränkungen.

Exemplarische Ausführungsbeispiele der Erfindung schaffen ein kompaktes Laborgerät zum selektiven Fixieren eines Objektträgers, das insbesondere vorteilhaft zur automatisierten Durchmischung und/oder Temperierung von Medium (zum Beispiel von biologischen Proben) in Laborgefäßen des Objektträgers ausgebildet sein kann. Bei den Laborgefäßen kann es sich vorzugsweise, aber nicht ausschließlich, um Probenträgerplatten handeln, weiter insbesondere Mikrotiterplatten. Solche Mikrotiterplatten können in vollautomatischen Flüssigkeitshandhabungssystemen, automatisierten Probenvorbereitungssystemen und/oder Analysevorrichtungen verwendet werden. Die Außengeometrie von Mikrotiterplatten sind im Zuge einer Vereinheitlichung standardisiert, um von Laborgeräten unterschiedlicher Hersteller und Funktion aufgenommen und bearbeitet werden zu können.

Eine wichtige Eigenschaft von Laborgeräten zur Bearbeitung derartiger Probenträgerplatten mit kleinen Durchmessern der Einzelgefäße ist eine exakte Positionierung im Laborgerät und in einem übergeordneten Gesamtsystem, damit die Einzelgefäße durch vollautomatische Flüssigkeitshandhabungssysteme oder andere Manipulationsvorrichtungen sicher angefahren werden können.

Ein vorteilhaftes Bearbeitungsverfahren stellt dabei eine reproduzierbare und vollständige Durchmischung der Proben und Reagenzien in den einzelnen Behältern des Objektträgers dar. Insbesondere mit den immer geringer werdenden Probenvolumina und geometrisch kleiner werdenden Behältnissen stellt dies eine Herausforderung dar. Die mit den kleineren Dimensionen immer mehr an Einfluss gewinnenden Oberflächenkräfte sollen dabei sicher überwunden werden, um eine Relativbewegung der Proben im Behälter zu erzeugen. Dies ist vorteilhaft für eine gute Durchmischung.

Eine Durchmischung kann zum Beispiel über eine Bewegung der Probengefäße ohne Einsatz von Mischwerkzeugen kontaminationsfrei erzeugt werden. Durch die Beschleunigung wird die Probe im Behälter durch Zentrifugalkräfte in Bewegung versetzt, woraus eine Durchmischung der enthaltenen Stoffe resultiert. Hierbei ist eine orbitale Mischbewegung in einer horizontalen Ebene besonders vorteilhaft. Durch die Wahl geeigneter Betriebsbedingungen (insbesondere einer geeigneten Amplitude und Mischfrequenz der Orbitalbewegung) in Abhängigkeit geometrischer, chemischer und physikalischer Parameter kann so eine effektive, reproduzierbare Durchmischung erzeugt werden.

Laborgeräte zur automatisierten Durchmischung und/oder Temperierung von Proben in Mikrotiterplatten können gemäß exemplarischen Ausführungsbeispielen der Erfindung zum Beispiel in der Pharmaforschung, der chemischen Synthese von Wirkstoffen, in der Mikrobiologie, der Züchtung von Zellen in Nährlösungen, bei der Analyse von Blut oder Gewebeproben eingesetzt werden. Dabei ist eine parallele Bearbeitung einer immer größer werdenden Anzahl von Einzelproben bei gleichzeitig immer geringer werdenden Volumina wünschenswert. Dabei ist es besonders vorteilhaft, wenn alle Proben reproduzierbar unter möglichst identischen Bedingungen bearbeitet werden.

Neben der Durchmischung der Proben ist auch die Möglichkeit einer Temperierung auf exakte Temperaturen oberhalb und/oder unterhalb der Umgebungstemperatur vorteilhaft. Auch hier ist wünschenswert, dass die Proben alle möglichst identischen Bedingungen ausgesetzt werden.

Gemäß einem exemplarischen Ausführungsbeispiel der Erfindung wird ein Laborgerät mit einer mittels einer Betätigungseinrichtung automatisch und manuell bedienbaren Objektlagervorrichtung für Probenträgerplatten (insbesondere Mikrotiterplatten oder andere Objektträger wie Slides) geschaffen. Ein solches Laborgerät kann vorteilhaft mit einer Positionier- und Feststelleinrichtung versehen werden, die als Fixiermechanismus ausgebildet sein kann. Ein solcher Fixiermechanismus kann zum Beispiel zur Fixierung und Positionierung in Flüssigkeitshandhabungssystemen, Systemen zur Probenvorbereitung und Analysesystemen eingesetzt werden. Antrieb und Lagerung einer Mischvorrichtung können ebenfalls in einem Laborgerät gemäß einem exemplarischen Ausführungsbeispiel der Erfindung implementiert sein. Der Fixiermechanismus bzw. die Objektlagervorrichtung kann auch zur Fixierung und Positionierung der Probenträgerplatte auf dem Schütteltablar einer Mischvorrichtung verwendet werden. Ferner ist gemäß einem Ausführungsbeispiel der Erfindung die Integration einer Temperiervorrichtung zur Temperierung von Proben oberhalb und/oder unterhalb Umgebungstemperatur in die Mischvorrichtung und/oder die Objektlagervorrichtung bzw. den Fixiermechanismus ermöglicht.

Gemäß einem exemplarischen Ausführungsbeispiel der Erfindung kann somit ein Laborgerät mit einer Objektlagervorrichtung geschaffen werden, die mit einem manuell betätigbaren aber auch automatisierbaren Feststell- bzw. Fixiermechanismus ausgestattet sein kann. Insbesondere kann eine solche Objektlagervorrichtung mit automatisierbarem Feststellmechanismus in Misch- und Temperiervorrichtungen implementiert werden, oder alternativ ausschließlich für die genaue Positionierung und Fixierung der Probenträgerplatte eingesetzt werden. Alle Kavitäten einer Mikrotiterplatte können bei geeigneter Gestaltung der Objektlagervorrichtung von unten erreicht werden, wenn ein Zentralbereich des Grundbauteils von Komponenten des Fixiermechanismus frei bleibt. Ein solcher Zentralbereich kann zum Beispiel als optischer Kanal für Messungen oder andere Manipulationen (wie zum Beispiel eine Magnetseparation) frei bleiben und genutzt werden.

Gemäß Ausführungsbeispielen der Erfindung wird ein Laborgerät zur Aufnahme eines Objektträgers bereitgestellt, insbesondere einer Mikrotiterplatte. Mit Vorteil kann hierbei die Mikrotiterplatte oder ein anderer Objektträger, die bzw. der manuell oder durch einen Greifer auf eine Ablagefläche gesetzt wird, mit hoher Genauigkeit positioniert und fixiert werden. Dies kann zum Beispiel erfolgen, um die in dem Objektträger enthaltenen Proben mit einer automatischen Pipettiervorrichtung bearbeiten zu können. Je geringer die Durchmesser der einzelnen Kavitäten des Objektträgers sind, desto vorteilhafter ist eine genaue bzw. wiederholgenaue Positionierung. Dabei ist im Vergleich mit herkömmlichen Laborgeräten ohne Fixiervorrichtung gemäß exemplarischen Ausführungsbeispielen der Erfindung in einem Flüssigkeitshandhabungssystem die Gefahr reduziert oder sogar eliminiert, dass ein unbeabsichtigtes Verschieben durch äußere mechanische Einflüsse erfolgen kann.

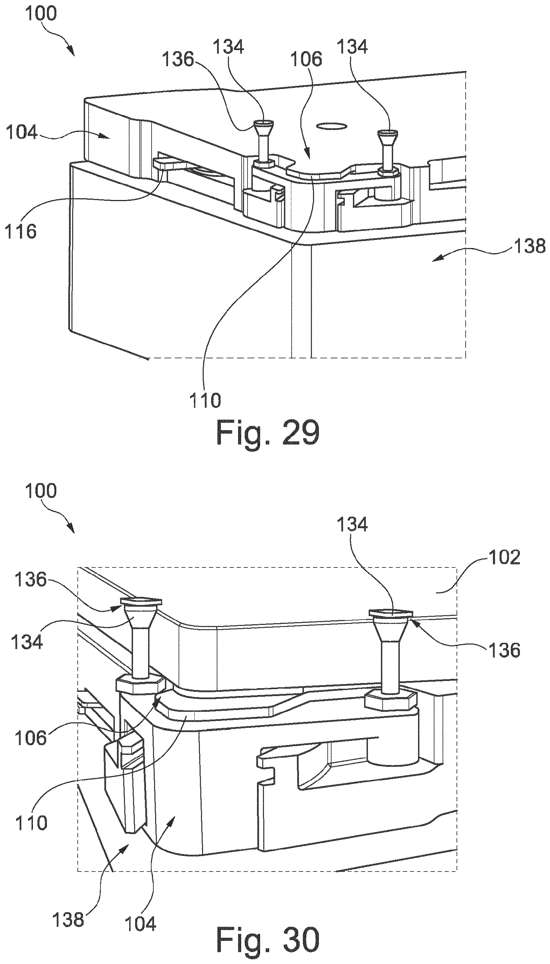

Laborgeräte gemäß exemplarischen Ausführungsbeispielen der Erfindung haben den Vorteil einer wiederholgenauen Positionierung und Fixierung der Probenträgerplatte in einer horizontalen Ebene. Dies ist insbesondere für automatische Flüssigkeitshandhabungssysteme und kleine Gefäßdimensionen von hohem Vorteil. Darüber hinaus kann eine hohe Selbsthemmung der Positionieranschläge aus Sicht das Objektträgers (insbesondere der Probenträgerplatte) erreicht werden. Eine solche hohe Selbsthemmung kann anschaulich den Einsatz einer nur geringen Schließkraft zum Festklemmen des Objektträgers an dem Fixiermechanismus im Gegensatz zu einer höheren erreichten Haltekraft ermöglichen. Anschaulich führt eine hohe Selbsthemmung insbesondere dazu, dass nur eine kleine Federkraft zum Schließen bzw. zur Fixierung notwendig ist. Das sorgt für eine geringe Deformation elastischer Probenträgerplatten oder anderer Objektträger. Ferner kann eine solche Selbsthemmung in Verbindung mit einer nur geringen Feder- bzw. Schließkraft auch die Deformation der (beispielsweise elastischen) Probenträgerplatte, zum Beispiel aus Kunststoff, reduzieren. Darüber hinaus ist aufgrund einer solchen geringeren Deformation auch eine Verbesserung der Positioniergenauigkeit der einzelnen Gefäße des Objektträgers in vertikaler Richtung ermöglicht. Mit Vorteil kann ferner durch den beschriebenen höher selbsthemmenden Mechanismus optional auch auf Permanentmagnete zur Erhöhung der Kraft im verriegelten Zustand verzichtet werden, was für eine störungsfreie Durchführung einer Anwendung mit magnetischen Partikeln von Vorteil sein kann. Ferner kann gemäß einem Ausführungsbeispiel der Erfindung eine zentrische Klemmung der Probenträgerplatte in einer horizontalen Ebene durch zwei oder vier bewegliche Positionieranschläge oder durch einen beweglichen Positionieranschlag in Kombination mit einem oder mehreren festen Positionieranschlägen erfolgen. Exemplarische Ausführungsbeispiele der Erfindung ermöglichen darüber hinaus ein kraftarmes bzw. sogar kraftloses Einsetzen und eine kraftarme bzw. sogar kraftlose Entnahme der Probenträgerplatte durch Greifer und eine feste Fixierung im verriegelten Zustand. Durch eine geeignete geometrische Gestaltung von Positionierstiften kann ein Laborgerät gemäß einem exemplarischen Ausführungsbeispiel der Erfindung auch hohe Kräfte in vertikaler Richtung sicher aufnehmen (siehe zum Beispiel Figur 29 und Figur 30). Das ermöglicht insbesondere einen sicheren Einsatz bei Anwendungen, die hohe Kräfte in vertikaler Richtung erzeugen (zum Beispiel "microplate stamping"). Auch bei Verwendung von Verschlussfolien oder Deckeln für eine Probenträgerplatte, die durchstoßen werden sollen (zum Beispiel beim Entstehen von Kräften durch eine beispielsweise schnelle Aufwärtsbewegung eines Pipettierkopfes), hat dies Vorteile. In einem Ausführungsbeispiel eines Laborgeräts, bei dem alle Bauteile (insbesondere alle Bauteile des Fixiermechanismus und/oder der Betätigungseinrichtung) im Randbereich untergebracht werden, ist es möglich, den kompletten Objektträger (insbesondere alle Kavitäten einer Mikrotiterplatte) mit allen Gefäßen auch von unten zugänglich zu machen. Dies kann zum Beispiel für optische Messungen, Magnetseparation und andere Manipulationen von Vorteil sein. Ferner kann dies den Bau einer entsprechenden Mischvorrichtung mit automatischer Plattenklemmung ermöglichen.

Exemplarische Ausführungsbeispiele der Erfindung schaffen ein Laborgerät mit einer Objektlagervorrichtung zur Aufnahme, Positionierung und Feststellung eines Objektträgers, insbesondere eines plattenförmigen Probenträgers (zum Beispiel einer Mikrotiterplatte und/oder von Slides). Die Positionierung und Feststellung das Objektträgers kann dabei automatisiert durch einen (zum Beispiel elektromechanischen) Aktuator und/oder durch manuelle Betätigung erfolgen. Eine manuelle Betätigung ermöglicht ein besonders schnelles Beladen und Entladen durch Bedienpersonal oder eine Notentriegelung im Fall eines Defektes.

Eine Objektlagervorrichtung eines Laborgeräts gemäß einem exemplarischen Ausführungsbeispiel der Erfindung kann zur Positionierung und Fixierung von Probengefäßen in einem Flüssigkeitshandhabungssystem (auch als Liquid-Handling-System bezeichnet) oder anderen Probenbearbeitungs- und Analyseanlagen verwendet werden. Außerdem kann ein solches Laborgerät mit einer Mischvorrichtung zur Bewegung des Objektträgers (insbesondere eines Probenträgers oder Probengefäßes) zur Erzeugung einer Durchmischung der enthaltenen Proben verwendet werden.

Die Integration eines Fixiermechanismus in eine Mischvorrichtung eines Laborgeräts kann aufwendig sein, da die Objektlagervorrichtung dann beweglich zu lagern ist und die Fixierung des Objektträgers während der Ausführung der Bewegung stets sicher aufrecht erhalten werden soll. Ferner treten zum Teil sehr hohe Mischfrequenzen und Beschleunigungen zur Überwindung der Oberflächenkräfte auf, um eine sichere Durchmischung von Proben mit geringem Volumen oder in geometrisch kleinen Gefäßen zu gewährleisten.

Gemäß einem Ausführungsbeispiel der Erfindung kann zur Erhöhung der Betriebssicherheit und Lebensdauer des Laborgeräts die Fixiervorrichtung der Objektlagervorrichtung vom Aktuator getrennt werden und trotzdem die Fixierung des Objektträgers jederzeit sicher aufrecht erhalten werden. Der Objektträger kann während der Ausführung der Bewegung (im Rahmen eines Mischvorgangs) sicher fixiert sein, da bei einem unbeabsichtigten Lösen im Fall von nicht verschlossenen Gefäßen zum Beispiel einer Mikrotiterplatte eine Kontamination des umgebenden Systems resultiert, was große Schäden verursachen kann.

Um die notwendigen Kräfte zur Betätigung der Betätigungseinrichtung und daher mittelbar des Fixiermechanismus klein zu halten und dennoch eine hohe Sicherheit gegen unbeabsichtigtes Lösen des Objektträgers vom Laborgerät zu erreichen, kann mit Vorteil der Fixiermechanismus so gestaltet sein, dass aus Sicht des Objektträgers (insbesondere einer Probenträgerplatte) eine hohe Selbsthemmung gegeben ist und aus Sicht des Aktuators oder der manuellen Betätigung der Betätigungseinrichtung trotzdem nur geringe Kräfte ausreichend sind. Das hat den Vorteil, dass ein klein dimensionierter Aktuator eingesetzt werden kann.

Außerdem ist die oben beschriebene Selbsthemmung insbesondere bei Integration einer Mischvorrichtung in das Laborgerät vorteilhaft, bei der hohe Kräfte in der horizontalen Ebene auftreten. In Flüssigkeitshandhabungssystemen können aus unterschiedlichen Gründen (zum Beispiel beim Durchstoßen eines Deckels oder einer festen Folie) auch hohe Kräfte in vertikaler Richtung auf die Probenträgerplatte übertragen werden, denen das Laborgerät aufgrund der beschriebenen Selbsthemmung standhalten kann.

Damit ein Laborgerät gemäß einem exemplarischen Ausführungsbeispiel der Erfindung an unterschiedliche Anforderungen und Arten von Objektträgern (und insbesondere Gefäßen) anpassbar ist, können zum Beispiel die auf verschiebbaren Positionieranschlägen (auch als Positionierschieber bezeichnet) vorhandenen Positionierstifte als eigentliche Anschläge montier- und austauschbar (insbesondere schraubbar) gestaltet sein. So können die Anschläge (zum Beispiel durch entsprechende Auswahl oder Konfiguration von Positionierstiften) variabel angepasst werden.

Gemäß einem Ausführungsbeispiel eines Laborgeräts können zwei linear bewegliche Positionieranschläge vorgesehen sein, welche den Objektträger (insbesondere eine Probenträgerplatte) zentrisch klemmen. Gemäß anderer Ausführungsbeispiele können zum Beispiel ein beweglicher Positionieranschlag und drei feste Positionieranschläge oder aber vier bewegliche Positionieranschläge implementiert werden.

Die Betätigung (zum Öffnen bzw. Schließen) des Fixiermechanismus kann gemäß einem bevorzugten Ausführungsbeispiel durch Erzeugung einer Bewegung eines Synchronriemens oder Zahnriemens erfolgen. Eine solche Betätigung mittels einer Betätigungseinrichtung kann wahlweise automatisiert oder manuell erfolgen. Außerdem kann ein solcher Fixiermechanismus auch eine Verdrehung eines von drehbar gelagerten Elementen (insbesondere Führungsscheiben oder Kurvenscheiben) beinhalten. Die Betätigung der Betätigungseinrichtung kann durch einen automatisierten Aktuator oder Aktor oder manuell erfolgen. Die Betätigung der Betätigungseinrichtung kann zum Beispiel durch lineare Verschiebung oder durch eine Rotation eines Betätigungsglieds erfolgen. Insbesondere bei einem Ausführungsbeispiel mit nur einem linear beweglichen Positionieranschlag und festen Anschlagleisten als zusätzlichem ortsfesten Positionieranschlag kann alternativ ein Synchronriementrieb weggelassen werden und der bewegliche Anschlag direkt durch Rotation eines Koppelelements (insbesondere einer Führungsscheibe oder Kurvenscheibe) zur Bewegung des Positionieranschlags erfolgen.

**Figur 1** zeigt eine dreidimensionale Ansicht eines Laborgeräts 100 gemäß einem exemplarischen Ausführungsbeispiel der Erfindung.

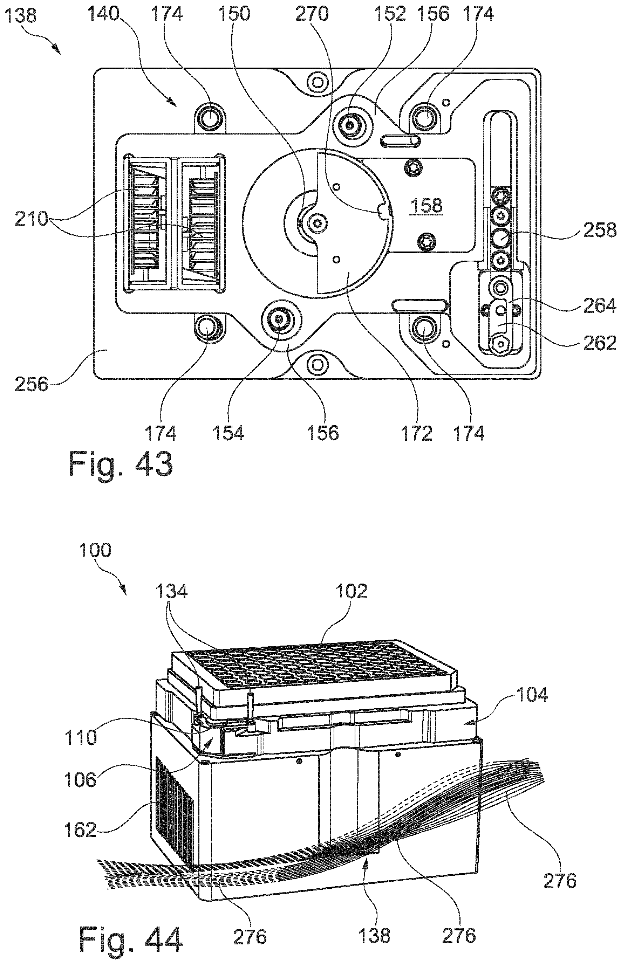

Das dargestellte Laborgerät 100 dient zum lösbaren Fixieren eines Objektträgers 102 an seiner Oberseite. Während der Objektträger 102 in Figur 1 nicht dargestellt ist, zeigt Figur 44 zum Beispiel einen als Kunststoff-Mikrotiterplatte ausgebildeten Objektträger 102.

Das dargestellte Laborgerät 100 weist einen ortsfesten Trägerkörper 138 als Unterteil und ein darauf beweglich gelagertes Grundbauteil 104 als Oberteil auf, wobei Letzteres zum lösbaren Aufnehmen des Objektträgers 102 fungiert.

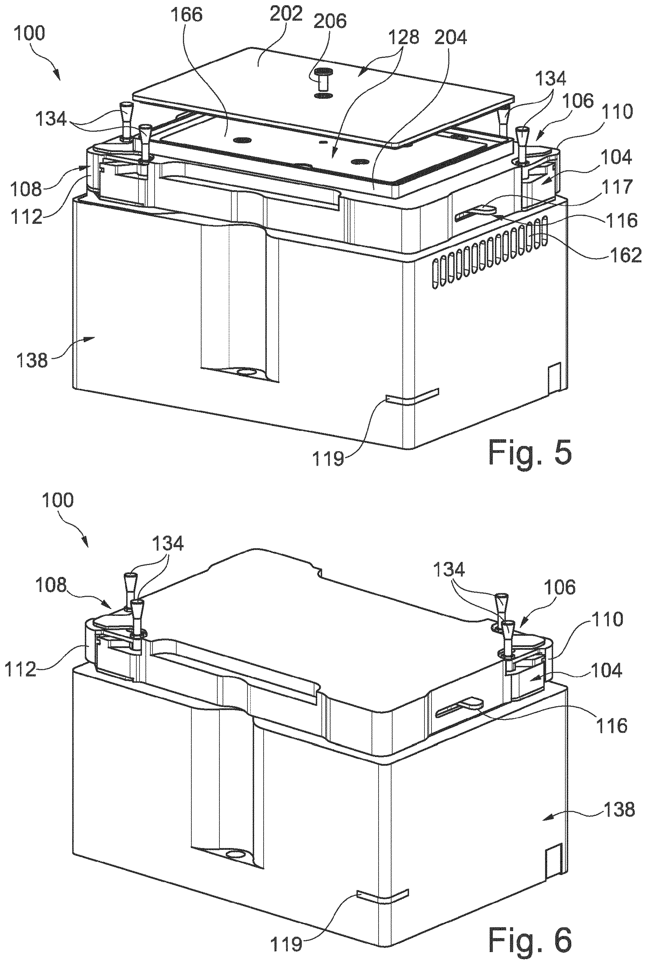

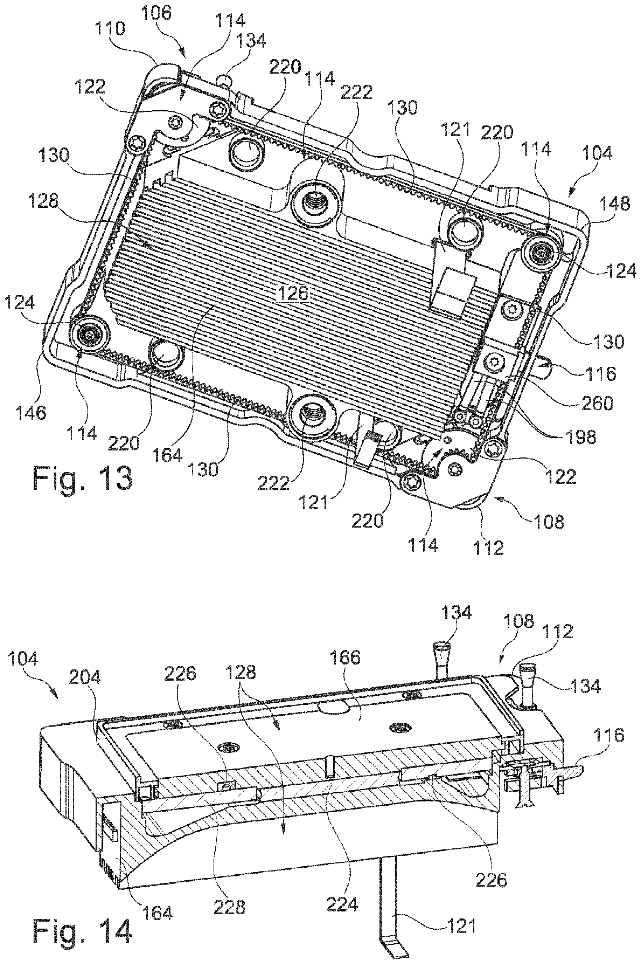

An einer Oberseite des Grundbauteils 104 ist ein linear nach außen bzw. innen bewegbarer erster Positionieranschlag 106 zum Anschlagen an einen ersten Randbereich des Objektträgers 102 vorgesehen. Der erste Positionieranschlag 106 ist an einem ersten Eck 110 des Grundbauteils 104 angeordnet. Darüber hinaus ist an der Oberseite des Grundbauteils 104 ein weiterer linear nach außen bzw. innen bewegbarer zweiter Positionieranschlag 108 zum Anschlagen an einen zweiten Randbereich des Objektträgers 102 bereitgestellt. Der zweite Positionieranschlag 108 ist an einem zweiten Eck 112 des Grundbauteils 104 angeordnet. Alternativ kann der zweite Positionieranschlag 108 auch starr an dem Grundbauteil 104 angebracht sein. Sowohl der erste Positionieranschlag 106 als auch der zweite Positionieranschlag 108 hat jeweils zwei Positionierstifte 134, zwischen denen ein jeweiliger Eckbereich eines rechteckförmigen Objektträgers 102 in Eingriff genommen werden kann, um den Objektträger 102 zwischen den Positionieranschlägen 106, 108 festzuklemmen. Ein zum Beispiel in Figur 13 näher dargestellter Fixiermechanismus 114 im Inneren des Grundbauteils 104 dient zum Klemmen des Objektträgers 102 zwischen dem ersten Positionieranschlag 106 und dem zweiten Positionieranschlag 108. Mittels einer in Figur 5 und im Detail in Figur 13 dargestellten Betätigungseinrichtung 116 kann der Objektträger 102 zwischen einer in Eingriff genommenen bzw. festgestellten Konfiguration und einer zum Aufsetzen oder Entnehmen des Objektträgers 102 freigegebenen Konfiguration überführt werden.

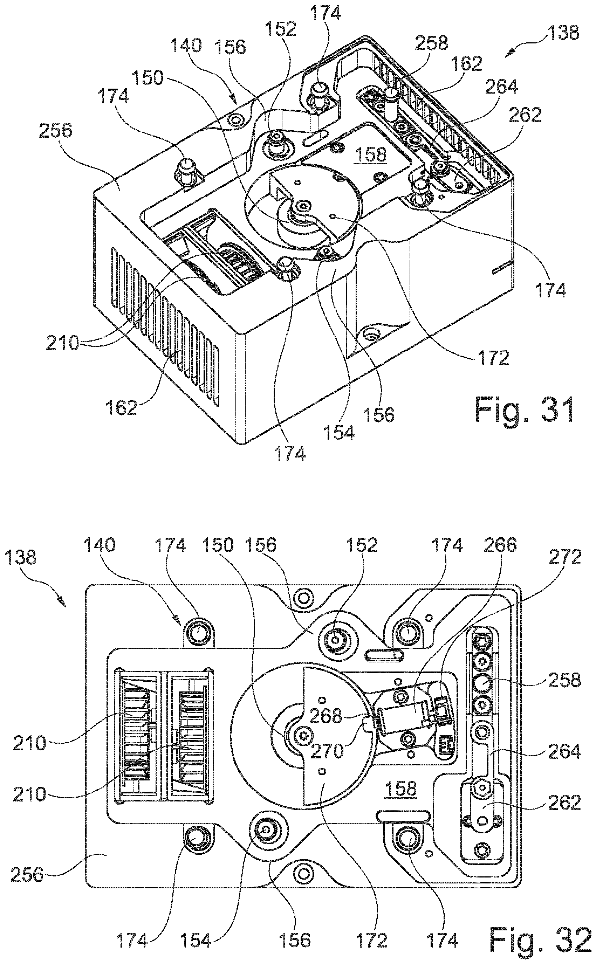

Ebenfalls in Figur 1 dargestellt ist eine thermische Kopplungsplatte 166 an einer freigelegten Oberseite oder Montagefläche des Grundbauteils 104. Die thermische Kopplungsplatte 166 kann aus einem thermisch hochleitfähigen Material (zum Beispiel aus einem Metall) hergestellt sein, um den Objektträger 102 und darin eingefülltes flüssiges Medium zu temperieren, insbesondere zu heizen und zu kühlen. Die thermische Kopplungsplatte 166 bildet einen Teil einer Auflagefläche des Objektträgers 102. Die thermische Kopplungsplatte 166 ist von einem thermisch isolierenden Rahmen 204 (zum Beispiel aus Kunststoff) umgeben. Wie in Figur 13 dargestellt ist, kann die thermische Kopplungsplatte 166 unterseitig mit einem Kühlkörper 164 thermisch gekoppelt sein, zum Beispiel um Wärme von dem Objektträger 102 und darin aufgenommenem fluidischem Medium abzuführen. Zu diesem Zweck kann Umgebungsluft durch eine Kühlöffnung 162 als Lufteinlass in einem Gehäuse des Trägerkörpers 138 in das Innere des Laborgeräts 101 strömen, kann von dem Kühlkörper 164 abgegebene Wärme aufnehmen und kann dann in erwärmtem Zustand wieder aus dem Laborgerät 100 herausströmen. Während die Kühlöffnung 162 gemäß Figur 1 als Einlass für Umgebungsluft in das Innere des Laborgeräts 100 dient, ist eine andere Kühlöffnung 162 als Auslass für Luft aus dem Inneren des Laborgeräts 100 in Figur 5 dargestellt. Durch den Lufteinlass kann optional auch eine Luftansaugung erfolgen, zum Beispiel mittels eines Lüfters 210 (siehe Figur 31). Der Luftauslass dient als Abluftöffnung.

Figur 1 zeigt das Laborgerät 100 ohne einen optional aufgesetzten Temperieradapter, der in Figur 2 mit Bezugszeichen 202 dargestellt ist.

**Figur 2** zeigt eine dreidimensionale Ansicht eines Laborgeräts 100 mit einem Flachbodenadapter als Temperieradapter 202 gemäß einem anderen exemplarischen Ausführungsbeispiel der Erfindung. Der gemäß Figur 2 auf der Oberseite des Laborgeräts 100 aufgesetzte Temperieradapter 202 dient für die Temperierung einer Flachboden-Mikrotiterplatte als Objektträger 102 (nicht dargestellt). Das Laborgerät 100 gemäß Figur 2 weist also einen auf dem Grundbauteil 104 anbringbaren, nämlich mittels einer Befestigungsschraube 206 auf dem Grundbauteil 104 aufschraubbaren, thermisch hochleitfähigen Temperieradapter 202 aus einem metallischen Material auf, der zum thermisch leitfähigen Koppeln eines in Figur 2 nicht dargestellten Objektträgers 102 mit dem Grundbauteil 104 thermisch koppelbar ist. Gemäß Figur 2 liegt der hier als Platte ausgebildete Temperieradapter 202 direkt und im Wesentlichen vollflächig auf der thermischen Kopplungsplatte 166 auf und ist formschlüssig in den thermisch isolierenden Rahmen 204 eingesetzt. Sodann kann der Temperieradapter 202 an der thermischen Kopplungsplatte 166 des Grundbauteils 104 durch Verschrauben lösbar befestigt werden.

**Figur 3** zeigt das Laborgerät 100 gemäß Figur 1 mit einem darauf montierten, gegenüber Figur 2 alternativen Temperieradapter 202, der hier als Metallgestell mit einer Vielzahl von darin matrixförmig angeordneten Aufnahmeöffnungen 208 zum formschlüssigen Aufnehmen von Laborgefäßen (nicht gezeigt) oder zum formschlüssigen Einsetzen eines Objektträgers 102 mit zu den Aufnahmeöffnungen 208 invers ausgebildetem Boden ausgebildet ist. Somit ist gemäß Figur 3 auf der thermischen Kopplungsplatte 166 der als Metallgestell ausgebildete Temperieradapter 202 aufgesetzt und mittels der Befestigungsschraube 206 an dem Grundbauteil 104 befestigt. In den Temperieradapter 202 gemäß Figur 3 kann dann der Objektträger 102 eingesetzt werden.

**Figur 4** zeigt eine Explosionsdarstellung des Laborgeräts 100 gemäß Figur 2 und stellt die Montage des flachen Temperieradapters 202 für die Temperierung eines als Flachboden-Mikrotiterplatte ausgebildeten Objektträgers 102 dar. **Figur 5** zeigt eine andere Explosionsdarstellung desselben Laborgeräts 100. Wie gezeigt, kann der Temperieradapter 202 mittels einer Befestigungsschraube 206 an der thermischen Kopplungsplatte 166 verschraubt werden. Der aus einem thermisch hochleitfähigen Material wie zum Beispiel Metall ausgebildete Temperieradapter 202 kann für die Temperierung einer Mikrotiterplatten mit zum Beispiel 96 Wells eingesetzt werden.

In dem jeweiligen Laborgerät 100 gemäß Figur 1 bis Figur 5 kann eine Mischvorrichtung implementiert sein, die zum Mischen von Laborgefäßinhalten des Objektträgers 102 fungiert. Ferner ist in Form des Grundbauteils 104 eine Objektlagervorrichtung zum Aufnehmen des Mischguts, d.h. des Objektträgers 102 bereitgestellt. Im Inneren des Trägerkörpers 138 ist ein zum Beispiel in Figur 31 näher dargestellter Mischantriebsmechanismus 140 implementiert, durch den sich das Grundbauteil 104 samt daran aufgenommenem und fixierten Objektträger 102 relativ gegenüber dem ortsfesten Gestell in Form des Trägerkörpers 138 in eine Mischbewegung versetzen lässt. Die Bewegung erfolgt vorzugsweise auf einer geschlossenen Bahn, insbesondere als orbitale Mischbewegung. Anschaulich kann die Bewegung des Grundbauteils 104 samt Objektträger 102 zum Beispiel auf einer Kreisbahn in einer horizontalen Ebene erfolgen. In vertikaler Richtung sollen indes keine oder nur sehr geringe Bewegungen erfolgen, wodurch ein Verschütten oder Überlaufen der Proben aus offenen Gefäßen eines Objektträgers 102 (zum Beispiel eine Mikrotiterplatte) oder eine Benetzung des Deckels solcher Gefäße zuverlässig vermieden werden kann.

Beispielsweise kann eine Amplitude oder ein Orbitalradius einer mittels des Mischantriebsmechanismus 140 erzeugbaren Mischbewegung in einem Bereich von 0,5 mm bis 5 mm liegen. Die Mischfrequenz kann vorzugsweise zwischen 25 rpm und 5000 rpm liegen, wobei auch andere Werte möglich sind. Mit einer solchen Mischvorrichtung bzw. mit einem solchen Mischantriebsmechanismus 140 können Laborgefäßinhalte vermengt werden. Zur Erhöhung der Flexibilität können Aufnahmevorrichtungen für unterschiedliche Arten von Laborgefäßen bereitgestellt werden. Zum Beispiel können Reaktionsgefäße mit einem Volumeninhalt von 0.2 ml bis 2.0 ml, Cryogefäße, Probenträgerplatten (insbesondere Mikrotiterplatten) mit zum Bespiel 96, 384 oder 1536 Einzelgefäßen, Falcon Gefäße (mit einem Aufnahmevolumen in einem Bereich von beispielsweise 1.5 ml bis 50 ml), Slides, Glasgefäße, Bechergläser, etc. eingesetzt werden.

Vorteilhaft besitzt die Objektlagervorrichtung in Form des Grundbauteils 104 einen Positionier- und Feststellmechanismus, der als Fixiermechanismus 114 beispielsweise in Figur 13 dargestellt ist. Ein Fixiermechanismus 114 eines Laborgeräts 100 gemäß einem exemplarischen Ausführungsbeispiel der Erfindung kann insbesondere automatisch oder manuell bedient werden. Eine manuelle Bedienung durch einen Benutzer kann zum Beispiel von außerhalb des Laborgeräts 100 durch Betätigen eines Verschiebeglieds 117 der Betätigungseinrichtung 116 erfolgen, dass in Figur 5 dargestellt ist. Eine zugehörige Betätigungseinrichtung 116 ist im Detail in Figur 13 dargestellt. Es ist auch möglich, dass ein Roboter oder dergleichen das Verschiebeglied 117 von einem äußeren Bereich des Laborgerätes 100 aus betätigt. Gemäß einer weiteren Ausführungsform kann ein Aktuator 262 (siehe zum Beispiel Figur 31) in einem Inneren des Laborgeräts 100, genauer gesagt in einem Inneren des Trägerkörpers 138, auf die Betätigungseinrichtung 116 in einem Inneren des Laborgeräts 100, genauer gesagt in einem Inneren des Grundbauteils 104, einwirken.

Mit dem Fixiermechanismus 114 und der Betätigungseinrichtung 116 können unterschiedliche Laborgefäße (aber insbesondere eine Probenträgerplatte) als Objektträger 102 auf dem als Schütteltablar fungierenden Grundbauteil 104 fixiert, positioniert und mit diesem fest verbunden werden.

Außerdem kann ein Laborgerät 100 gemäß einem exemplarischen Ausführungsbeispiel der Erfindung eine Temperiervorrichtung aufweisen, um den Objektträger 102 und/oder den Temperieradapter 202 und dadurch die damit im Kontakt stehenden Laborgefäßinhalte auf eine definierte Temperatur zu temperieren, die beispielsweise oberhalb oder unterhalb der Umgebungstemperatur liegen kann. Beispielsweise kann ein von einer solchen Temperiereinrichtung unterstützter Temperaturbereich von -20°C bis 120°C betragen.

Das dargestellte Laborgerät 100 kann insbesondere in Laborautomatisierungssystemen zum Einsatz kommen. Eine Steuerelektronik inklusive Mikroprozessor kann diesen Zweck im Laborgerät 100 integriert sein. Ferner kann das Laborgerät 100 mit Kabeln für die externe Stromversorgung und für eine Kommunikation mit einem übergeordneten System ausgestattet werden. Geeignete Kommunikationsschnittstellen sind RS232, CAN, Bluetooth, WLAN und USB, jedoch sind auch andere möglich.

Laborgeräte 100 gemäß exemplarischen Ausführungsbeispielen können einen austauschbaren Temperieradapter 202 zur thermischen Ankopplung von Laborgefäßen eines Objektträgers 102 auf dem Temperieradapters 202 aufweisen. Ein solcher Temperieradapter 202 kann unterschiedlichste Formen haben (vergleiche Figur 2, Figur 3 und Figur 9). Der Temperieradapter 202 kann mit einer zentralen Befestigungsschraube 206 mit der Kontaktfläche der Temperiervorrichtung an einer Oberseite des Grundbauteils 104 verbunden werden.

Das Grundbauteil 104 kann auch als Objektlagervorrichtung bezeichnet werden und dient zudem als Schütteltablar. Insbesondere kann das Grundbauteil 104 alle zur Fixierung eines Objektträgers 102 (insbesondere einer Probenträgerplatte) notwendige Bauteile aufnehmen. Außerdem kann das gesamte Schütteltablar oder ein Teil davon gleichzeitig als Kühlkörper ausgebildet werden (der zum Beispiel aus Aluminium bestehen kann), welcher mit einem integrierten Peltierelement kontaktiert sein kann. Die Kontaktfläche der Temperiervorrichtung in Form der thermischen Kopplungsplatte 166 kann zur Kontaktierung des austauschbaren Temperieradapters 202 fungieren. Diese Kontaktfläche bzw. die thermische Kopplungsplatte 166 kann durch ein im Schütteltablar bzw. dem Grundbauteil 104 integriertes Peltierelement oder ein anderes Temperierelement selektiv geheizt oder gekühlt werden.

Der Trägerkörper 138 ist als ortsfestes Gestell ausgebildet, das zum Beispiel eine Steuerelektronik, eine Antriebseinrichtung 150 sowie Exzenter 152, 154 des Mischantriebsmechanismus 140, mindestens einen Lüfter (für eine kompakte Bauform vorzugsweise ein Radiallüfter) zur Erzeugung einer Luftbewegung und Kühlung eines Kühlkörpers 164 und somit des Grundbauteils 104 oder Schütteltablars aufweist (siehe zum Beispiel Figur 31).

Die Ausführungsbeispiele gemäß Figur 1 bis Figur 5 implementieren linear verschiebbar gelagerte Positionieranschläge 106, 108 mit unten zylindrischen und oben konischen Positionierstiften 134, die alternativ auch eine andere Form haben können. Anschaulich bewegen sich die Positionierstifte 134 zur Entriegelung von dem Objektträger 102 weg und zur Verriegelung auf den Objektträger 102 zu.

Wie in Figur 5 erkennbar, ist die Betätigungseinrichtung 116 mit einem hier längsverschiebbaren Hebel zur manuellen Betätigung der Positionieranschläge 106, 108 vorgesehen (beispielsweise betätigbar zur Notentriegelung oder für ein schnelles Beladen oder Entladen durch einen Benutzer).

Das Laborgerät 100 kann auch einen Lichtleiter zum optischen Anzeigen eines Status des Laborgeräts 100 aufweisen, der durch eine interne Leuchtdiode beleuchtet werden kann. Beispielsweise kann ein rotes Leuchten einer Anzeige 119 einen Defekt anzeigen, ein grünes Leuchten einen funktionsfähigen Betriebszustand anzeigen und ein gelbes Leuchten einen Kommunikationsverlust anzeigen.

**Figur 6** zeigt ein Laborgerät 100 ohne Temperiervorrichtung gemäß einem anderen exemplarischen Ausführungsbeispiel der Erfindung. Die von dem Laborgerät 100 gemäß Figur 6 bereitgestellten Funktionen beinhalten somit eine Klemmbefestigung eines plattenförmigen Objektträgers 102 und eine Mischfunktion.

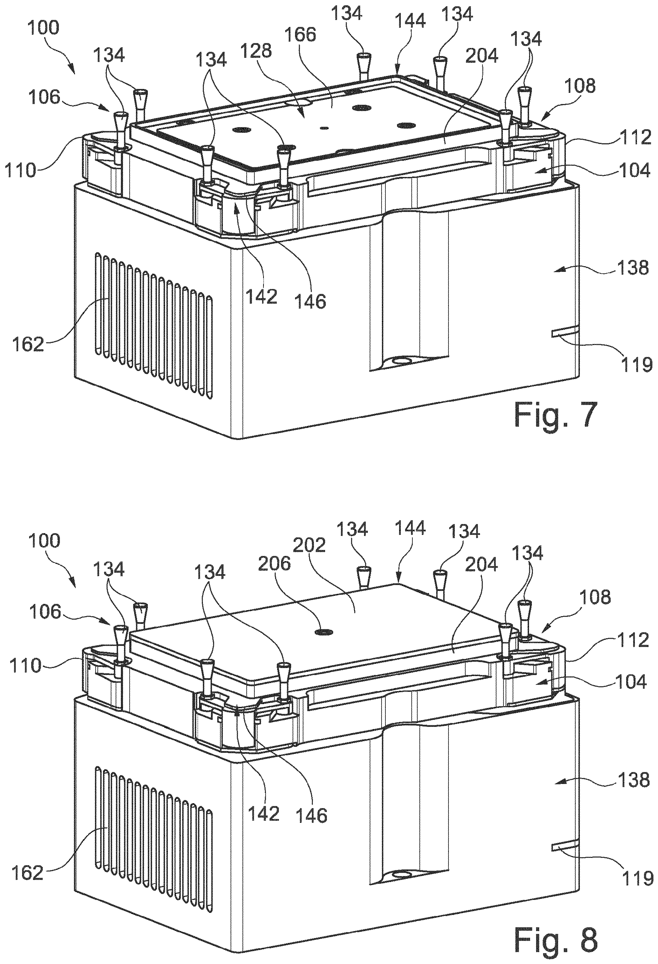

**Figur 7** zeigt ein Laborgerät 100 mit Positionierstiften 134 in allen vier Eckbereichen gemäß einem anderen exemplarischen Ausführungsbeispiel der Erfindung. Während Figur 1 bis Figur 6 Ausführungsformen eines Laborgeräts 100 mit zwei Positionieranschlägen 106, 108 zeigen, sind bei den Ausführungsbeispielen gemäß Figur 7 bis Figur 10 vier Positionieranschläge 106, 108, 142, 144 vorgesehen, die beispielsweise alle beweglich ausgebildet sein können. Somit weist das Laborgerät 100 gemäß Figur 7 zusätzlich einen dritten Positionieranschlag 142 mit zwei Positionierstiften 134 zum Anschlagen an einen dritten Randbereich eines nicht dargestellten Objektträgers 102 und einen vierten Positionieranschlag 144 mit zwei Positionierstiften 134 zum Anschlagen an einen vierten Randbereich eines solchen Objektträgers 102 auf. Der dritte Positionieranschlag 142 ist an einem dritten Eck 146 des Grundbauteils 104 angeordnet. Der vierte Positionieranschlag 144 ist an einem vierten Eck 148 des Grundbauteils 104 angeordnet.

**Figur 8** zeigt ein Laborgerät 100 mit Positionierstiften 134 in allen vier Eckbereichen und mit einem als Flachbodenadapter ausgebildeten Temperieradapter 202 zur Temperierung von Flachboden-Mikrotiterplatten gemäß einem anderen exemplarischen Ausführungsbeispiel der Erfindung. Von den zusätzlichen Positionieranschlägen 142, 144 abgesehen entspricht das Ausführungsbeispiel gemäß Figur 8 jenem gemäß Figur 2.

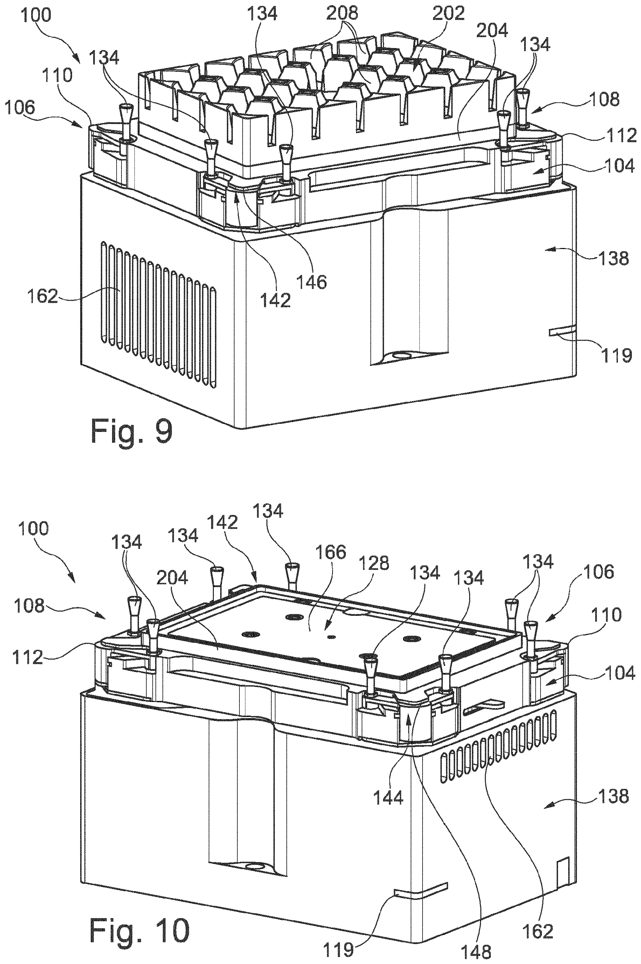

**Figur 9** zeigt das Laborgerät 100 gemäß Figur 7 mit einem darauf montierten, gegenüber Figur 8 alternativen Temperieradapter 202, der hier als Metallgestell mit einer Vielzahl von darin matrixförmig angeordneten Aufnahmeöffnungen 208 zum Aufnehmen von Laborgefäßen oder eines Objektträgers 102 (nicht gezeigt) ausgebildet ist. Von den zusätzlichen Positionieranschlägen 142, 144 und von der anderen Konfiguration des Temperieradapters 202 abgesehen entspricht das Ausführungsbeispiel gemäß Figur 9 jenem gemäß Figur 3.

**Figur 10** zeigt eine andere dreidimensionale Ansicht des Laborgeräts 100 gemäß Figur 7, in der die als Luftauslass fungierende Kühlöffnung 162 in dem Gehäuse des Trägerkörpers 138 zu erkennen ist.

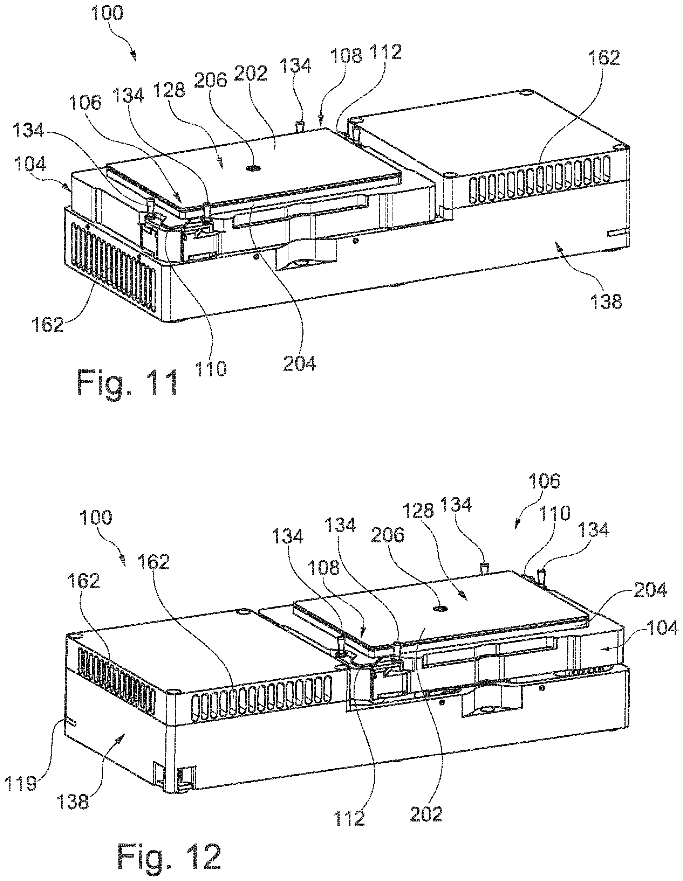

**Figur 11** zeigt ein Laborgerät 100 gemäß einem anderen exemplarischen Ausführungsbeispiel der Erfindung. **Figur 12** zeigt eine andere Darstellung des Laborgeräts 100 gemäß Figur 11. Dieses Ausführungsbeispiel zeigt eine alternative Bauform von Lufteinlass und Luftauslass (die auch ausgetauscht werden können, d.h. andersherum gestaltet werden können) in Form von Kühlöffnungen 162 in einem Gehäuse des Trägerkörpers 138. Bei dem Laborgerät 100 gemäß Figur 11 und Figur 12 ist die Grundfläche (und insbesondere die Länge) vergrößert, um die Bauhöhe zu reduzieren. Vorteilhaft kann das Laborgerät 100 gemäß Figur 11 und Figur 12 somit für Systeme mit begrenzter Bauhöhe eingesetzt werden. Alternativ kann auch die Breite oder eine andere Dimension des Laborgeräts 100 geändert werden.

**Figur 13** zeigt eine Unteransicht eines Grundbauteils 104 eines Laborgeräts 100 mit Positionierstiften 134 in zwei Eckbereichen gemäß einem exemplarischen Ausführungsbeispiel der Erfindung. Anschaulich stellt Figur 13 eine unterseitige Ansicht eines Schütteltablars mit zwei Positionieranschlägen 106, 108 dar.

Insbesondere veranschaulicht Figur 13 einen Fixiermechanismus 114 zum Fixieren eines Objektträgers 102 auf dem Grundbauteil 104 zwischen dem ersten Positionieranschlag 106 und dem zweiten Positionieranschlag 108 mittels Bewegens der beiden Positionieranschläge 106, 108. Darüber hinaus sind in Figur 13 Details einer Betätigungseinrichtung 116 zum Betätigen des Fixiermechanismus 114 zum Überführen der beiden Positionieranschläge 106, 108 zwischen einem den Objektträger 102 fixierenden Betriebszustand und einem den Objektträger 102 freigebenden Betriebszustand zu erkennen.

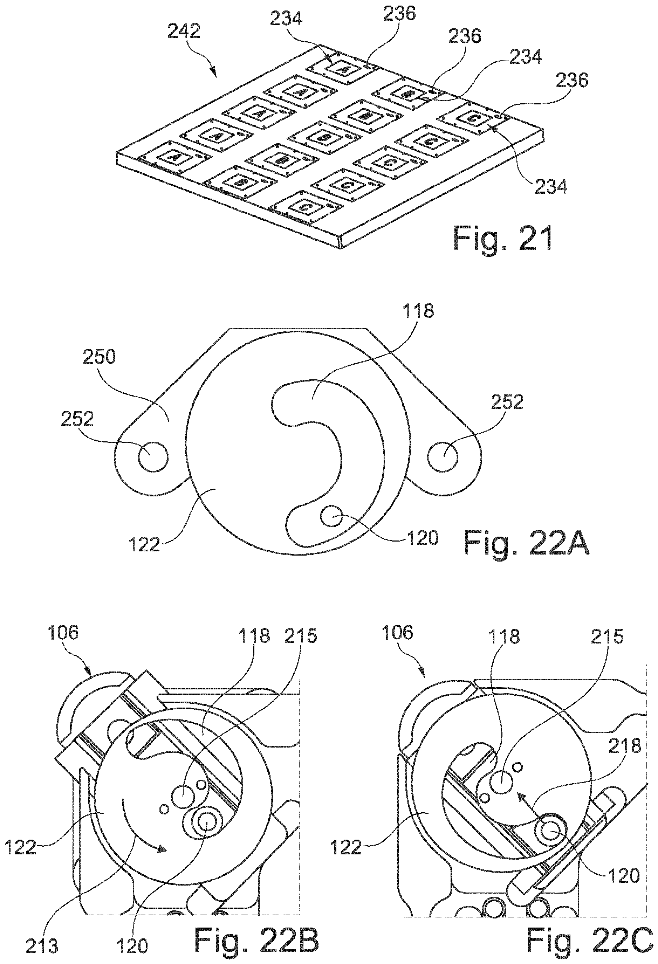

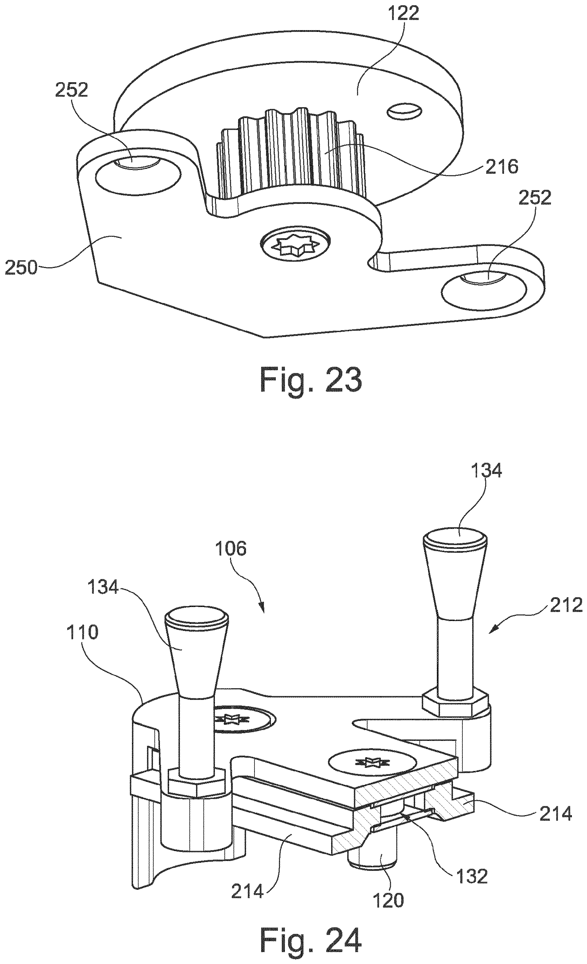

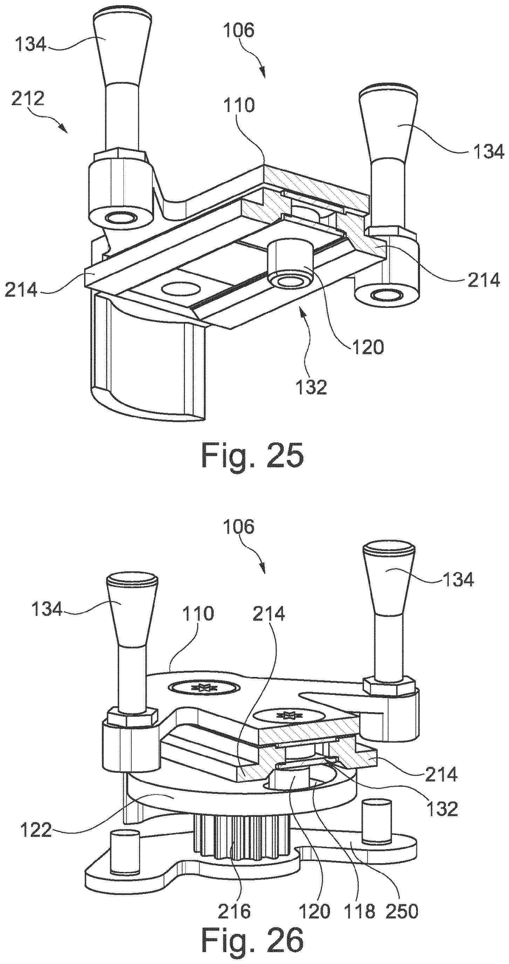

Auch bezugnehmend auf Figur 22A bis Figur 28 weist der Fixiermechanismus 114 zwei in einer jeweiligen Führungsaussparung 118 einer jeweiligen Führungsscheibe 122 führbare Führungskörper 120 in Form von Führungsstiften auf. Die Führungsaussparung 118 ist als gekrümmte Nut in die kreisförmige Führungsscheibe 122 eingebracht. Die beiden genannten Führungsscheiben 122 sind in einander gegenüberliegenden Ecken 110, 112 des im Wesentlichen rechteckförmigen Grundbauteils 104 drehbar gelagert, in denen auch die Positionieranschläge 106 bzw. 108 angeordnet sind. Die Führungskörper 120 bilden gleichzeitig Bestandteile eines in Figur 24 und Figur 25 gezeigten starren Bauteils 212, das auch ein Paar Positionierstifte 134 eines zugeordneten Positionieranschlags 106, 108 sowie Führungsschienen 214 zum geradlinigen geführten Bewegen des Bauteils 212 entlang einer Linearführung 132 aufweist. Anschaulich bildet ein jeweiliges Bauteil 212 einen jeweiligen Positionieranschlag 106 oder 108.

Die Konfiguration des Fixiermechanismus 114 ist gemäß Figur 13 dergestalt, dass eine Betätigungskraft zum Betätigen der Betätigungseinrichtung 116 zum Überführen des Fixiermechanismus 114 in den den Objektträger 102 freigebenden Betriebszustand kleiner ist als eine von dem fixierten und beispielsweise einer Mischbewegung ausgesetzten Objektträger 102 auszuübende Lösekraft zum Lösen des fixierten Objektträgers 102. Die Lösekraft kann also eine Kraft sein, die aus einer Mischbewegung des Objektträgers 102 resultiert und nicht zum Herauslösen des Objektträgers 102 aus dem Laborgerät 100 führen soll. Der beschriebene Kraftübertragungsmechanismus der Fixiereinrichtung 114 kombiniert eine kraftarme Betätigbarkeit der Betätigungseinrichtung 116 mit einer starken Selbsthemmung gegen ein unerwünschtes Freischütteln eines fixierten Objektträgers 102 während des Mischbetriebs. Anschaulich ist die Betätigungseinrichtung 116 also mit einer mäßigen Betätigungskraft zum Verschieben der Positionieranschläge 106, 108 betätigbar, wohingegen ein Freirütteln eines zwischen den Positionieranschlägen 106, 108 eingeklemmten Objektträgers 102 aufgrund der beschriebenen Selbsthemmung nur mit außerordentlich hohen Kräften möglich ist. Nun bezugnehmend auf Figur 22A bis Figur 22C führt ein Betätigen der Betätigungseinrichtung 116 zu einer Verschiebung des Führungskörpers 120 entlang der Führungsaussparung 118, was kraftarm möglich ist (siehe Figur 22B). Hingegen führt eine Krafteinwirkung eines eingeklemmten und einer Mischbewegung unterzogenen Objektträgers 102 zu einer Kraft von Führungskörper 120 in der Führungsaussparung 118, allerdings ohne Betätigung der Betätigungseinrichtung 116 nicht zu einer Drehung der Führungsscheibe 122 und damit nicht zu einer Bewegung der Positionieranschläge 106, 108 (siehe Figur 22C). Kraftpfeil 218 in Figur 22C steht dann nämlich annähernd quer zu der Positionieraussparung 118. Diese asymmetrische Kraftübertragungslogik führt zu einer bequemen Betätigung der Betätigungseinrichtung 116 und simultan zu der beschriebenen Selbsthemmung bzw. einem intrinsischen Schutz des Laborgeräts 100 vor einem unerwünschten Lösen eines Objektträgers 102 von den Positionieranschlägen 106, 108.

Wiederum bezugnehmend auf Figur 13 sind die beiden gemäß Figur 22A ausgebildeten Führungsscheiben 122 in den gegenüberliegenden ersten und zweiten Ecken 110, 112 des Grundbauteils 104 angeordnet. Somit ist jede der beiden Führungsaussparungen 118 in einer jeweiligen Führungsscheibe 122 angeordnet ist, welche Führungsscheiben 122 in den einander gegenüberliegenden ersten und zweiten Ecken 110, 112 des Grundbauteils 104 angeordnet sind. In einer dritten Ecke 146 und in einer vierten Ecke 148 des Grundbauteils 104 ist jeweils eine drehbar gelagerte Umlenkrolle 124 angeordnet.

Mit Vorteil weist der Fixiermechanismus 114 einen ringförmig geschlossenen Kraftübertragungsmechanismus 130 auf, der hier als ringförmig geschlossener Zahnriemen ausgebildet ist. Besagter Zahnriemen erstreckt sich im Wesentlichen rechteckig mit abgerundeten Ecken entlang des gesamten Umfangs des Grundbauteils 104 und verläuft durchgehend entlang eines äußeren Rands des Grundbauteils 104. Hierbei greifen im montierten Zustand gemäß Figur 13 Zähne des Zahnriemens in ein jeweiliges Zahnrad 216 (das auch als Zahnriemenscheibe oder Synchronriemenscheibe bezeichnet werden kann) ein, das starr mit einer jeweiligen Führungsscheibe 122 verbunden ist (siehe Figur 23). Auf diese Weise kann eine an der Betätigungseinrichtung 116 ausgeübte Betätigungskraft mittels Verklemmens der Betätigungseinrichtung 116 an dem Zahnriemen oder mittels an der Betätigungseinrichtung 116 vorhandenen Zähnen (nicht gezeigt) auf besagten Zahnriemen übertragen werden, der aufgrund seiner ringförmig geschlossenen Gestalt dadurch ein Stück im Uhrzeigersinn oder entgegen dem Uhrzeigersinn verdreht wird. Das Verdrehen des Zahnriemens wirkt auf die Zahnräder 216 der Führungsscheiben 122 sowie auf Zahnräder (nicht gezeigt) der Umlenkrollen 124 ein. Ein Drehen der Zahnräder 216 der Führungsscheiben 122 bewirkt eine Kraft auf die verschiebbar entlang der Führungsaussparungen 118 beweglichen Führungskörper 120. Aufgrund der Linearführung 132 bzw. der Führungsschienen 214 der Bauteile 212 ist den Bauteilen 212 nur eine geradlinige Bewegung radial nach außen oder radial nach innen ermöglicht. Da die Führungskörper 120 einen Teil der starren Bauteile 212 bilden, führt daher eine Betätigung der Betätigungseinrichtung 116 zu einer Bewegung der Bauteile 212 geradlinig nach innen oder außen. Auf diese Weise führt eine Betätigung der Betätigungseinrichtung 116 zu einer Bewegung der Positionieranschläge 106 bzw. 108 geradlinig nach innen oder außen.

Wie in Figur 13 gut erkennbar ist, ist der Fixiermechanismus 114 entlang eines gesamten Rands und Umfangs des Grundbauteils 104 unter Freilassung eines von dem Umfang umgebenen Zentralbereichs 126 des Grundbauteils 104 angeordnet. Ferner ist der sich entlang des gesamten Umfangsrands des Grundbauteils 104 erstreckende ringförmig geschlossene Fixiermechanismus 114 entlang einer dem Objektträger 102 abgewandten Unterseite des Grundbauteils 104 angeordnet.

Hinsichtlich der Betätigungseinrichtung 116 ist noch zu sagen, dass diese mit einem Vorspannelement 198 in Form eines Paars von Schraubenfedern (oder auch nur einer Schraubenfeder) gekoppelt ist, das zum Vorspannen der Betätigungseinrichtung 116 entsprechend einem den Objektträger 102 fixierenden Betriebszustand des Fixiermechanismus 114 ausgebildet ist. Alternativ kann für das Vorspannelement 198 auch eine Torsionsfeder, ein Magnet oder ein anderes Bauteil eingesetzt werden, das eine entsprechend gerichtete Vorspannkraft generiert. Anders ausgedrückt spannt die Betätigungseinrichtung 116 gemeinsam mit dem Vorspannelement 198 einen Objektträger 102 in einen zwischen den Positionieranschlägen 106, 108 fixierten Zustand vor, sodass ein Lösen des Objektträgers 102 von dem Laborgerät 100 eine aktive Kraftausübung auf die Betätigungseinrichtung 116 erfordert. Dies erhöht die Betriebssicherheit des Laborgeräts 100 und vermeidet ein unerwünschtes Lösen des Objektträgers 102. Nach Aufsetzen eines Objektträgers 102 auf das Grundbauteil 104 reicht es aus, dass ein Benutzer die zuvor betätigte Betätigungseinrichtung 116 loslässt, wodurch das Vorspannelement 198 die linear beweglichen Positionieranschläge 106, 108 nach innen zieht. Dies wiederum bewirkt ein Festklemmen des Objektträgers 102.

Höchst vorteilhaft erstreckt sich der Fixiermechanismus 114 ausschließlich entlang des Außenumfangs des Grundbauteils 104 und lässt den Zentralbereich 126 des Grundbauteils 104 frei. Anders ausgedrückt enthält weder der Fixiermechanismus 114 noch die Betätigungseinrichtung 116 Komponenten außerhalb des Außenumfangs des Grundbauteils 114 bzw. solche, die sich in den Zentralbereich 126 des Grundbauteils 104 hinein erstrecken. Daher ist der Zentralbereich 126 des Grundbauteils 104 frei für andere Aufgaben bzw. Funktionskomponenten verwendbar.

Figur 13 zeigt exemplarisch eine Wechselwirkungseinrichtung 128, die in dem freigelassenen Zentralbereich 126 des Grundbauteils 104 angeordnet ist. Die Wechselwirkungseinrichtung 128 kann sich also durch den freigelassenen Zentralbereich 126 des Grundbauteils 104 hindurch wirkend erstrecken. Im dargestellten Ausführungsbeispiel ist die Wechselwirkungseinrichtung 128 ein Kühlkörper 164 zum Kühlen eines Objektträgers 102 oder eines Temperieradapters 202, wie oben beschrieben. Wie gezeigt, kann der Kühlkörper 164 einen massiven Plattenabschnitt aufweisen, der mit der thermischen Kopplungsplatte 166 thermisch gekoppelt ist. Ferner kann der Kühlkörper 164 eine Vielzahl von Kühlfinnen aufweisen, die sich ausgehend von dem Plattenabschnitt erstrecken und zwischen denen Kanäle zum Durchleiten einer Luftströmung bzw. von Kühlgas gebildet sind. Natürlich sind alternativ andere Wechselwirkungseinrichtungen 128 möglich, zum Beispiel eine optische Apparatur zum optischen Wechselwirken mit einem Medium in dem Objektträger 102 oder ein Magnetmechanismus zum magnetischen Wechselwirken mit einem Medium in dem Objektträger 102 (nicht dargestellt).

Figur 13 zeigt also das als Objektlagervorrichtung und Schütteltablar dienende Grundbauteil 104 von unten in einer Ausführungsform mit zwei Positionieranschlägen 106, 108. Das Grundbauteil 104 nimmt die beschriebenen Bauteile auf und kann gleichzeitig einen Kühlkörper 164 für eine Temperiervorrichtung beinhalten.

Die Führungsscheiben 122 fungieren als drehbar gelagerte Kurvenscheiben zur Führung bzw. Linearbewegung der Positionieranschläge 106, 108. Jede der Führungsscheiben 122 enthält eine bahnförmige Nut als Führungsaussparung 118, in die ein als runder Führungsstift ausgebildeter Führungskörper 120 eingreift. Letzterer ist an den linear gelagerten Positionieranschlägen 106, 108 starr befestigt. Die drehbar gelagerten Umlenkrollen 124 ermöglichen ein geschlossenes Ausführen des Synchronriemens als Kraftübertragungsmechanismus 130. Besagter Synchronriemen kann als Zahnriemen ausgebildet sein und ermöglicht eine synchrone Bewegung der Positionieranschläge 106, 108 gemeinsam.

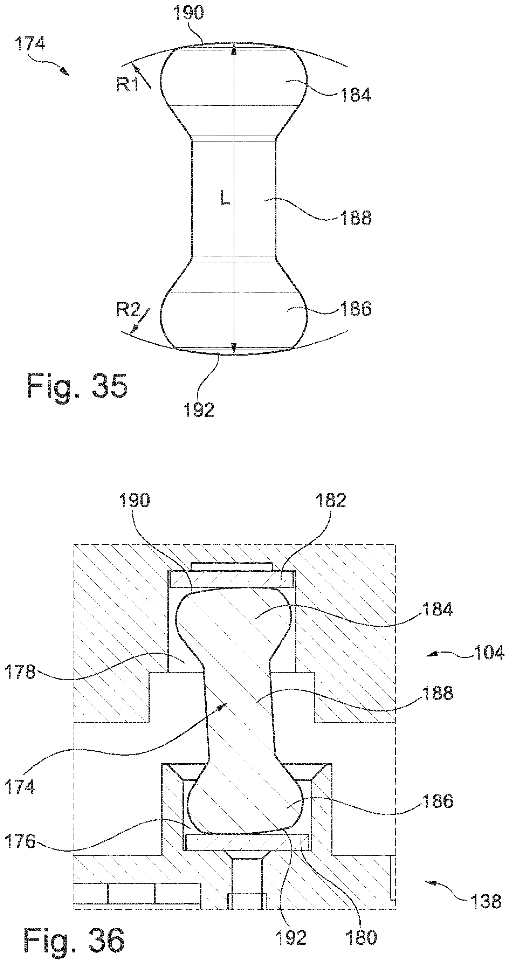

Ferner enthält das Grundbauteil 104 an seiner Unterseite (im dargestellten Ausführungsbeispiel vier) Lager 220 für Pendelstützen 174 (vergleiche Figur 35 und Figur 36), die vorteilhaft für eine axiale Lagerung in einer Ebene eingesetzt werden können.

Darüber hinaus zeigt Figur 13 zwei Kugellager 222, in die im zusammengesetzten Zustand des Laborgeräts 100 ein erster Exzenter 152 (oder eine erste Exzenterwelle) bzw. ein zweiter Exzenter 154 (oder eine zweite Exzenterwelle) eingreifen (vergleiche Figur 31). Anschaulich können die Kugellager 222 dazu dienen, das Grundbauteil 104 bzw. das Schütteltablar gegenüber dem ortsfesten Gestell in Form des Trägerkörpers 138 auf einer Kreisbahn in einer Ebene auszulenken.

Gemäß Figur 13 ist die Betätigungseinrichtung 116 als linear gelagerter Schieber zur manuellen oder automatischen Betätigung der Entriegelung der Probenträgerplatte oder eines anderen Objektträgers 102 ausgebildet. Wenn keine Kraft (manuell oder durch einen Aktor) auf diesen Schieber wirkt, wird dieser durch das als Federn ausgebildete Vorspannelement 198 in seine Ausgangsstellung zurückbewegt. Die Betätigungseinrichtung 116 ist mit dem als Synchronriemen ausgebildeten Kraftübertragungsmechanismus 130 verbunden, der eine Drehbewegung der Führungsscheiben 122 erzeugt, wodurch wiederum die Positionieranschläge 106, 108 linear verschoben werden. Genauer gesagt ist das Vorspannelement 198 gemäß Figur 13 als Zugfeder zur Bewegung des linear gelagerten Schiebers und damit der Positionieranschläge 106, 108 in Richtung Objektträger 102 (d.h. zur Vorspannung in einen Verriegelungs-Zustand) ausgebildet.

Darüber hinaus können Kabel (insbesondere Flachbandkabel, siehe Bezugszeichen 121) zur elektrischen Verbindung von Grundbauteil 104 und Trägerkörper 138 implementiert werden. Dadurch können insbesondere Peltierelemente (oder auch ein anderes Heizelement) mit Strom versorgt werden und eine optionale Sensorik (insbesondere Temperatursensoren) angebunden werden.

**Figur 14** zeigt eine Querschnittsansicht des Grundbauteils 104 gemäß Figur 13. Genauer gesagt zeigt Figur 14 eine Schnittansicht durch den Kühlkörper 164 bzw. die Kühlrippen (mittig).

Bezugszeichen 224 zeigt ein hier als Peltierelement ausgebildetes Temperierelement zum Temperieren (insbesondere Heizen oder Kühlen) der thermischen Koppelplatte 166 (die auch als thermisches Kontaktbauteil bezeichnet werden kann). Mit dem Temperierelement 224 kann ein austauschbarer Temperieradapter 202 thermisch verbunden werden, der wiederum Laborgefäße temperieren kann.

Ferner kann ein Temperatursensor 226 in der auch als Kontaktbauteil bezeichneten thermischen Koppelplatte 166 integriert werden. Alternativ oder ergänzend kann in dem austauschbaren Temperieradapter 202 und/oder in zu handhabenden Probengefäßen oder Proben ein Temperatursensor 226 vorgesehen sein. Darüber hinaus kann ein Temperatursensor 226 in dem Kühlkörper 164 oder in dem Schütteltablar vorgesehen sein, was für eine effiziente Regelung vorteilhaft ist.

Bezugszeichen 228 bezeichnet eine thermische Isolierung zwischen der thermischen Kopplungsplatte 166 und dem Kühlkörper 164.

Der thermisch isolierende Rahmen 204 dient zur thermischen Isolierung der thermischen Kopplungsplatte 166 und des Kühlkörpers 164. Außerdem kann der thermisch isolierende Rahmen 204 die Aufnahme seitlicher Kräfte übernehmen, um eine Übertragung von Vibrationen in einer horizontalen Ebene auf das hier als Peltierelement ausgebildete Temperierelement 224 zu reduzieren.

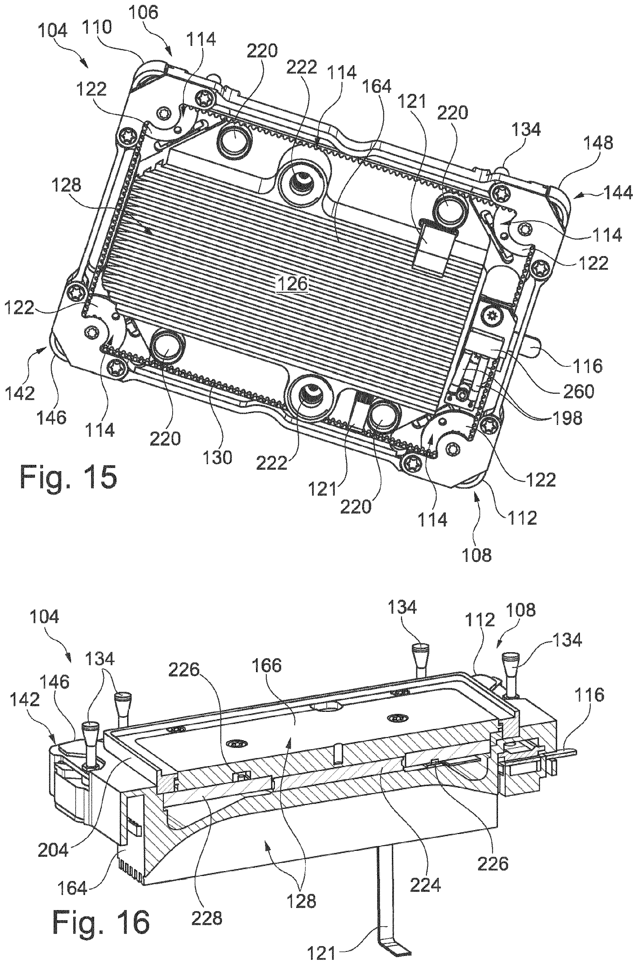

**Figur 15** zeigt eine Unteransicht eines Grundbauteils 104 eines Laborgeräts 100 mit Positionierstiften 134 in vier Eckbereichen gemäß einem anderen exemplarischen Ausführungsbeispiel der Erfindung. Somit unterscheidet sich das Ausführungsbeispiel gemäß Figur 15 von jenem gemäß Figur 13 insbesondere dadurch, dass anstelle der Umlenkrollen 124 an zwei Ecken 146, 148 des Grundbauteils 104 gemäß Figur 15 in jedem Eck 110, 112, 146, 148 ein bewegbarer Positionieranschlag 106, 108, 142, 144 angeordnet ist. Der als Zahnriemen ausgebildete Kraftübertragungsmechanismus 130 ist auch gemäß Figur 15 entlang eines Außenumfangs des Grundbauteils 104 angeordnet und wird an jeder der vier Ecken 110, 112, 146, 148 des Grundbauteils 104 durch ein jeweiliges Zahnrad 216 einer jeweiligen Führungsscheibe 122 um jeweils 90° umgelenkt.

**Figur 16** zeigt eine Querschnittsansicht des Grundbauteils 104 gemäß Figur 15. Die Schnittansicht gemäß Figur 16 entspricht jener gemäß Figur 14 mit dem Unterschied, dass gemäß Figur 16 an allen vier Ecken 110, 112, 146, 148 ein Positionieranschlag 106, 108, 142, 144 angeordnet ist.

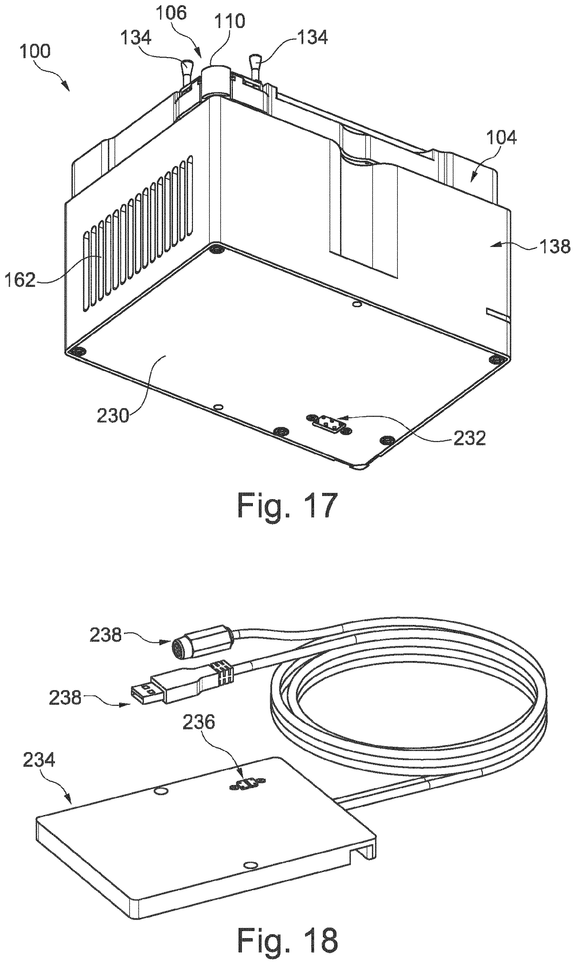

**Figur 17** zeigt eine Unteransicht eines Laborgeräts 100 gemäß einem anderen exemplarischen Ausführungsbeispiel der Erfindung, wobei eine bodenseitige Verbindungsplatte 230 des Trägerkörpers 138 mit einem elektrischen Konnektor 232 ausgestattet ist. Der Konnektor 232 weist Pogo-Pins auf, d.h. federnde elektrische Kontakte. Mittels des Konnektors 232 kann das Laborgerät 100 mit Strom versorgt werden und kommunizierfähig gekoppelt werden (beispielsweise gemäß RS232, USB oder einer anderen Kommunikationsschnittstelle).

**Figur 18** zeigt eine Dockingstation 234 für das Laborgerät 100 gemäß Figur 17. Die Dockingstation 234 hat eine elektrische Schnittstelle 236, die mit dem Konnektor 232 an der Unterseite des Laborgeräts 100 gekoppelt werden kann. Ferner ist die Dockingstation 234 mit Kabeln 238 versehen. Die in Figur 18 dargestellte Baugruppe kann beispielsweise in ein übergeordnetes System eingebaut werden, sodass Laborgeräte 100 dann schnell und ohne Verkabelung ausgetauscht werden können. Dies bringt den Vorteil eines schnellen Austauschs im Fehlerfall oder bei Wartung mit sich, und zwar ohne Geräteausfall.

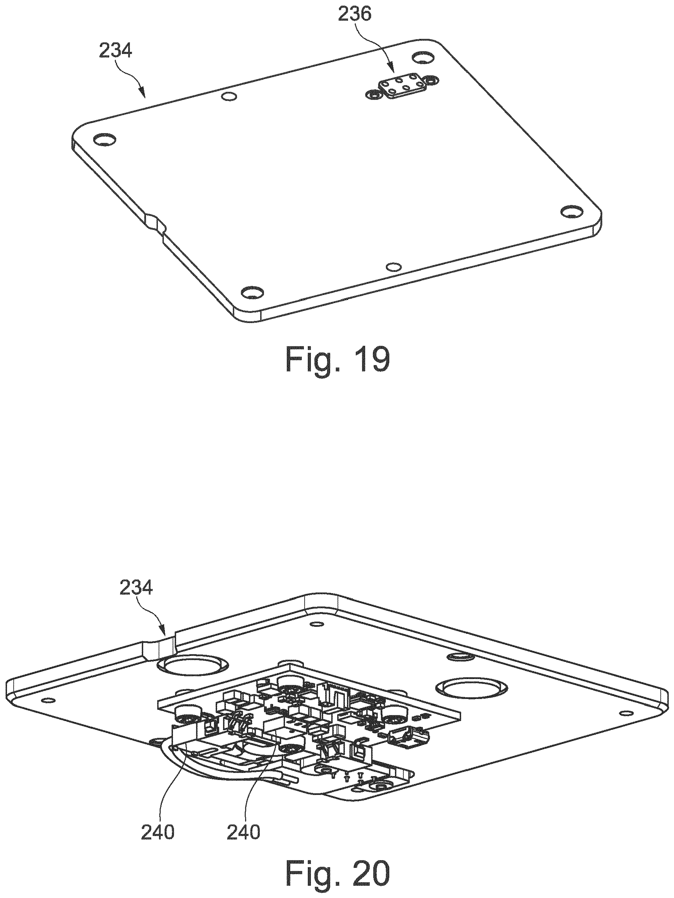

**Figur 19** zeigt eine Oberansicht und **Figur 20** zeigt eine Unteransicht einer Dockingstation 234 gemäß einem anderen exemplarischen Ausführungsbeispiel der Erfindung. Wie anhand von Figur 20 erkennbar ist, kann die elektrische Schnittstelle 236 an der Oberseite der Dockingstation 234 elektrisch durch eine Platte hindurch mit einer oder mehreren elektronischen Komponenten 240 gekoppelt sein, die an einer Innenseite der Dockingstation 234 montiert werden können.

**Figur 21** zeigt eine Grundplatte 242 zum Montieren mehrerer Laborgeräte 100 gemäß einem exemplarischen Ausführungsbeispiel der Erfindung. In dem dargestellten Beispiel können auf der Grundplatte 242 fünfzehn Montagebasen in Form von Dockingstationen 234 gemäß Figur 19 und Figur 20 angeordnet sein, die mit elektrischen Schnittstellen 236 zum Ausbilden einer Steckverbindung mit Konnektoren 232 eines jeweiligen Laborgeräts 100 ausgestattet sind. Die Laborgeräte 100 mit ihren Konnektoren 232 (vorzugsweise ausgerüstet mit Pogo-Pins) und ein jeweiliger korrespondierender Konnektor in Form einer elektrischen Schnittstelle 236 auf der Grundplatte 242 bilden somit ein übergeordnetes Gerät für Stromversorgung und Kommunikation. Dies ermöglicht einen schnellen Austausch der Laborgeräte 100 (beispielsweise im Falle eines Defekts bzw. einer Wartung).

Wie anhand von Figur 17 bis Figur 21 erkennbar ist, kann ein Laborgerät 100 gemäß einem Ausführungsbeispiel selbst ohne externe Kabel realisiert werden, sondern stattdessen einen Konnektor 232 zur Verbindung mit einer Stromversorgung und einer Kommunikationseinrichtung aufweisen. Ein solcher Konnektor 232 kann zum Beispiel in eine Grundplatte 242 (vergleiche Figur 21) eines übergeordneten Systems integriert werden, insbesondere darauf aufgesteckt werden. Beispielsweise kann ein solcher Konnektor 232 mit Pogo-Pin Kontakten versehen werden.

In einem anderen Ausführungsbeispiel des Laborgeräts 100 ist dieses mit Kabeln für Stromversorgung und Kommunikation ausgestattet.

**Figur 22A** zeigt eine Draufsicht einer Führungsscheibe 122 eines Fixiermechanismus 114 eines Laborgeräts 100 gemäß einem exemplarischen Ausführungsbeispiel der Erfindung. **Figur 23** zeigt eine dreidimensionale Ansicht der Führungsscheibe 122 gemäß Figur 22A.

Darüber hinaus zeigt **Figur 22B** eine Führungsscheibe 122 gemäß Figur 22A in einer Einbausituation und in einem Betriebszustand, in dem durch Betätigen einer Betätigungseinrichtung 116 die Führungsscheibe 122 um einen Drehpunkt 215 gedreht wird bzw. worden ist (siehe Drehpfeil 213). **Figur 22C** zeigt die Führungsscheibe 122 in der Einbausituation gemäß Figur 22B, aber in einem anderen Betriebszustand, in dem keine Betätigung der Betätigungseinrichtung 116 und daher keine Drehung der Führungsscheibe 122 erfolgt bzw. erfolgt ist.

Bei Einwirkung einer Kraft am Führungsschlitten (insbesondere erzeugt durch einen an dem Grundbauteil 104 montierten Objektträger 102 während des Mischbetriebs) kann auch eine radial nach außen gerichtete Kraft entstehen (siehe Bezugszeichen 218 in Figur 22C). Ohne Betätigung der Betätigungseinrichtung 116 erfolgt jedoch keine Drehung der Führungsscheibe 122, sodass trotz der Kraft entsprechend Kraftpfeil 218 keine Bewegung des Führungskörpers 120 resultiert, da die Kraft auf den zum Beispiel als Stift ausgebildeten Führungskörper 120 in Richtung des Drehpunktes 215 im Zentrum der Führungsscheibe 122 und damit quer bzw. fast senkrecht zur Führungsaussparung 118 wirkt. Somit erfolgt gemäß Figur 22B eine Betätigung der Betätigungseinrichtung 116 und dadurch eine Drehung der Führungsscheibe 122, was leicht und kraftarm eine Verschiebung des Führungskörpers 120 in der Führungsaussparung 118 bewirkt. Im Gegensatz dazu bewirkt gemäß Figur 22C eine Kraft auf den Führungskörper 120 allein keine Drehung der Führungsscheibe 122 und daher keine Bewegung des Positionieranschlags 106 nach außen. Die Kraft wirkt auf den Führungskörper 120 nahezu senkrecht zur Führungsaussparung 118. Aus diesem Grund ist durch diese Kraft auf den Führungskörper 120 keine Drehung der der Führungsscheibe 122 zu erzeugen. Eine allenfalls äußerst geringfügige Drehung der Führungsscheibe 122 kann allenfalls eine sehr geringfügige Verschiebung des Systems gemäß Bezugszeichen 120, 106, 108 generieren. Auf diese Weise kann eine kraftarme Betätigbarkeit der Betätigungseinrichtung 116 gemäß Figur 22B mit einer hohen Selbsthemmung ohne eine solche Betätigung (siehe Figur 22C) kombiniert werden.

Wiederum bezugnehmend auf Figur 22A kann eine solche Führungsscheibe 122, die als Kurvenscheibe mit Führungsnut ausgebildet sein kann, beispielsweise in das in Figur 13 dargestellte Grundbauteil 104 eingebaut sein. Figur 22A zeigt eine Ansicht einer Baugruppe mit einer solchen Führungsscheibe 122 mit drehbarer Lagerung von oben. Anhand Figur 22A ist zu erkennen, dass ein Führungskörper 120, der als Führungsstift ausgebildet ist, in einer gekrümmten bahnförmigen Führungsaussparung 118 verfahren werden kann. Die Führungsaussparung 118 ist als Nut in einer Hauptfläche der Führungsscheibe 122 gebildet. Im Einbauzustand ist die Führungsscheibe 122 drehbar an dem Grundbauteil 104 gelagert. Der in Figur 13 dargestellte Fixiermechanismus 114, von dem das Bauteil gemäß Figur 22A einen Teil bildet, ist vorzugsweise derart ausgebildet, dass bei Ausüben einer rüttelnden Lösekraft durch einen eingeklemmten Objektträger 102 während eines Mischbetriebs eine Verschiebekraft auf den Führungskörper 120 quer zu der Führungsaussparung 118 wirkt (siehe Bezugszeichen 218 in Figur 22C). Ferner ist der Fixiermechanismus 114 derart ausgebildet, dass bei Betätigen der Betätigungseinrichtung 116 zum Überführen des Fixiermechanismus 114 zwischen dem den Objektträger 102 freigebenden Betriebszustand und dem den Objektträger 102 in Eingriff nehmenden Betriebszustand eine Verschiebekraft auf den Führungskörper 120 entlang der Führungsaussparung 118 wirkt (vergleiche Figur 22B).

Figur 22A stellt also die als Führungsnut ausgebildete Führungsaussparung 118 der als Kurvenscheibe ausgebildeten Führungsscheibe 123 dar, die drehbar gegenüber der Objektlagervorrichtung bzw. dem Schütteltablar des Grundbauteils 104 gelagert ist. In die Führungsaussparung 118 ragt der als Führungsstift ausgebildete Führungskörper 120, der einen starren Teil eines jeweiligen Positionieranschlags 106 oder 108 bildet. Der Führungskörper 120 und/oder die Führungsscheibe 122 kann rund bzw. scheibenförmig sein, kann aber auch jede andere Form haben. Figur 23 zeigt also die als Kurvenscheibe ausgebildete Führungsscheibe 122 mit einem starr daran angebrachten Zahnrad 216. Die Führungsscheibe 122 kann samt Zahnrad 216 drehbar gelagert an einem plattenförmigen Basiskörper 250 angebracht sein. Der Basiskörper 250 kann mit einem oder mehreren Durchgangslöchern 252 zum Verschrauben der in Figur 23 dargestellten Baugruppe an einem Gehäuse des Grundbauteils 104 versehen sein.

**Figur 24** zeigt eine dreidimensionale Ansicht eines Positionieranschlags 106 gemäß einem exemplarischen Ausführungsbeispiel der Erfindung. **Figur 25** zeigt eine andere dreidimensionale Ansicht des Positionieranschlags 106 gemäß Figur 24.

Die in Figur 24 und Figur 25 dargestellte starre Baugruppe des Positionieranschlags 106 mit Lineargleitlager bzw. Linearführung 132 umfasst auch den hier als Stift ausgebildeten Führungskörper 120, der im Betrieb eines Laborgeräts 100 in die Führungsaussparung 118 der Führungsscheibe 122 gemäß Figur 22A eingreift.

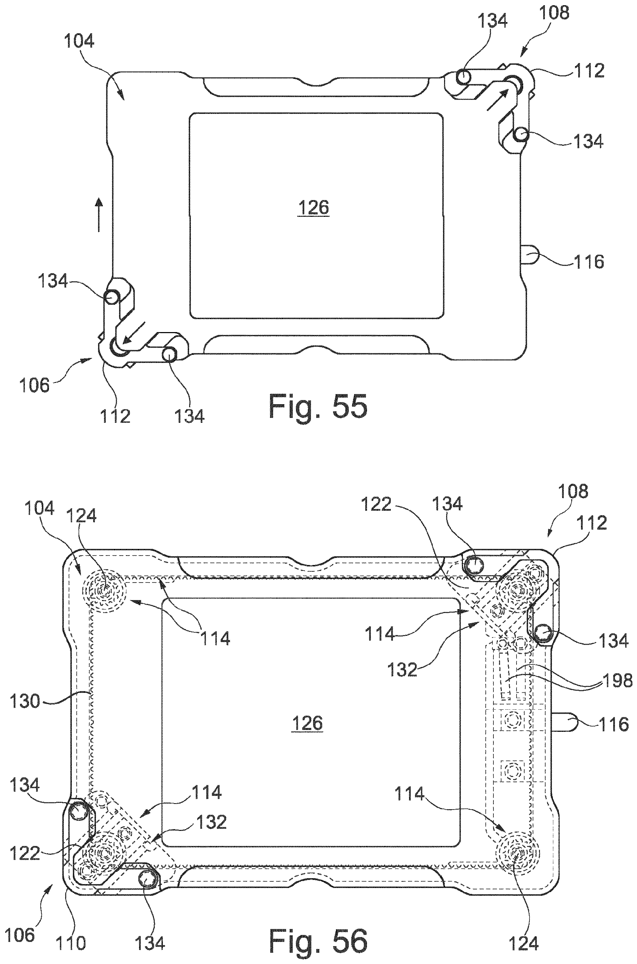

Der dargestellte erste Positionieranschlag 106 ist beim Überführen des Laborgeräts 100 zwischen einem einen Objektträger 102 fixierenden Betriebszustand und einem den Objektträger 102 freigebenden Betriebszustand entlang der Linearführung 132 verschiebbar, die in einer korrespondierenden Führungsaufnahme eines Gehäuses des Grundbauteils 104 längsverschiebbar aufgenommen werden kann (vergleiche zum Beispiel Figur 56). Der Führungskörper 120 bildet also einen Positionierstift, der zum Beispiel über eine Verschraubung mit der dem linear verschiebbaren Positionieranschlag 106 entsprechenden Baugruppe gemäß Figur 25 und Figur 26 verbunden ist. Alternativ kann eine solche Verbindung auch anders ausgeführt werden. Anschaulich dient der Führungskörper 120 als Führungsstift, der in die nutartige Führungsaussparung 118 der Führungsscheibe 122 eingreift und eine lineare Verschiebung (aufgrund der Zwangsführung des Bauteils gemäß Figur 24 und Figur 25 in einer entsprechend geformten Aussparung im Gehäuse des Grundbauteils 104) des Positionieranschlags 106 gewährleistet.

**Figur 26** zeigt eine dreidimensionale Ansicht des Positionieranschlags 106 gemäß Figur 24 samt Führungsscheibe 122 gemäß Figur 23. Anschaulich stellt Figur 26 also eine Ansicht der miteinander wirkverbundenen Baugruppe Positionieranschlag 106 gemäß Figur 24 und Figur 25 und der Baugruppe Kurvenscheibe gemäß Figur 22A und Figur 23 ohne Objektlagervorrichtung bzw. Schütteltablar dar. Figur 26 zeigt also das Zusammenwirken von Führungsscheibe 122 und Positionieranschlag 106, das durch Eingreifen des Führungskörpers 120 des Positionieranschlags 106 in die Führungsaussparung 118 in der Führungsscheibe 122 erreicht wird. Im Betrieb wird die Führungsscheibe 122 drehbar gelagert. Hierfür wird Basiskörper 250 als Lagerbock der Führungsscheibe 122 an einem Gehäuse des Grundbauteils 104 verschraubt oder in anderer Form verbunden. Es ist auch möglich, die Führungsscheibe 122 direkt in Grundbauteil 104 der Objektlagervorrichtung bzw. des Schütteltablars drehbar zu lagern.

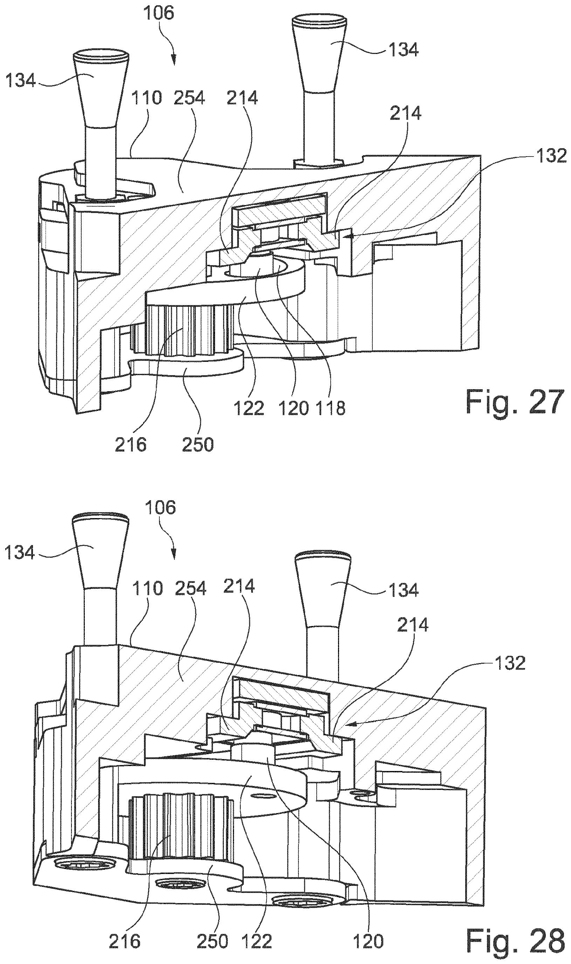

**Figur 27** zeigt die Anordnung gemäß Figur 26 in einem Gehäuse 254 eines Grundbauteils 104. **Figur 28** zeigt eine andere Ansicht der Anordnung gemäß Figur 27.

Das Gehäuse 254 des Grundbauteils 104 (auch als Schütteltablar bezeichnet) nimmt alle Bauteile gemäß Figur 22A bis Figur 26 auf und kann gleichzeitig eine Kühlkörperfunktion für eine Temperiervorrichtung erfüllen. Drehbar gegenüber dem Grundbauteil 104 gelagert ist die Führungsscheibe 122 mit als Führungsnut ausgebildeter Führungsaussparung 118. Der Positionieranschlag 106 ist in dem Gehäuse 254 des Grundbauteils 104 linear verschiebbar gelagert.

**Figur 29** zeigt eine dreidimensionale Ansicht eines Teils eines Laborgeräts 100 gemäß einem exemplarischen Ausführungsbeispiel der Erfindung. Genauer gesagt zeigt Figur 29 ein alternatives Ausführungsbeispiel der Positionierstifte 134. Gemäß Figur 29 haben die Positionierstifte 134 einen seitlich erweiterten Kopf mit ausgeprägtem kopfunterseitigen Profil. Dies führt vorteilhaft zu einer Verhinderung einer Bewegung eines mittels der Positionierstifte 134 fixierten Objektträgers 102 in vertikaler Richtung entgegen entsprechender Kräfte. Somit bietet die in Figur 29 dargestellte alternative Bauform der Positionierstifte 134 des jeweiligen Positionieranschlags 106, 108, etc. eine erhöhte Sicherheit in vertikaler Richtung.

**Figur 30** zeigt eine dreidimensionale Ansicht eines Teils eines Laborgeräts 100 gemäß einem anderen exemplarischen Ausführungsbeispiel der Erfindung. In Figur 30 ist noch ein anderes Ausführungsbeispiel der Positionierstifte 134 dargestellt, mit dem eine wirksame Verhinderung einer Bewegung in vertikaler Richtung entgegen entsprechender Kräfte erreicht werden kann. Wie auch gemäß Figur 29 haben die Positionierstifte 134 gemäß Figur 30 ein jeweiliges Rückhalteprofil 136, das ausgebildet ist, ein Lösen des Objektträgers 102 von dem Grundbauteil 104 in vertikaler Richtung zu verunmöglichen. Anschaulich verklemmen diese Positionierstifte 134 den Objektträger 102 nicht nur seitlich, sondern begrenzen dessen Bewegung auch in vertikaler Richtung, indem sie mit dem Rückhalteprofil 136 einen vertikalen Anschlag für eine Oberseite eines Objektträgers 102 bereitstellen.

Ein Fachmann wird anhand von Figur 29 und Figur 30 erkennen, dass weitere alternative Bauformen und Formgebungen der Positionierstifte 134 zum Erhöhen der Sicherheit in vertikaler Richtung möglich sind. Insbesondere können die Positionierstifte 134 auch nichtzylindrisch und/oder nichtrotationssymmetrisch ausgebildet sein, um das Laborgerät 100 an alternative Anforderungen, Objektträger 102 und Probengefäße anzupassen.

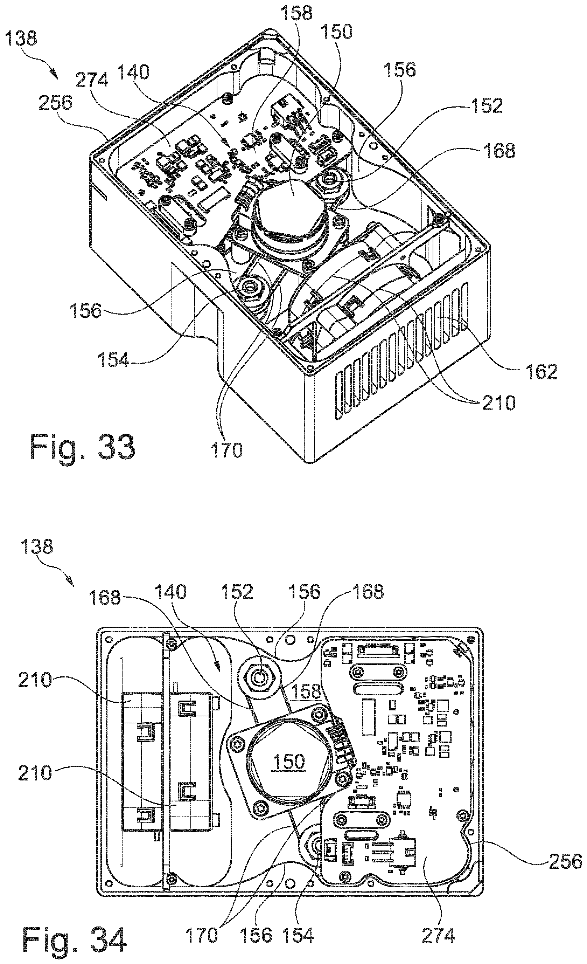

**Figur 31** zeigt einen Innenaufbau eines Trägerkörpers 138 oder Gestells eines Laborgeräts 100 gemäß einem exemplarischen Ausführungsbeispiel der Erfindung von oben. **Figur 32** zeigt eine Draufsicht des Innenaufbaus des Trägerkörpers 138 gemäß Figur 31. **Figur 33** zeigt ein freigelegtes Inneres des Trägerkörpers 138 gemäß Figur 31 und Figur 32 von unten. Figur 33 zeigt den Trägerkörper 138 als Baugruppe ortsfestes Gestell von unten nach Entfernen einer Abdeckplatte oder Verbindungsplatte 230. **Figur 34** zeigt eine Draufsicht des freigelegten Inneren des Trägerkörpers 138 gemäß Figur 33 von unten.

Der Trägerkörper 138 gemäß Figur 31 bis Figur 34 bildet einen unteren Teil eines Laborgeräts 100 zum Mischen eines Mediums in einem Objektträger 102 gemäß einem exemplarischen Ausführungsbeispiel der Erfindung. Nicht dargestellt in Figur 31 bis Figur 34 ist das auf dem Trägerkörper 138 anzuordnende und zum Mischen gegenüber dem Trägerkörper 138 bewegbare Grundbauteil 104 zum Aufnehmen des Objektträgers 102 (siehe zum Beispiel Figur 13). Wiederum bezugnehmend auf Figur 31 bis Figur 34 ist an dem Trägerkörper 138 ein Mischantriebsmechanismus 140 zum Bereitstellen einer Antriebskraft zum Mischen von Medium in dem Objektträger 102 auf dem Grundbauteil 104 bereitgestellt.

Der Mischantriebsmechanismus 140 umfasst eine Antriebseinrichtung 150, die hier als Elektromotor ausgebildet ist. Als Antriebseinrichtung 150 kann ein Antriebsmotor eingesetzt werden, zum Beispiel ein bürstenloser Gleichstrommotor. Ferner enthält der Mischantriebsmechanismus 140 einen ersten Exzenter 152 (auch als erste Exzenterwelle bezeichnet) und einen zweiten Exzenter 154 (auch als zweite Exzenterwelle bezeichnet), die beide mittels der Antriebseinrichtung 150 antreibbar sind. Die Exzenter 152, 154 dienen zum Übertragen einer von der Antriebseinrichtung 150 erzeugten Antriebskraft (genauer gesagt einem Antriebsdrehmoment) auf das Grundbauteil 104, um das Grundbauteil 104 samt einem darauf montierten und fixierten Objektträger 102 zu einer orbitalen Mischbewegung anzuregen, um dadurch das Medium in dem Objektträger 102 zu mischen.

Vorteilhaft ist sowohl der erste Exzenter 152 als auch der zweite Exzenter 154 an einem Umfangsrand 156 des Trägerkörpers 138 und somit außerhalb eines Zentralbereichs 158 des Trägerkörpers 138 angeordnet. Dadurch ist in dem Zentralbereich 158 ein Hohlraum gebildet, der unterseitig von der Antriebseinrichtung 150 und seitlich von den Exzentern 152, 154 sowie von einem Gehäuse 256 des Trägerkörpers 138 begrenzt wird. Dieser Hohlraum steht zum Unterbringen einer Wechselwirkungseinrichtung (vergleiche Bezugszeichen 128 und die obige Beschreibung, beispielsweise Figur 13) zur Verfügung. Insbesondere ermöglicht dieser Hohlraum, wenn gleichzeitig ein von einem Fixiermechanismus 114 freigelassener Zentralbereich 126 im Grundbauteil 104 geschaffen ist (siehe zum Beispiel Figur 13), eine freie Durchgangsverbindung durch einen oberen Bereich des Trägerkörpers 138 und durch das Grundbauteil 104 hindurch bis zu einem auf dem Grundbauteil 104 montierten Objektträger 102. Eine solche Durchgangsverbindung kann zum Beispiel für einen optischen Sensor oder eine optische Anregungseinrichtung verwendet werden, um Medium in dem Objektträger 102 aus dem Laborgerät 100 optisch zu beeinflussen.

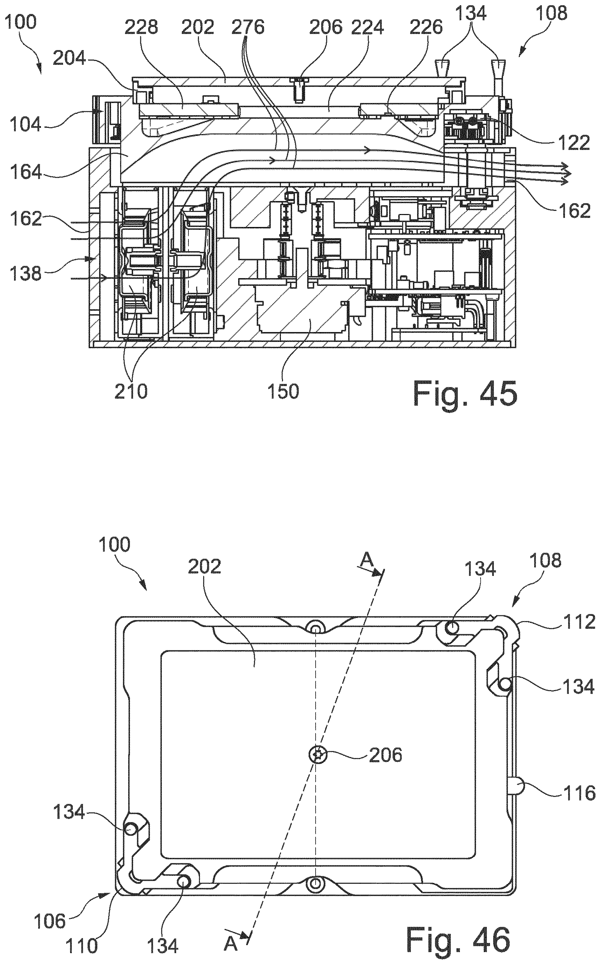

In dem in Figur 31 bis Figur 34 dargestellten Ausführungsbeispiel ist der den Hohlraum freilassende Trägerkörper 138 ausgebildet, ein Kühlfluid (insbesondere Umgebungsluft) von einem Äußeren des Laborgeräts 100 durch den Hohlraum strömen zu lassen (vergleiche Figur 44 und Figur 45). Wie am besten in Figur 31 zu erkennen ist, ist das Gehäuse 256 des Trägerkörpers 138 an einander gegenüberliegenden Seiten jeweils mit einer Kühlöffnung 162 versehen, durch welche das Kühlfluid (insbesondere Umgebungsluft) von außerhalb des Laborgeräts 100 durch den Hohlraum hindurch und wieder aus dem Laborgerät 100 herausströmt. Dadurch ist eine wirksame Luftkühlung geschaffen. In dem Hohlraum in dem Zentralbereich 158 kann ferner ein an einer Unterseite des Grundbauteils 104 montierter Kühlkörper 164 untergebracht werden. Zwischen dessen Kühlfinnen kann die mittels eines Lüfters 210 in dem Trägerkörper 138 angesaugte Umgebungsluft entlang strömen und dabei Wärme von dem Kühlkörper 164 aufnehmen, bevor die erwärmte Umgebungsluft das Laborgerät 100 wieder verlässt. Durch einen Luftauslass verlässt die Luftströmung, die durch die beiden Lüfter 210 erzeugt wird, also das Laborgerät 100, nachdem sie den Kühlkörper 164 bzw. das Grundbauteil 104 passiert hat und entsprechend Wärme aufgenommen hat.

Am besten in Figur 31 zu erkennen ist, dass eine Ausgleichsmasse 172 zum zumindest teilweisen Ausgleichen einer von dem ersten Exzenter 152 und dem zweiten Exzenter 154 erzeugten Unwucht an einer Welle der Antriebseinrichtung 150 angebracht ist. Wie dargestellt, ist diese Ausgleichsmasse 172 bezüglich einer Drehrichtung dieser Welle asymmetrisch an der Antriebseinrichtung 150 angebracht und bewegt sich mit der Antriebseinrichtung 150 mit. Anschaulich ist die Ausgleichsmasse 172 im Betrieb des Laborgeräts 100 entgegen der beiden Exzenter 152, 154 ausgerichtet. Wenn zum Beispiel beide Exzenter 152, 154 vollständig nach links ausgerichtet sind, dann ist die Ausgleichsmasse 172 vollständig nach rechts ausgerichtet.

Mit Vorteil weist das Laborgerät 100 vier Pendelstützen 174 auf, die paarweise an einander gegenüberliegenden Seiten des Trägerkörpers 138 und des Grundbauteils 104 gelagert sind. Aufbau und Wirkungsweise dieser Pendelstützen 174 werden unten bezugnehmend auf Figur 35 und Figur 36 näher beschrieben.

Figur 31 und Figur 32 zeigen, dass der erste Exzenter 152 und der zweite Exzenter 154 an einander gegenüberliegenden Seitenkanten des Trägerkörpers 138 und seitlich zueinander versetzt angeordnet sind. Die Antriebseinrichtung 150 ist zwischen dem ersten Exzenter 152 und dem zweiten Exzenter 154 angeordnet. Darüber hinaus ist die Antriebseinrichtung 150 mit dem ersten Exzenter 152 und mit dem zweiten Exzenter 154 zum synchronen Bewegen des ersten Exzenters 152 und des zweiten Exzenters 154 gekoppelt. Der Mischantriebsmechanismus 140 ist zum Erzeugen einer orbitalen Mischbewegung ausgebildet, wenn die Exzenter 152, 154 ihre exzentrische Antriebsbewegung auf das Grundbauteil 104 übertragen. Das Grundbauteil 104 ist somit in einem entlang einer Orbitalbahn bewegten Zustand auf dem Trägerkörper 138 mittels des Mischantriebsmechanismus 140 zum Mischen eines in dem Objektträger 102 enthaltenen Mediums fähig.

Vorteilhaft sind hierbei der Mischantriebsmechanismus 140 und der Fixiermechanismus 114 voneinander funktional und auch räumlich entkoppelt, d.h. sind unabhängig voneinander betreibbar. Während der Mischantriebsmechanismus 138 einen Teil des Trägerkörpers 138 bildet, ist der Fixiermechanismus 114 Teil des Grundbauteils 104.

Figur 31 bis Figur 34 zeigen den Trägerkörper 138 als eine Baugruppe mit einem ortsfestes Gestell. In Figur 31 bis Figur 34 sind die für die Mischvorrichtung relevanten Bauteile ohne aufgesetztes Grundbauteil 104 bzw. Schütteltablar gezeigt.

Die beiden Exzenter 152, 154 bilden jeweils eine Exzenterwelle zur Auslenkung des Grundbauteils 104 unter Erzeugung einer orbitalen Mischbewegung in einer horizontalen Ebene. Mit Vorteil sind zwei Exzenter 152, 154 implementiert, die einander gegenüberliegend angeordnet sind. Beide Exzenter 152, 154 werden synchron durch die Antriebseinrichtung 150 angetrieben. Die in dem dargestellten Ausführungsbeispiel an einer Welle der Antriebseinrichtung 150 angebrachte Ausgleichsmasse 172 ist zum Unwuchtausgleich drehbar im Gehäuse 256 des Trägerkörpers 138 gelagert. Die Ausgleichsmasse 172 wird im Mischbetrieb synchron zu den Exzenterwellen bzw. Exzentern 152, 154 von der Antriebseinrichtung 150 angetrieben. Außerdem enthält die Ausgleichsmasse 172 eine Kerbe 270, in die ein Stößel 268 eines Hubmagneten 266 eingreift, um eine definierte Nullposition in der horizontalen Ebene vorzugeben. Dies ist vorteilhaft, damit auch kleine Gefäße eines Objektträgers 102, die auf dem Grundbauteil 104 befestigt sind, sicher von einer Pipettiervorrichtung oder einer anderen Handhabungseinheit bearbeitet werden können.

Figur 31 und Figur 32 zeigen ferner einen linear verschiebbar gelagerten Schieber 258, der einen linear verschiebbar gelagerten Schieber 260 der Betätigungseinrichtung 116 (vergleiche Figur 13) betätigt und so den Fixiermechanismus 114 bzw. die Feststellvorrichtung öffnet und dadurch einen Objektträger 102 entriegelt.

Ferner ist ein elektromechanischer Aktuator 262 bereitgestellt, der mittels einer Drehbewegung einen Hebel schwenkt und über ein Pleuel 264 eine Verschiebung des Schiebers 258 erzeugt. Das Pleuel 264 koppelt also die Schwenkbewegung des Hebels des Aktuators 262 mit dem linear beweglichen Schieber 258. Wie gezeigt, ist der Aktuator 262 an dem Trägerkörper 138 angeordnet. Der Aktuator 262 dient zum automatisierten elektromechanischen Steuern der an dem Grundbauteil 104 angeordneten Betätigungseinrichtung 116, die entsprechend dieser Steuerung den Fixiermechanismus 114 selektiv zum in Eingriff Nehmen oder Freigeben des Objektträgers 102 betätigt.

Nun bezugnehmend auf Figur 32 ist in dem Trägerkörper 138 ein bistabiler Hubmagnet 266 implementiert, der die Ausgleichsmasse 172 verriegeln kann. Hierzu kann ein Stößel 268 an dem Hubmagneten 266 in einer Kerbe 270 der Ausgleichsmasse 172 verriegelt werden. Die Rückseite des Stößels 268 kann in unverriegeltem Zustand in eine Lichtschranke 272 ragen. Die Lichtschranke 272 überwacht den Stößel 268 des Hubmagneten 266.

Mit Vorteil bewegen sich die Ausgleichsmasse 172 und die beiden Exzenter 152, 154 im Mischbetrieb des Laborgeräts 100 synchron. Die Exzenter 152, 154 bzw. Exzenterwellen lenken im Mischbetrieb das als Schütteltablar fungierende Grundbauteil 104 aus. Die Exzenter 152, 154 bewegen sich beide synchron mit der Ausgleichmasse 172, da sie über Synchronriemen oder Zahnriemen 168, 170 von der Antriebseinrichtung 150 angetrieben werden. Ein erster Zahnriemen 168 sorgt für eine Drehmomentkopplung zwischen einer Welle der Antriebseinrichtung 150 und einer Welle des ersten Exzenters 152. Ein zweiter Zahnriemen 170 sorgt für eine Drehmomentkopplung zwischen der Welle der Antriebseinrichtung 150 und einer Welle des zweiten Exzenters 154. Dies ist in Figur 33 und Figur 34 dargestellt.

Die Ausgleichsmasse 172 dient zum Ausgleich von durch bewegte Massen erzeugten Unwuchten und ist mit Kerbe 270 zur Arretierung durch den Hubmagneten 266 ausgebildet, wodurch eine Nullposition des Schütteltablars definiert werden kann.

Gemäß Figur 33 ist die Antriebseinrichtung 150 fest mit der Ausgleichsmasse 172 verbunden bzw. treibt diese direkt an. Über die zwei Synchronriemen oder Zahnriemen 168, 170 und Synchronräder an den Exzentern 152, 154 werden die beiden Exzenterwellen synchron und in gleicher Position bewegt. Die beiden Synchronriemen oder Zahnriemen 168, 170 dienen zur Verbindung der Antriebseinrichtung 150 samt Ausgleichsmasse 172 und der zwei Exzenter 152, 154. Die besagten Synchronräder (zum Beispiel Zahnräder) sind drehfest mit den Exzentern 152, 154 bzw. Exzenterwellen verbunden, die wiederum das Grundbauteil 104 auslenken.

Zwei Lüfter 210 können zum Beispiel als Radiallüfter zur Erzeugung eines konvektiven Wärmetransports entlang eines Kühlkörpers 164 bzw. des Grundbauteils 104 ausgebildet sein. Es kann auch nur ein Lüfter oder es können mindestens drei Lüfter vorgesehen werden. Der oder die Lüfter kann oder können auch in anderer Weise ausgebildet sein als als Radiallüfter.

In Figur 33 und Figur 34 dargestellte Elektronikplatinen 274 können in das Gehäuse 256 des Trägerkörpers 138 implementiert sein. Eine solche Elektronikplatine 274 kann mit einem Mikroprozessor zur unabhängigen Steuerung aller Funktionen des Laborgeräts 100 ausgestattet sein. Beispielsweise werden nur Befehle gesendet und Antworten empfangen. Die gesamte Steuerung und Regelung des Laborgeräts 100 kann von dieser internen Elektronik realisiert werden.

Alternativ zu dem dargestellten Ausführungsbeispiel können Antrieb und Lagerung der Mischvorrichtung auch komplett ohne Temperiervorrichtung (mit Komponenten wie zum Beispiel Temperierelement 224 und integriertem Kühlkörper 164) eingesetzt werden. Dadurch kann ein noch einfacherer Aufbau des Laborgeräts 100 erreicht werden.

**Figur 35** zeigt isoliert eine Pendelstütze 174 eines Laborgeräts 100 gemäß einem exemplarischen Ausführungsbeispiel der Erfindung. **Figur 36** zeigt eine verkippte Pendelstütze 174 zwischen einem Trägerkörper 138 und einem Grundbauteil 104 eines Laborgeräts 100 gemäß einem exemplarischen Ausführungsbeispiel der Erfindung. Anders ausgedrückt zeigt Figur 36 die Pendelstütze 174 in einem in dem Laborgerät 100 eingebauten Zustand.

Die dargestellte Pendelstütze 174 kann bewegbar zwischen dem Trägerkörper 138 und dem Grundbauteil 104 gelagert sein. Genauer gesagt kann die Pendelstütze 174 unterseitig in einer ersten Vertiefung 176 in dem Trägerkörper 138 und oberseitig in einer zweiten Vertiefung 178 in dem Grundbauteil 104 gelagert sein. Ein erstes Gegenlaufplättchen 180 an dem Trägerkörper 138 kann in Berührkontakt mit einer Bodenfläche der Pendelstütze 174 gebracht sein. Ferner kann ein zweites Gegenlaufplättchen 182 an dem Grundbauteil 104 in Berührkontakt mit einer Kopffläche der Pendelstütze 174 angeordnet sein. Die Pendelstütze 174 und die Gegenlaufplättchen 180, 182 sind zum Durchführen einer im Wesentlichen rein rollreibenden und vorzugsweise im Wesentlichen gleitreibungsfreien Wechselwirkung konfiguriert. Die Pendelstütze 174 hat einen lateral erweiterten Kopfabschnitt 184 und einen lateral erweiterten Bodenabschnitt 186. Zwischen dem Kopfabschnitt 184 und dem Bodenabschnitt 186 ist ein Stiftabschnitt 188 angeordnet. Eine Außenfläche des Kopfabschnitts 184 kann als eine erste Kugelfläche 190 konfiguriert sein. In entsprechender Weise kann eine Außenfläche des Bodenabschnitts 186 als zweite Kugelfläche 192 ausgebildet sein. Hierbei können mit Vorteil sowohl ein erster Radius R1 der ersten Kugelfläche 190 als auch ein zweiter Radius R2 der zweiten Kugelfläche 192 größer sein als eine axiale Länge L der Pendelstütze 174.

Vorteilhaft können die beiden Gegenlaufplättchen 182, 184 aus Keramik hergestellt sein. Die Pendelstütze 174 kann aus Kunststoff hergestellt sein. Diese Materialpaarung hat sich als tribologisch besonders günstig herausgestellt und führt zu einem verschleißarmen und geräuscharmen Betrieb. Der Kunststoff sorgt für eine Geräuschminderung und außerdem aufgrund seiner gegenüber starren Materialien höheren Deformierbarkeit für eine geringere Belastung aufgrund einer günstigen Hertzschen Pressung der Kugel-Ebene-Kontakte.

Figur 35 und Figur 36 zeigen also eine Pendelstütze 174 mit kugelförmigen Enden. Die dargestellte Pendelstütze 174 ist aus Kunststoff gefertigt, wohingegen die Gegenlaufplättchen 182, 184 mit ebenen Gegenlaufflächen oben und unten bevorzugt aus Keramik hergestellt sind. Die Pendelstütze 174 aus Kunststoff steckt in den zylindrischen Vertiefungen 176, 178 von Trägerkörper 138 bzw. Grundbauteil 104.

Je größer der jeweilige Kugeldurchmesser 2xR1 bzw. 2xR2 ist, umso geringer die Belastung bzw. der Druck. Ein weiterer Vorteil der Pendelstütze 174 gegenüber einer Kugel mit gleichem Radius wie die Enden der Pendelstütze 174 ist die deutlich geringere radiale Ausdehnung der Pendelstütze 174. Dies spart Bauraum und fördert eine kompakte Konfiguration des Laborgeräts 100.

Wie in Figur 31 und Figur 32 dargestellt, können bevorzugt vier Pendelstützen 174 mit kugelförmigen Enden zur axialen Lagerung des Grundbauteils 104 gegenüber dem Trägerkörper 138 zum Einsatz kommen. Jedoch ist auch eine andere Anzahl von Pendelstützen 174 möglich, zum Beispiel drei oder mindestens fünf. Die Pendelstützen 174 stecken in den Vertiefungen 176, 178 und sind damit seitlich geführt. Die Gegenlaufplättchen 180, 182 aus Keramik und die Pendelstützen 174 aus Kunststoff bewirken mit Vorteil eine Geräuschminimierung während des Mischbetriebs des Laborgeräts 100.

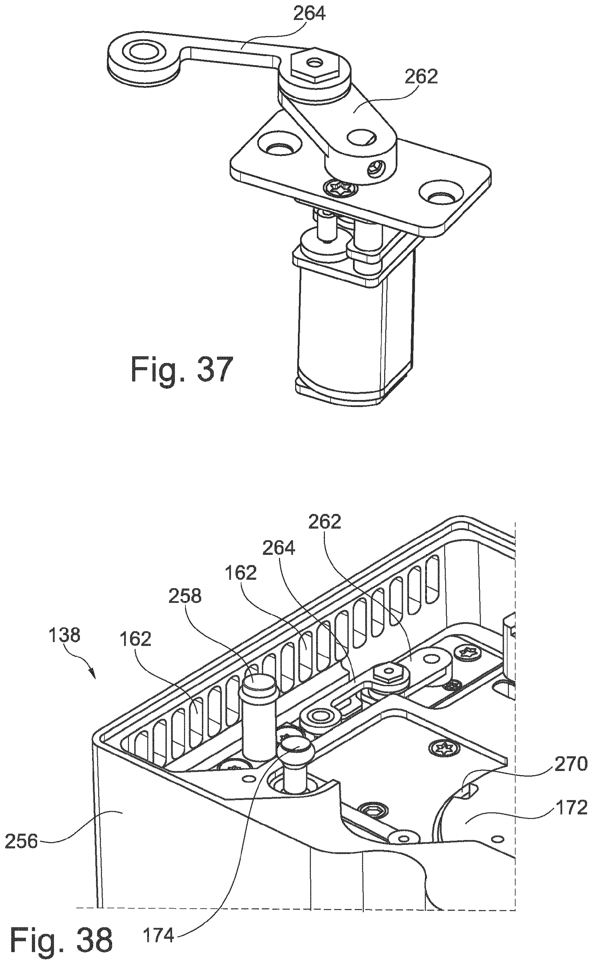

**Figur 37** zeigt einen Aktuator 262 eines Laborgeräts 100 gemäß einem exemplarischen Ausführungsbeispiel der Erfindung in einem ausgebauten Zustand. Die Funktionalität des Aktuators 262 wurde oben bezugnehmend auf Figur 31 und Figur 32 beschrieben.

**Figur 38** zeigt ein Inneres eines Trägerkörpers 138 eines Laborgeräts 100 gemäß einem exemplarischen Ausführungsbeispiel der Erfindung. Der Aktor bzw. Aktuator 262 ist Figur 38 in seiner verriegelten Stellung dargestellt. Der Aktuator 262 dient zur Betätigung des Schiebers 258.

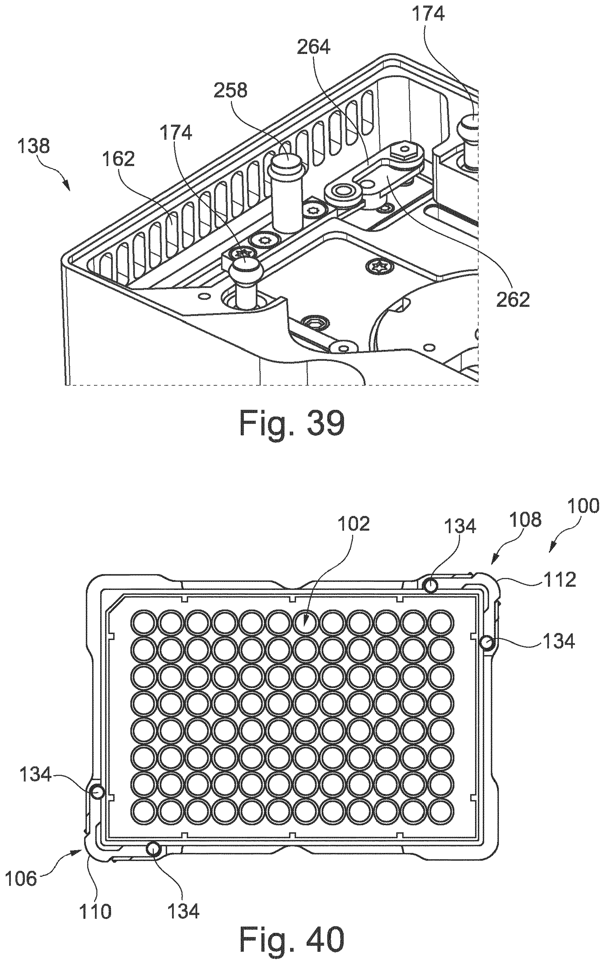

**Figur 39** zeigt eine andere Darstellung der Anordnung gemäß Figur 38. Der Aktor bzw. Aktuator 262 ist in Figur 39 in seiner entriegelten Stellung dargestellt. In dieser Stellung kann der Objektträger 102, zum Beispiel eine Probenträgerplatte, frei aus dem Laborgerät 100 entnommen werden. Der dargestellte Aktuator 262 dient zur Betätigung des Schiebers 258, der sich daher gemäß Figur 39 an einer anderen Position befindet als gemäß Figur 38. Der Schieber 258 dient als Kupplungselement und drückt im Betrieb gegen einen Öffnungshebel oder Schieber 260 des Grundbauteils 104, bewegt den Schieber 260 linear und betätigt damit den zum Beispiel als Synchronriemenmechanismus ausgebildeten Kraftübertragungsmechanismus 130 (vergleiche Figur 13). Alternativ zu dem Ausführungsbeispiel von Figur 38 und Figur 39 kann zum Beispiel auch ein rotatorischer oder rein linearer Aktor oder Aktuator 262 verwendet werden. Gemäß Figur 38 und Figur 39 fungiert der Schieber 258 als linear beweglich gelagerter Schlitten.

**Figur 40** zeigt eine Draufsicht eines Laborgeräts 100 gemäß einem exemplarischen Ausführungsbeispiel der Erfindung mit daran montiertem Objektträger 102, der von Positionierstiften 134 des Laborgeräts 100 in Eingriff genommen ist. In der dargestellten Ansicht ist der hier als Probenträgerplatte ausgebildete Objektträger 102 verriegelt und von oben dargestellt.

Der Aktor oder Aktuator 262 öffnet und das als Feder(n) ausgebildete Vorspannelement 198 schließt den Mechanismus.

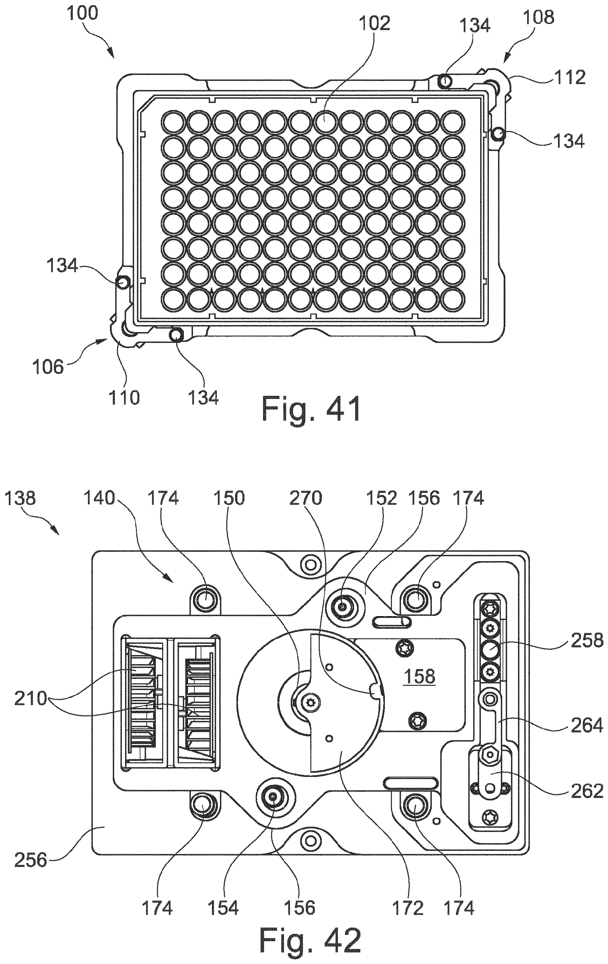

**Figur 41** zeigt die Anordnung gemäß Figur 40, wobei der Objektträger 102 nun von den Positionierstiften 134 freigegeben ist. Die Ansicht gemäß Figur 41 zeigt den als Probenträgerplatte ausgebildeten Objektträger 102 in einem entriegelten Zustand von oben.

**Figur 42** zeigt eine Draufsicht eines Trägerkörpers 138 eines Laborgeräts 100 gemäß einem exemplarischen Ausführungsbeispiel der Erfindung in einer Aktorstellung bei verriegeltem Objektträger 102. **Figur 43** zeigt die Anordnung gemäß Figur 42 in einer Aktorstellung bei entriegeltem Objektträger 102.

**Figur 44** zeigt eine dreidimensionale Ansicht eines Laborgeräts 100 gemäß einem exemplarischen Ausführungsbeispiel der Erfindung, wobei ein kühlender Luftstrom 276 dargestellt ist. Umgebungsluft kann zum Beispiel durch Lüfter 210 angesaugt werden und strömt durch Kühlöffnungen 162 in einer Seitenwand des Trägerkörpers 138 ins Innere des Laborgeräts 100. Im Inneren des Laborgeräts 100 nimmt der Luftstrom 276 Wärme auf, beispielsweise an einer Unterseite eines Kühlkörpers 164, und strömt dann durch eine weiter oben angeordnete andere Kühlöffnung 162 in einer gegenüberliegenden Seitenwand des Laborgeräts 100 in erwärmter Form aus dem Laborgerät 100 heraus. Figur 44 visualisiert den Luftstrom zwischen Einlass und Auslass.

**Figur 45** zeigt eine Querschnittsansicht, genauer gesagt einen Längsschnitt, eines Laborgeräts 100 gemäß einem exemplarischen Ausführungsbeispiel der Erfindung. Der Luftstrom 276 im Inneren des Laborgeräts 100 ist in Figur 45 anschaulich dargestellt. Diese Luftströmung dient zur Kühlung das Grundbauteils 104, das auch als Kühlkörper dient oder einen Kühlkörper 164 (insbesondere mit Kühlfinnen) aufweisen kann.

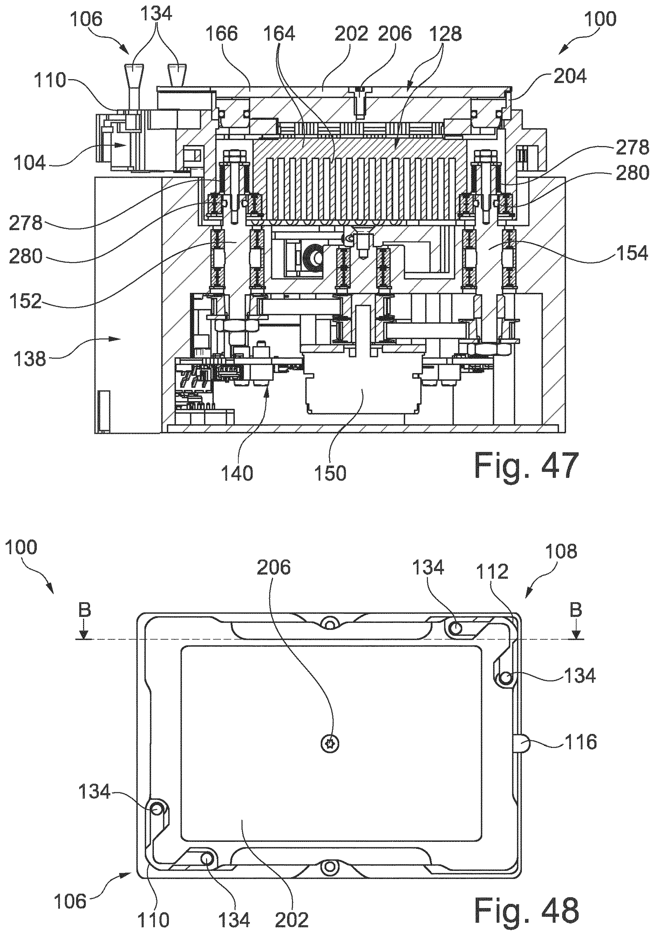

**Figur 46** zeigt eine Draufsicht eines Laborgeräts 100 gemäß einem exemplarischen Ausführungsbeispiel der Erfindung und zeigt eine Schnittlinie A-A. **Figur 47** zeigt eine Querschnittsansicht des Laborgeräts 100 gemäß Figur 46 entlang der Schnittlinie A-A und somit entlang der zwei Exzenterwellen bzw. Exzenter 152, 154. Aufgrund deren Positionierung im Randbereich ist mit Vorteil mittiger Bauraum für einen Kühlkörper 164 freigehalten. Alternativ kann der freigehaltene Zentralbereich 126/158 als optischer Kanal zu einem auf dem Grundbauteil 104 fixierten Objektträger 102 (insbesondere zu einer auf der Objektlagervorrichtung bzw. dem Schütteltablar vorhandenen Probenträgerplatte) eingesetzt werden. Dies kann beispielsweise zur optischen Sensorik oder zur optischen Anregung von Medium in dem Objektträger 102 eingesetzt werden.

Insbesondere zeigt Figur 47 Wellenfedern 278 an den Exzentern 152, 154 zur Erzeugung einer Kraft auf die axiale Lagerung mittels der Pendelstützen 174. Anschaulich kann dies ein Abheben der einwertigen Lagerung verhindern.

Darüber hinaus kann an einem jeweiligen Exzenter 152, 154 ein Ausgleichselement 280, beispielsweise ein O-Ring oder Rundring oder eine andere Vorrichtung, zum Ausgleich von Winkelfehlern angebracht sein. Dies ist vorteilhaft, um trotz Winkelfehler der Exzenter 152, 154 dafür zu sorgen, dass die Axiallagerung des Grundbauteils 104 stets auf den Pendelstützen 174 aufliegt. Obwohl die in Figur 35 und Figur 36 beschriebenen Pendelstützen 174 besonders vorteilhaft sind, können diese auch durch Kugeln ersetzt werden.

Vorzugsweise kann der Wellendurchmesser kleiner, besonders bevorzugt deutlich kleiner, als der Kugellagerdurchmesser sein. Dies garantiert einen nur linienförmigen Kontakt zwischen O-Ring und dem Innenring des Lagers. Dadurch kann also sichergestellt werden, dass nur ein linienförmiger Kontakt zwischen dem beispielsweise als O-Ring ausgebildeten Ausgleichselement 280 und einem Innenring des Lagers besteht.

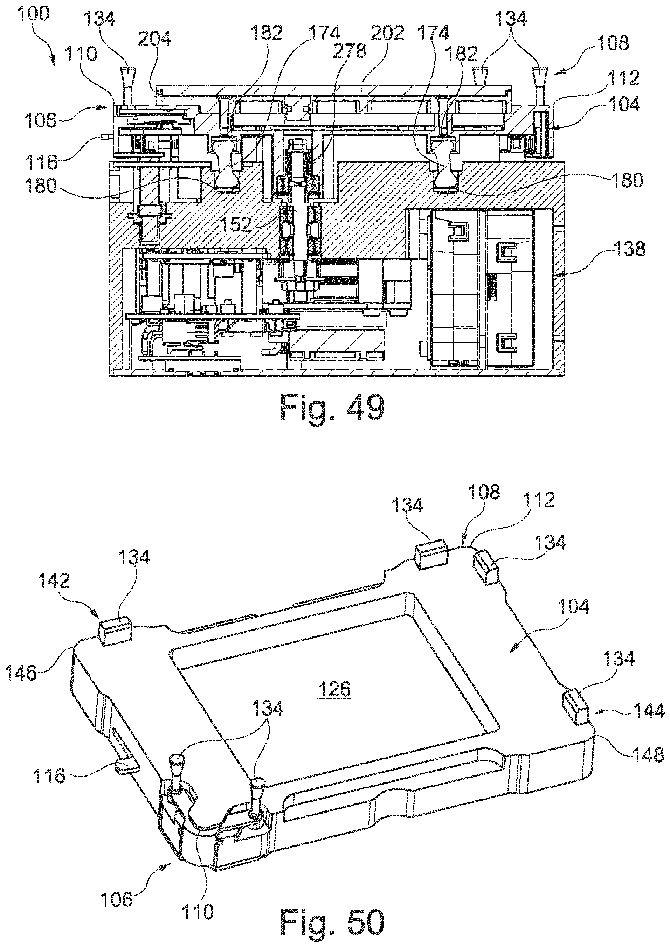

**Figur 48** zeigt eine Draufsicht eines Laborgeräts 100 gemäß einem exemplarischen Ausführungsbeispiel der Erfindung und zeigt eine Schnittlinie B-B. **Figur 49** zeigt eine Querschnittsansicht des Laborgeräts 100 gemäß Figur 48 entlang der Schnittlinie B-B zur Darstellung der Pendelstützenlagerung.

Jede der dargestellten und aus Kunststoff gebildeten Pendelstützen 174 besitzt an ihrer Oberseite und an ihrer Unterseite eine kugelförmige Form. Idealerweise wird der Radius R1 bzw. R2 möglichst groß gewählt. Durch die Deformation des Kunststoffs und durch einen ausreichend großen Radius R1 bzw. R2 kann die Hertzsche Pressung zwischen Ebene und Kugel und damit die Belastung gering gehalten werden. Dies erhöht die Lebensdauer der Pendelstützen 174 und der vorzugsweise aus Keramik hergestellten Gegenlaufplättchen 180, 182. Die Bewegung der Pendelstützen 174 an den Gegenlaufplättchen 180, 182 erfolgt vorteilhaft durch Rollreibung. Eine möglichst harte Oberfläche der Gegenlaufplättchen 180, 182 hat sich als vorteilhaft erwiesen.

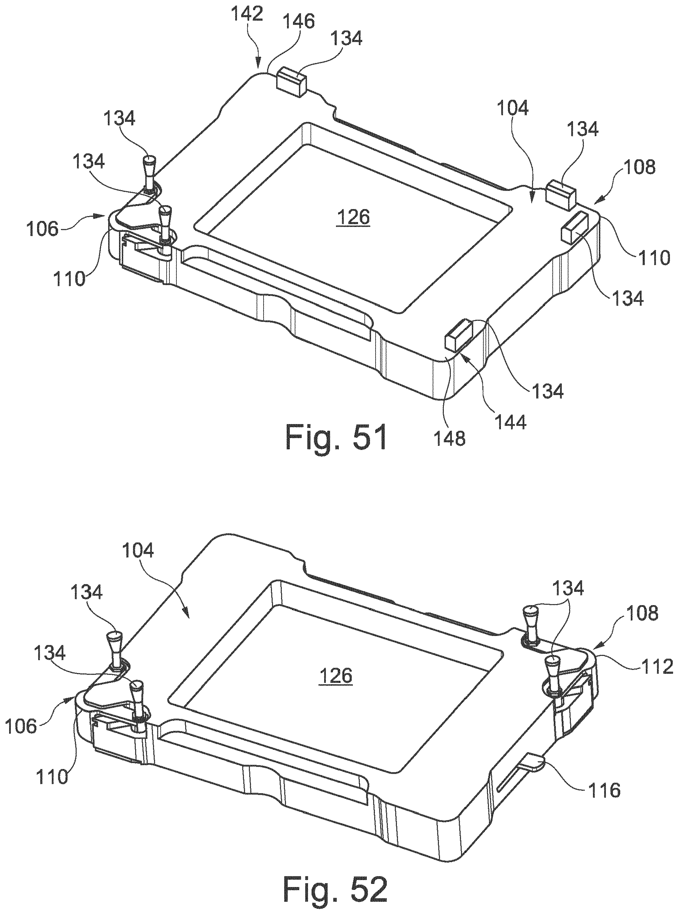

**Figur 50** zeigt eine dreidimensionale Ansicht eines Grundbauteils 104 eines Laborgeräts 100 gemäß einem exemplarischen Ausführungsbeispiel der Erfindung. **Figur 51** zeigt eine andere dreidimensionale Ansicht des Grundbauteils 104 gemäß Figur 50. Das dargestellte Grundbauteil 104 ist mit einem beweglichen Positionieranschlag 106 und zusätzlichen ortsfesten Positionieranschlägen 108, 142, 144 ausgestattet. Die ortsfesten Positionieranschläge 108, 142, 144 sind in dem dargestellten Ausführungsbeispiel durch feste Anschlagstücke bzw. feste Anschlagleisten ausgebildet.

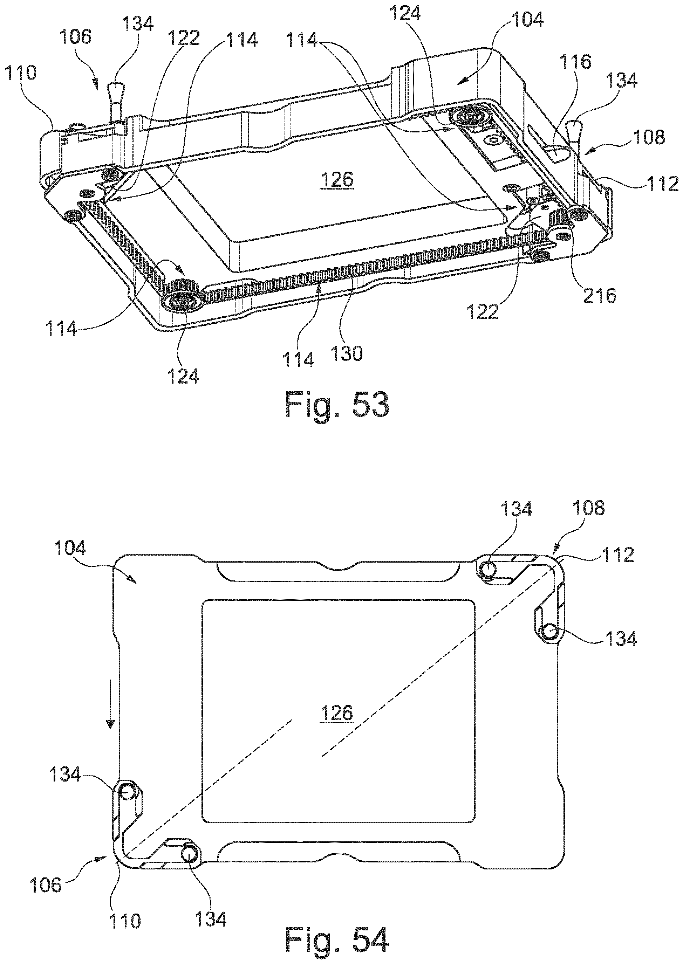

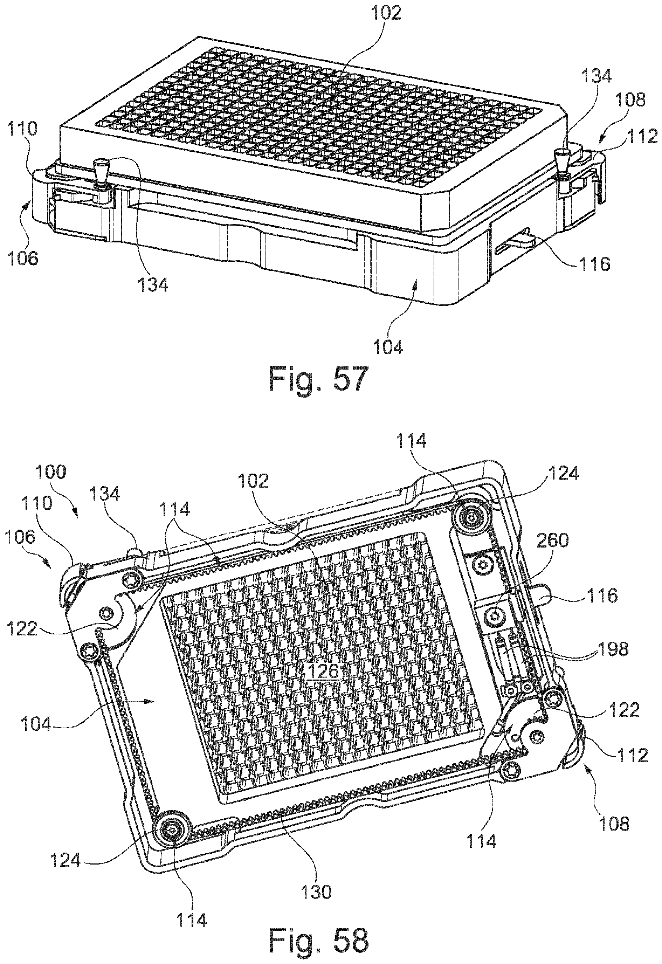

**Figur 52** zeigt eine dreidimensionale Ansicht eines Grundbauteils 104 eines Laborgeräts 100 mit zwei beweglichen Positionieranschlägen 106, 108 in gegenüberliegenden Ecken 110, 112 des Grundbauteils 104 gemäß einem anderen exemplarischen Ausführungsbeispiel der Erfindung von oben. **Figur 53** zeigt eine Unteransicht des Grundbauteils 104 gemäß Figur 52. **Figur 54** zeigt eine Draufsicht des Grundbauteils 104 gemäß Figur 52 mit Positionierstiften 134 der beweglichen Positionieranschläge 106, 108 in einem verriegelnden Zustand. **Figur 55** zeigt eine Draufsicht des Grundbauteils 104 gemäß Figur 52 mit den Positionieranstiften 134 in einem entriegelnden Zustand. **Figur 56** zeigt eine transparente Ansicht des Grundbauteils 104 gemäß Figur 52, in der an sich unsichtbare Linien dargestellt sind. **Figur 57** zeigt eine dreidimensionale Ansicht des Grundbauteils 104 des Laborgeräts 100 gemäß Figur 52 in einem verriegelten Zustand eines Objektträgers 102. Der Objektträger 102 ist hier ausgebildet als Probenträgerplatte (zum Beispiel als Mikrotierplatte mit 384 Wells), die in dem dargestellten Betriebszustand auf dem Grundbauteil 104 als Objektlagervorrichtung fixiert ist. **Figur 58** zeigt eine Unteransicht des Grundbauteils 104 des Laborgeräts 100 gemäß Figur 57 mit eingesetzter Probenträgerplatte von unten.

Die in Figur 52 dargestellten, linear verschiebbar gelagerten Positionieranschläge 106, 108 haben im oberen Bereich konische Positionierstifte 134 (die alternativ auch andere Formen haben können). Im Betrieb bewegen sich die Positionierstiften 134 von dem Objektträger 102 weg (zur Entriegelung) bzw. auf diesen zu (zur Verriegelung). Die zumindest abschnittsweise konischen Positionierstifte 134 können austauschbar an dem Grundbauteil 104 montiert sein, beispielsweise an einem jeweiligen Positionieranschlag 106, 108 verschraubt sein.

Figur 52 zeigt die Betätigungseinrichtung 116 als Hebel zur manuellen Betätigung der Positionieranschläge 106, 108. Ein solch manueller Betrieb kann zum Beispiel zur Notentriegelung oder für ein schnelles Be-/Entladen des Laborgeräts 100 durch Laborpersonal vorteilhaft sein.

Der freigelassene Zentralbereich 126 des Grundbauteils 104 ermöglicht eine Zugänglichkeit des hier als Probenträgerplatte ausgebildeten Objektträgers 102. Diese freie Zugänglichkeit von unten erfolgt durch Positionierung oder Anbringung aller Bauteile des Grundbauteils 104 im Randbereich. Dies ermöglicht beispielsweise eine bauraumsparende Integration einer Temperiereinrichtung. Auch die Durchführung einer optischen Messung an Medium in dem Objektträger 102 von unten durch das Grundbauteil 104 hindurch kann aufgrund des freigelassenen Zentralbereichs 126 des Grundbauteils 104 durchgeführt werden.

Figur 58 zeigt in den beiden Ecken des Grundbauteils 104, in denen die bewegbaren Positionieranschläge 106, 108 angeordnet sind, jeweils ein drehbar gelagertes Koppelelement in Form einer Führungsscheibe 122 zur Führung (genauer gesagt Linearbewegung) der Positionieranschläge 106, 108. Die jeweilige Führungsscheibe 122 (die auch als Kurvenscheibe bezeichnet werden kann) enthält eine bahnförmige Nut als Führungsaussparung 118, in die ein Führungskörper 120 (zum Beispiel ein Stift) der linear beweglichen Positionieranschläge 106, 108 hineinragt. Der Führungskörper 120 greift also in die Führungsaussparung 118 der Führungsscheibe 122 (insbesondere in eine bahnförmige Nut einer Kurvenscheibe) ein und sorgt damit - ausgelöst durch die Drehung - für eine lineare Verschiebung der beweglichen Positionieranschläge 106, 108. Die Führungsscheibe 122 muss nicht zwingend eine zylindrische Scheibe sein, sondern kann als Scheibenkörper, der eine bahnförmige Nut enthält, auch geometrisch anders gestaltet sein.

Ferner zeigt Figur 58 zwei drehbar gelagerte Umlenkrollen 124 für einen Zahnriemen oder Synchronriemen eines Kraftübertragungsmechanismus 130 des Fixiermechanismus 114. Dieser Synchronriemen oder Zahnriemen bewirkt eine synchrone Bewegung aller Positionieranschläge 106, 108.

Die Betätigungseinrichtung 116 gemäß Figur 58 hat ferner einen linear gelagerten Schieber 260 zur manuellen oder automatischen Betätigung des Fixiermechanismus 114. Beispielsweise kann ein in Figur 31 dargestellter stiftförmiger Schieber 258 des Trägerkörpers 138 in eine invers geformte Vertiefung des Schiebers 260 eingreifen und diesen verschieben. Wenn keine Kraft (manuell oder durch einen Aktor oder Aktuator 262, vergleiche Figur 31) auf diesen Schieber 260 wirkt, wird der Schieber 260 durch ein als mechanische Feder realisierbares Vorspannelement 198 (oder ein anderes vorspannendes Element, beispielsweise ein Magnet) in seine Ausgangsstellung zurückbewegt. Der Schieber 260 ist fest mit dem Synchronriemen bzw. Zahnriemen des Kraftübertragungsmechanismus 130 verbunden, der eine synchrone Drehbewegung der Führungsscheiben 122 erzeugt, wodurch wiederum die Positionieranschläge 106, 108 linear verschoben werden.

Oben beschriebene Ausführungsbeispiele der Betätigungseinrichtung 116 beruhen auf einer linearen Verschiebung eines Betätigungselements. Es ist allerdings zu betonen, dass die Betätigungseinrichtung 116 gemäß anderen Ausführungsbeispielen der Erfindung auch durch ein Drehen, Schwenken oder Rotieren betätigt werden kann, um so auf den Synchronriementrieb oder einen anderen Kraftübertragungsmechanismus 130 einzuwirken.

Das als Zugfeder ausgebildete Vorspannelement 198 kann zur Bewegung des linear gelagerten Schiebers 260 zurück in seine Ruhestellung und damit zur Bewegung der Positionieranschläge 106, 108 in Richtung Objektträger 102 (d.h. in eine Verriegelungsstellung) ausgebildet sein. Dieser Fixiermechanismus 114 schließt sich also selbstständig, wenn keine Betätigungskraft einwirkt.

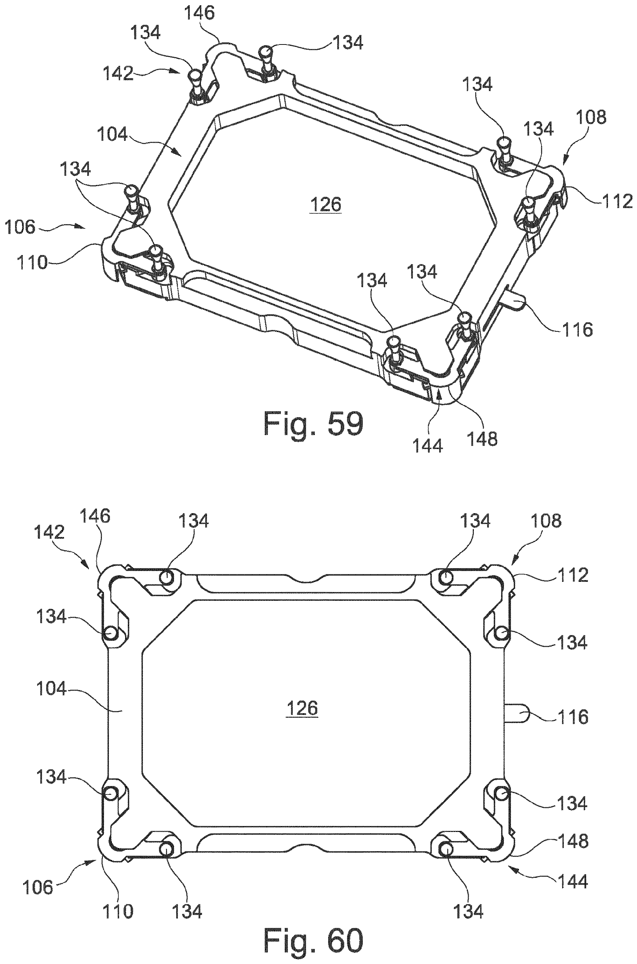

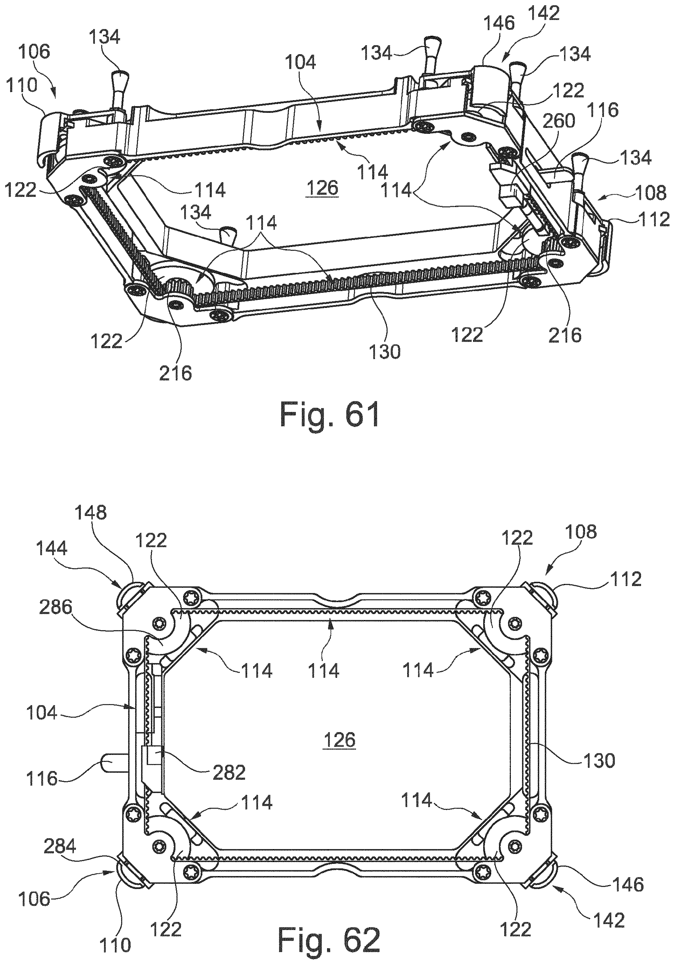

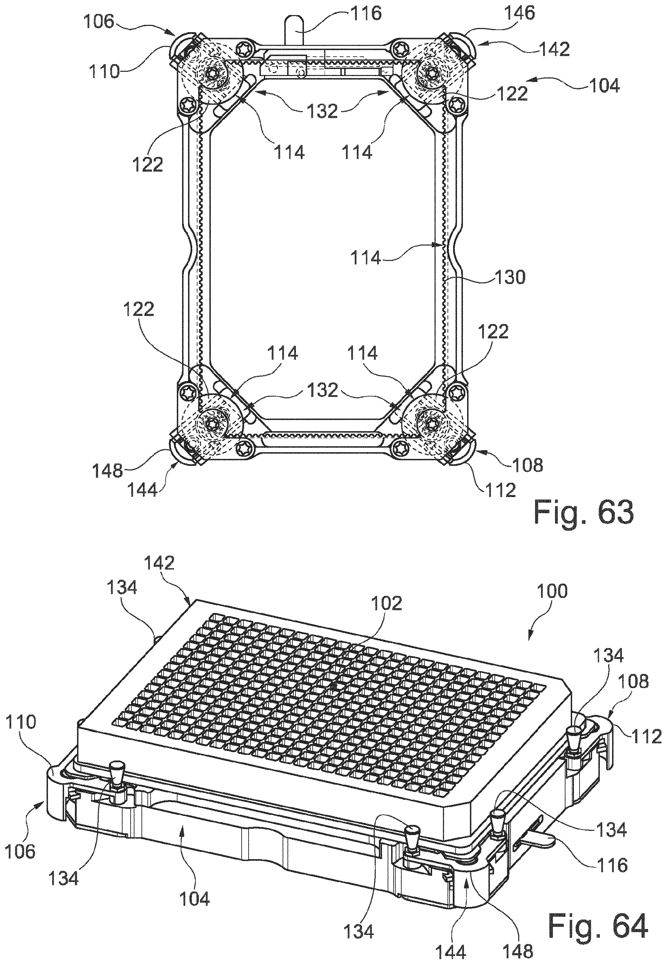

**Figur 59** zeigt eine dreidimensionale Ansicht eines Grundbauteils 104 eines Laborgeräts 100 gemäß einem exemplarischen Ausführungsbeispiel der Erfindung mit Positionieranstiften 134 in allen vier Ecken. Somit zeigt Figur 59 das Grundbauteil 104 mit vier beweglichen Positionieranschlägen 106, 108, 142, 144 an allen vier Ecken 110, 112, 146, 148 des Grundbauteils 104 von oben. **Figur 60** zeigt eine Draufsicht des Grundbauteils 104 gemäß Figur 59. **Figur 61** zeigt eine dreidimensionale Ansicht einer Unterseite des Grundbauteils 104 gemäß Figur 59. **Figur 62** zeigt eine Ansicht einer Unterseite des Grundbauteils 104 gemäß Figur 59. **Figur 63** zeigt eine Unteransicht des Grundbauteils 104 gemäß Figur 59 mit einer Darstellung von an sich unsichtbaren Linien. **Figur 64** zeigt eine dreidimensionale Ansicht eines Grundbauteils 104 eines Laborgeräts 100 mit darauf montiertem Objektträger 102 gemäß Figur 59 bis Figur 63.

Anschaulich ist gemäß Figur 59 bis Figur 64 in jedem Eck 110, 112, 146, 148 des Grundbauteils 104 eine Führungsscheibe 122 mit Führungsaussparung 118 angeordnet, wobei ein jeweiliger Führungskörper 120 eines jeweiligen beweglichen Positionieranschlags 106, 108, 142, 144 in die zugeordnete Führungsaussparung 118 eingreift. Alle vier Führungsscheiben 120 sind über einen gemeinsamen Zahnriemen als Kraftübertragungsmechanismus 130 mechanisch mit der Betätigungseinrichtung 116 gekoppelt.

In jedem hierin beschriebenen Ausführungsbeispiel mit mindestens einem beweglichen Positionieranschlag kann eine Sensorüberwachung der Bewegung eines Positionieranschlags implementiert sein. Die Überwachung von Bewegung und Position der beweglichen Positionieranschläge 106, 108, 142, 144 und damit des Betriebszustands der Verriegelung oder Entriegelung kann gemäß Figur 59 bis Figur 64 durch einen oder mehrere Sensoren bewerkstelligt werden (zum Beispiel ein Hallsensor in Zusammenwirken mit einem Magneten, eine Lichtschranke, etc.). Die sensorische Überwachung der Bewegung eines Positionieranschlags ist für die Betriebssicherheit eines Flüssigkeitshandhabungssystems oder einer Mischvorrichtung vorteilhaft. Die Sensorüberwachung kann sich zum Beispiel auf die lineare Position der beweglichen Positionieranschläge 106, 108, 142, 144, die Position einer jeweiligen drehbar gelagerten Führungsscheibe 122 (oder eines anderen Kopplungselements) oder auf die lineare Position des Schiebers 260 der Betätigungseinrichtung 116 beziehen.

Bezugszeichen 282 in Figur 62 bezeichnet eine erste mögliche Sensorposition (zum Beispiel für eine lineare Überwachung eines Betätigungshebels der Betätigungseinrichtung 116). Bezugszeichen 284 bezeichnet eine weitere mögliche Sensorposition (zum Beispiel für eine lineare Überwachung das zugeordneten beweglichen Positionieranschlags 106). Bezugszeichen 286 bezeichnet eine dritte mögliche Sensorposition (beispielsweise zur Überwachung der Rotation der Führungsscheibe 122 oder eines anderen Kopplungselements oder einer Umlenkrolle 124).

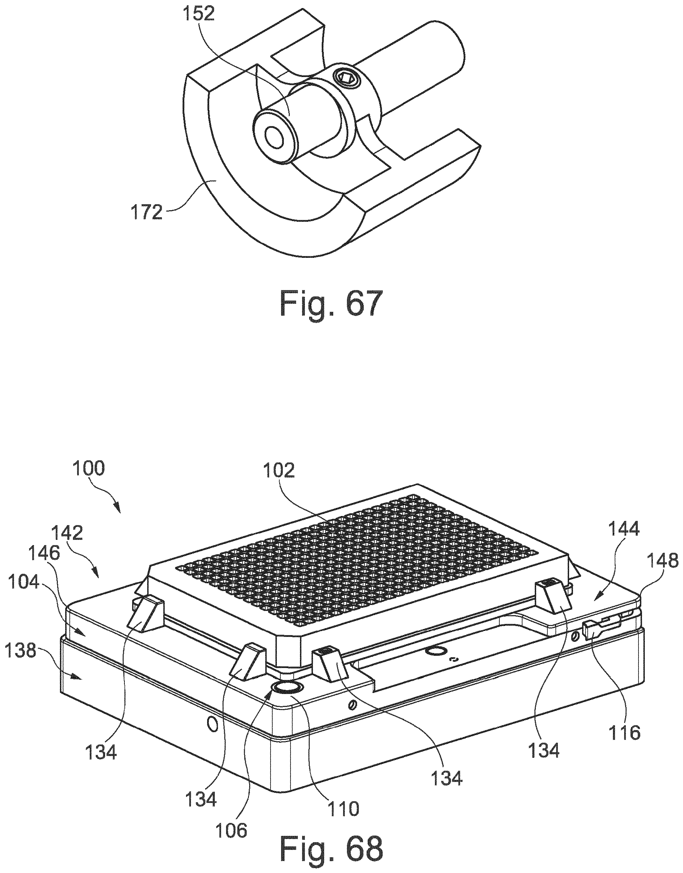

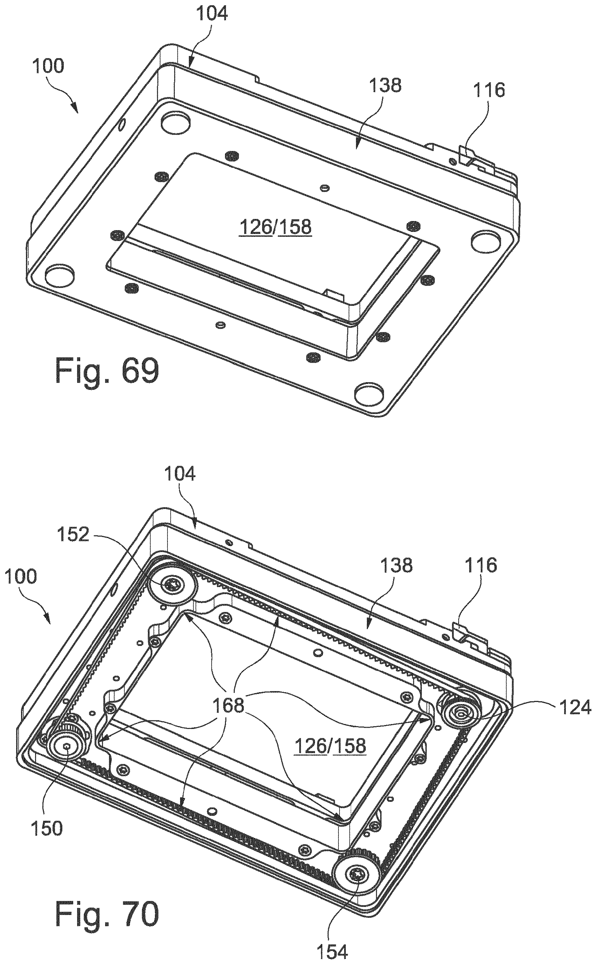

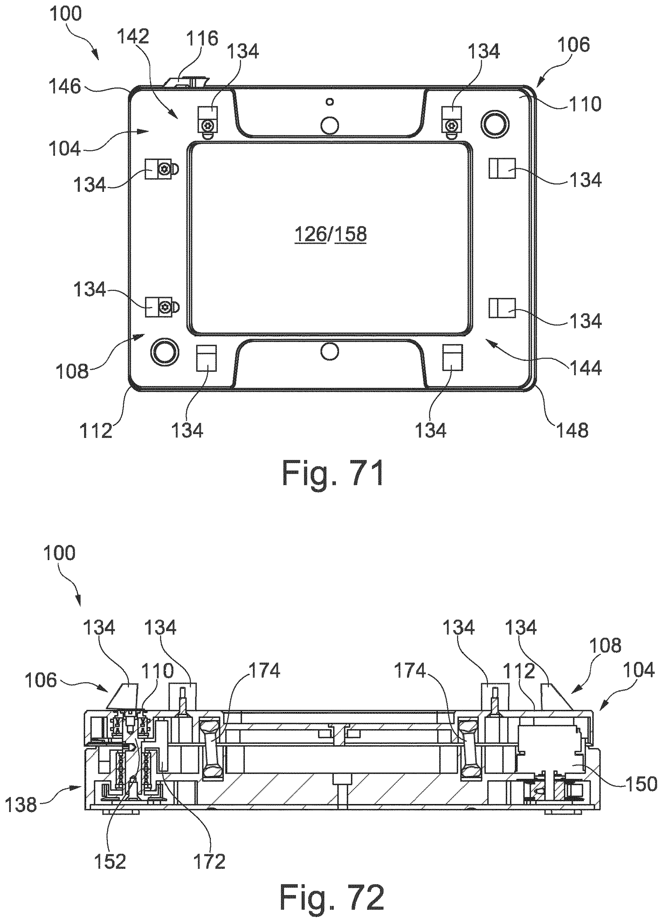

**Figur 65** zeigt eine dreidimensionale Ansicht eines Laborgeräts 100 gemäß einem anderen exemplarischen Ausführungsbeispiel der Erfindung von oben, wobei das Laborgerät 100 eine Mischvorrichtung beinhaltet. **Figur 66** zeigt eine dreidimensionale Ansicht eines Trägerkörpers 138 des Laborgeräts 100 gemäß Figur 65 von oben. **Figur 67** zeigt einen Exzenter 152 mit Ausgleichsmasse 172 eines Mischantriebsmechanismus 140 des Trägerkörpers gemäß Figur 66. **Figur 68** zeigt das Laborgerät 100 gemäß Figur 65 mit darauf montiertem Objektträger 102, der hier als Mikrotiterplatte ausgebildet ist. **Figur 69** zeigt eine Unterseite des Laborgeräts 100 gemäß Figur 65. **Figur 70** zeigt eine Unterseite des Laborgeräts 100 gemäß Figur 65 ohne bodenseitige Abdeckung, d.h. von unten ohne Deckel. **Figur 71** zeigt eine Draufsicht des Laborgeräts 100 gemäß Figur 65. **Figur 72** zeigt eine Querschnittsansicht des Laborgeräts 100 gemäß Figur 65, genauer gesagt einen Schnitt, der einen Mischantriebsmechanismus 140 mit Exzentern 152, 154 und Ausgleichsmassen 172 sichtbar macht, sowie Pendelstützen 174.

Wie in Figur 70 dargestellt, weist der Trägerkörper 138 einen ringförmig geschlossenen Kraftübertragungsmechanismus 168 auf, der als umlaufend geschlossener Zahnriemen ausgebildet ist. Dieser dient zum Übertragen der Antriebskraft von der Antriebseinrichtung 150 auf den ersten Exzenter 152 in einer ersten Ecke und auf den zweiten Exzenter 154 in einer der ersten Ecke gegenüberliegenden zweiten Ecke. In einer dritten Ecke ist die Antriebseinrichtung 150 angeordnet. In einer vierten Ecke ist eine Umlenkrolle 124 angeordnet.

Wie am besten in Figur 66 und Figur 67 zu erkennen ist, ist eine erste Ausgleichsmasse 172 an dem ersten Exzenter 152 gemeinsam mit diesem drehbar angebracht. Ferner ist eine zweite Ausgleichsmasse 172 gemeinsam mit diesem drehbar an dem zweiten Exzenter 154 angebracht.

Das Ausführungsbeispiel gemäß Figur 65 bis Figur 72 zeigt ein Laborgerät 100 mit einem ringförmigen Grundbauteil 104 mit rechteckiger Außenkontur und einem ringförmigen Trägerkörper 138 mit ebenfalls rechteckiger Außenkontur. Ein Durchgangsloch des ringförmigen Grundbauteils 104 bildet einen freigelassenen Zentralbereich 126 des Grundbauteils 104. In entsprechender Weise bildet ein Durchgangsloch des ringförmigen Trägerkörpers 138 einen freigelassenen Zentralbereich 158 des Trägerkörpers 138. Im zusammengesetzten Zustand des ringförmigen Grundbauteils 104 und des ringförmigen Trägerkörpers 138 sind die freigelassenen Zentralbereiche 126, 158 zueinander ausgerichtet bzw. fluchten, sodass das aus dem Grundbauteil 104 und dem Trägerkörper 138 gebildete Laborgerät 100 ebenfalls ein zentrales Durchgangsloch hat, das aus den Zentralbereichen 126, 158 gebildet ist.

Das dadurch erhaltene Laborgerät 100 hat eine Mischvorrichtung und kann überdies auch für alle Anwendungen eingesetzt werden, die eine Zugänglichkeit des Objektträgers 102 (insbesondere einer Probenträgerplatte oder mit Laborgefäßen) von unten erfordert oder eine komplett freie optische Achse benötigt. Zum Beispiel kann dieses Laborgerät 100 eingesetzt werden in der Zellkultivierung in Nährmedium bei paralleler Onlinemessung der optischen Dichte (OD) zum Überwachen des Zellwachstums. Zur Gewährleistung eines guten Zellwachstums ist eine möglichst große Austauschfläche zwischen Gas und Flüssigkeit notwendig. Diese kann über eine orbitale Mischbewegung erzeugt werden.

Da der Bauraum in der Mitte des Laborgeräts 100 komplett frei ist (siehe die freigelassenen Zentralbereiche 126, 158), können auch viele andere Anwendungen mit dem Laborgerät 100 durchgeführt werden, die eine Zugänglichkeit der Probengefäße von unten erfordern (wie zum Beispiel Temperierung, Auslesen, Magnetseparation und andere Anwendungen).

Beim Prozess der Magnetseparation können dadurch zum Bespiel nacheinander Wasch- und Trennschritte durchgeführt werden, ohne die Notwendigkeit, den Objektträger 102 (zum Beispiel eine Probenträgerplatte) auf eine andere Position zu bewegen. Dies kann dadurch bewerkstelligt werden, dass Elektromagnete oder bewegliche Permanentmagnete unter den als Probenträgerplatte ausgebildeten Objektträger 102 positioniert werden.

Zum Beispiel können Probenträgerplatten im Wechsel auf eine Misch- und/oder Temperiervorrichtung gesetzt werden und dann durch einen Greifer auf eine Magnetseparationsvorrichtung mit Permanentmagneten gesetzt werden. Anschließend kann zur Durchführung von Waschschritten ein Transport zurück zur Mischvorrichtung erfolgen. Die Bewegung der Probenträgerplatte auf eine Magnetseparationsposition und dann auf eine Mischvorrichtung (zum Beispiel zum Durchführen von Waschschritten) kann durch Verwendung eines kombinierten Laborgeräts entbehrlich sein. Solch eine Bewegung kann jedoch durchgeführt werden, wenn ein solches kombiniertes Laborgerät nicht zur Verfügung steht und Einzelpositionen verwendet werden.

Die Bereitstellung eines Laborgeräts 100 gemäß einem exemplarischen Ausführungsbeispiel der Erfindung in Form einer Kombination eines Orbitalschüttlers mit elektrisch schaltbaren Magneten oder linear/rotatorisch beweglichen Permanentmagneten in Richtung Probenträgerplatte spart Bauraum, Zeit und unnötige Bewegungen in vollautomatischen Liquid-Handling-Systemen.

Zurückkommend auf Figur 65 bis Figur 72 bildet der Trägerkörper 138 ein ortsfestes Gestell. Das Grundbauteil 104 hingegen bildet ein Schütteltablar zur Aufnahme eines insbesondere als Probenträgerplatte ausgebildeten Objektträgers 102 oder von Laborgefäßen. Aufgrund der Öffnung des Laborgeräts 100 durch die Zentralbereiche 126, 158 sind die Gefäße der Probenträgerplatte mit Vorteil von unten voll zugänglich. Dadurch kann in den Zentralbereichen 126, 158 zum Beispiel eine Temperiervorrichtung, eine optische Messvorrichtung und/oder eine andere Wechselwirkungseinrichtung 128 untergebracht werden.

Bei dem Ausführungsbeispiel gemäß Figur 65 bis Figur 72 weist die Betätigungseinrichtung 116 einen Betätigungshebel zur Entriegelung bzw. Verriegelung des Objektträgers 102 auf. Im beschriebenen Ausführungsbeispiel erfolgt die Betätigung durch Drehung, kann aber auch anders gelöst sein (zum Beispiel durch eine longitudinale Verschiebung).

Ferner weist das Ausführungsbeispiel gemäß Figur 65 bis Figur 72 bewegliche Positionieranschläge 106, 108, 142, 144 auf, kann alternativ oder ergänzend aber auch mit festen Positionieranschlägen kombinierbar sein. Zum Beispiel können feste Anschlagleisten vorgesehen sein, es können aber auch alle Positionieranschläge 106, 108, 142, 144 beweglich sein.

Wie in Figur 72 dargestellt, können auch bei dem Ausführungsbeispiel gemäß Figur 65 bis Figur 72 Pendelstützen 174 mit kugelförmigem Ende (einwertiges Lager) unten und oben auf einer ebenen Lauffläche gelagert sein. Vorzugsweise sind auch hier mindestens drei Pendelstützen 174 vorgesehen, in dem gezeigten Ausführungsbeispiel vier Stück.

Zwei Exzenter 152, 154 oder Exzenterwellen können zur Auslenkung des Grundbauteils 104 gegenüber dem ortsfesten Trägerkörper 138 bereitgestellt sein. Die Ausgleichsmassen 172 dienen zum Ausgleich der durch bewegte Massen erzeugten Unwucht und sind in dem Ausführungsbeispiel gemäß Figur 65 bis Figur 72 direkt an den Exzentern 152 bzw. 154 angebracht.

Der in Figur 70 dargestellte Synchronriementrieb oder Zahnriemen 168 zum mechanischen Koppeln der Exzenter 152, 154 mit der Antriebseinrichtung 150 und der Spannrolle oder Umlenkrolle 124 kann auch anders ausgeführt sein (zum Beispiel entsprechend Figur 34). Der Synchronriemen oder Zahnriemen 168 dient zur synchronen Bewegung der Exzenter 152, 154.

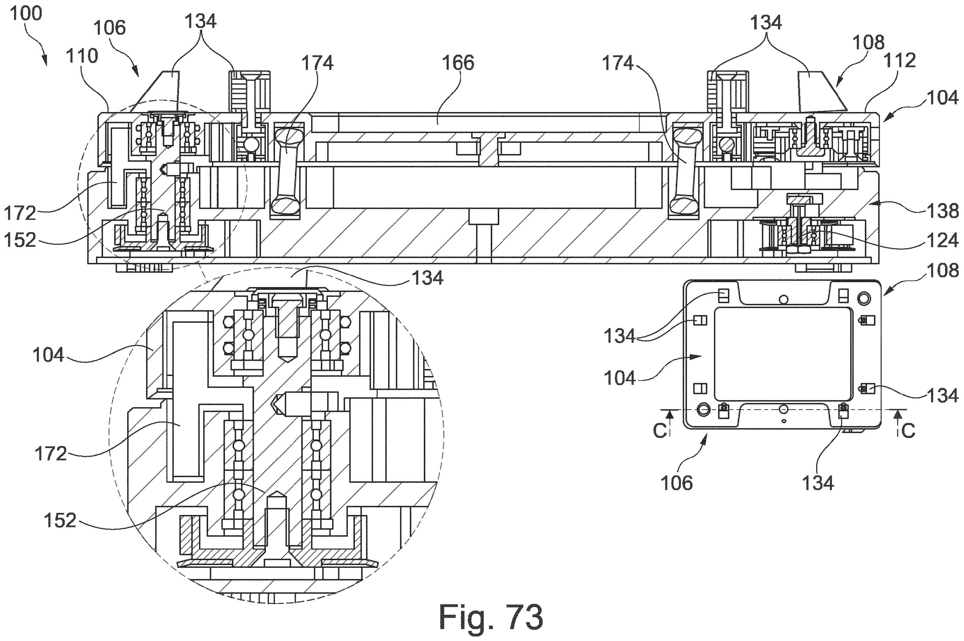

**Figur 73** zeigt unterschiedliche Ansichten von Komponenten des Laborgeräts 100 gemäß Figur 65, die eine Mischvorrichtung mit orbital bewegter Ausgleichsmasse 172 aufweist. Figur 73 zeigt eine Schnittansicht entlang einer Schnittlinie C-C sowie ein Detail dieser Schnittansicht.

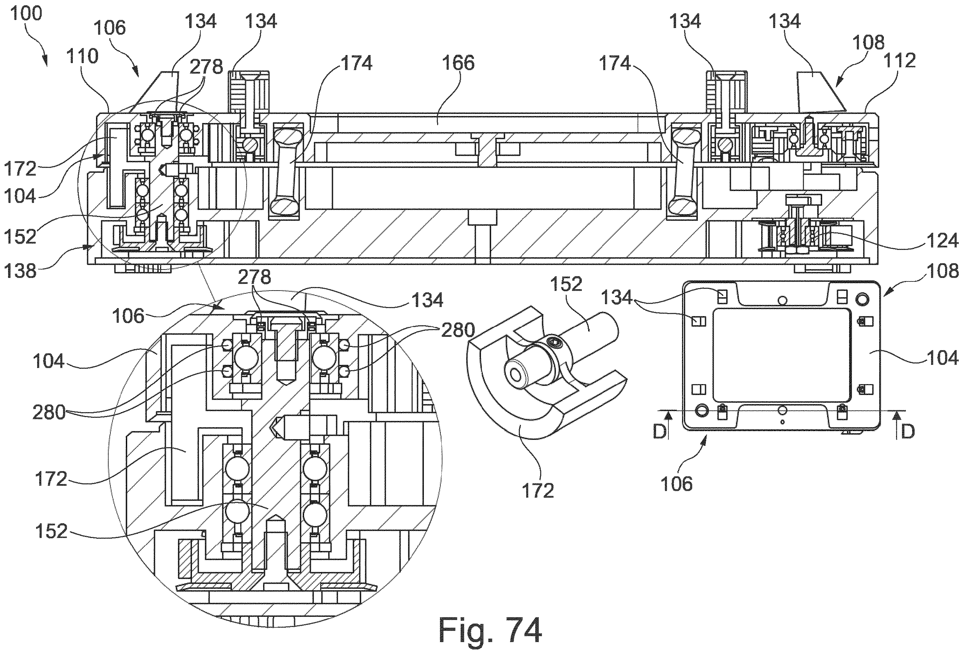

**Figur 74** zeigt unterschiedliche Ansichten von Komponenten des Laborgeräts 100 gemäß Figur 65. Figur 74 zeigt eine Schnittansicht entlang einer Schnittlinie D-D, ein Detail dieser Schnittansicht und eine dreidimensionale Ansicht des ersten Exzenters 152 mit Ausgleichsmasse 172. Figur 74 zeigt eine Schnittdarstellung durch die Mischvorrichtung und stellt einen Teil des Mischantriebsmechanismus 140 dar. Insbesondere ist in Figur 74 die erste Exzenterwelle bzw. der erste Exzenter 122 mit der daran starr angebrachten Ausgleichsmasse 172 zu erkennen. Darüber hinaus sind in Figur 74 zwei der Pendelstützen 174 der Pendelstützenlagerung dargestellt, die eine axiale Lagerung des Schütteltablars bzw. Grundbauteils 104 gegenüber dem als ortsfestes Gestell ausgebildeten Trägerkörper 138 bewerkstelligt. Darüber hinaus ist eine Wellenfeder 278 an dem ersten Exzenter 152 angebracht, die zur Erzeugung einer Anpresskraft oder Normalkraft auf die einwertige Axiallagerung dient. Obgleich dies in Figur 74 nicht zu erkennen ist, ist auch an dem zweiten Exzenter 154 eine solche Wellenfeder 278 angebracht. Alternativ zu den Wellenfedern 278 können als Mittel zur Erzeugung einer Anpresskraft auch abstoßende oder anziehende Permanentmagnete implementiert werden.

Ausgleichselemente 280 sind in dem dargestellten Ausführungsbeispiel als O-Ringe ausgeführt, die zum Winkelausgleich dienen. Dies ist in Figur 74 auf dem Außenring des Lagers vorgenommen. In einem anderen Ausführungsbeispiel kann eine Positionierung auf der Exzenterwelle bzw. dem Innenring des Lagers realisiert sein. Anschaulich sorgen die Ausgleichselemente 280 dafür, dass bei Winkelfehlern der Exzenter 152, 154 bzw. der Lagerung trotzdem die Axiallagerung des Grundbauteils 104 auf allen (vorzugsweise vier) Pendelstützen 174 aufliegt. Der Durchmesser der Welle oder der Lageraufnahme ist vorzugsweise kleiner bzw. größer als das Innen- oder Außenringlager, damit die Übertragung nur durch den O-Ring (oder ein anderes Ausgleichselement 280) erfolgt.

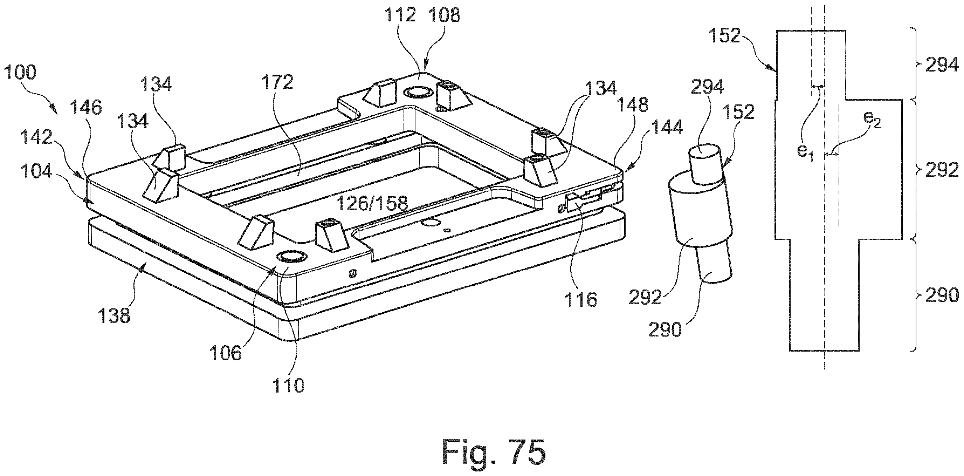

**Figur 75** zeigt eine dreidimensionale Ansicht eines Laborgeräts 100 gemäß einem anderen Ausführungsbeispiel der Erfindung mit rahmenförmiger Ausgleichsmasse 172, wobei ferner zwei Darstellungen eines ersten Exzenters 152 zu erkennen sind.

Die zwei Darstellungen (nämlich eine dreidimensionale Ansicht und eine Querschnittsansicht) zeigen den ersten Exzenter 152 als Doppelexzenter. Dieser Doppelexzenter ist aus einem ersten Wellenabschnitt 290, einem zweiten Wellenabschnitt 292 und einem dritten Wellenabschnitt bei 294 gebildet, wobei der zweite Wellenabschnitt 292 in axialer Richtung zwischen dem ersten Wellenabschnitt 290 und dem dritten Wellenabschnitt 294 angeordnet ist. Der zweite Wellenabschnitt 292 hat einen größeren Durchmesser als der erste Wellenabschnitt 290 und als der dritte Wellenabschnitt 294. Jeder der Wellenabschnitte 290, 292 und 294 ist als Kreiszylinder ausgebildet. Eine zentrale Achse des dritten Wellenabschnitts 294 ist gegenüber einer zentralen Achse des ersten Wellenabschnitts 290 um einen Wert e1 versetzt. Eine zentrale Achse des zweiten Wellenabschnitts 292 ist gegenüber der zentralen Achse des ersten Wellenabschluss 290 um einen Abstand e2 versetzt. Der erste Wellenabschnitt 290 ist im Trägerkörper 138, d.h. in dem ortsfesten Gestell, gelagert. Der zweite Wellenabschnitt 292 (mit der Exzentrizität e2) fungiert zum Auslenken der Ausgleichsmasse 172. Der dritte Wellenabschnitt 294 (mit der Exzentrizität ei) lenkt das Grundbauteil 104 aus.

Obgleich dies in Figur 75 nicht dargestellt ist, kann der zweite Exzenter 154 genauso ausgebildet sein wie der erste Exzenter 152.

Der dargestellte Doppelexzenter ist insbesondere für die Verwendung mit einer orbital bewegten rahmenförmigen Ausgleichsmasse 172 geeignet. Ein Vorteil einer rahmenförmigen Ausgleichsmasse 172 zum Vollführen einer Orbitalbewegung gegenüber rotierenden Ausgleichsmassen 172, wie bisher dargestellt, besteht darin, dass die Ausgleichsmasse 172 umlaufend im Randbereich untergebracht werden kann, wodurch gegenüber rotierenden Massen ein insgesamt kleinerer Bauraum des Laborgeräts 100 möglich wird. Ferner ist durch die höhere mögliche Masse damit ein Ausgleich noch größerer bewegter Massen möglich. Die rahmenförmige Ausgleichsmasse 172 wird vorzugsweise aus einem Material großer Dichte hergestellt und bewegt sich orbital wie das Grundbauteil 104, aber diesem exzentrisch zur Gestelllagerstelle (d.h. zur Lagerstelle des Trägerkörpers 138) gegenläufig. Anschaulich wird die rahmenförmige Ausgleichsmasse 172 gemäß Figur 75 so vorgesehen, dass diese nicht rotiert, sondern exzentrisch gegenläufig zum Grundbauteil 104 (d.h. dem Schütteltablar) und der Beladung (insbesondere mit dem Objektträger 102) bewegt wird. Bei einer solchen Konfiguration ist es höchst vorteilhaft, als ersten Exzenter 152 und als zweiten Exzenter 154 einen Doppelexzenter einzusetzen. Die als Doppelexzenter ausgebildeten Exzenter 152, 154 dienen zum Auslenken des Grundbauteils 104 und bewirken ein gegenläufiges Auslenken der (insbesondere rahmenförmigen) Ausgleichsmasse 172. Bei dem Exzenter 152 (bzw. 154) gemäß Figur 75 handelt es sich um einen Doppelexzenter mit einem drehbar im ortsfesten Trägerkörper 138 gelagerten Querschnitt bzw. Wellenabschnitt und zwei entgegengesetzt exzentrischen Querschnitten bzw. Wellenabschnitten (einer zur Auslenkung des Grundbauteils 104 und der andere zur Auslenkung der Ausgleichsmasse 172). Somit kann eine rahmenförmige Ausgleichsmasse 172 an dem ersten Exzenter 152 (vorteilhaft ausgebildet als Doppelexzenter) und/oder an einem zweiten Exzenter 154 (vorteilhaft ausgebildet als Doppelexzenter) angebracht und zwischen dem Trägerkörper 138 und dem Grundbauteil 104 angeordnet werden, um beim Mischen eine zu dem Grundbauteil 104 gegenläufige Bewegung auszuführen.

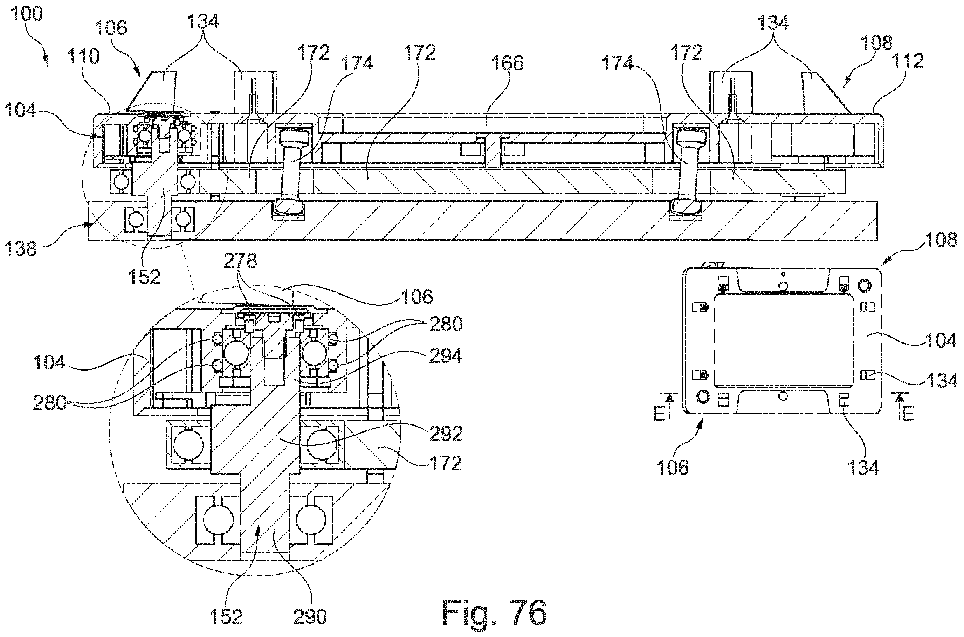

**Figur 76** zeigt unterschiedliche Ansichten von Komponenten des Laborgeräts 100 gemäß Figur 75. Genauer gesagt zeigt Figur 76 eine Schnittansicht entlang einer Schnittlinie E-E sowie ein Detail dieser Schnittansicht.

Insbesondere stellt Figur 76 nochmals die rahmenförmige Ausgleichsmasse 172 dar, die auch als Schüttelrahmen bezeichnet werden kann. Gemäß dem dargestellten Ausführungsbeispiel ist die Ausgleichsmasse 172 als rahmenförmiges, orbital entgegengesetzt bewegtes Bauteil zum Unwuchtausgleich ausgebildet.

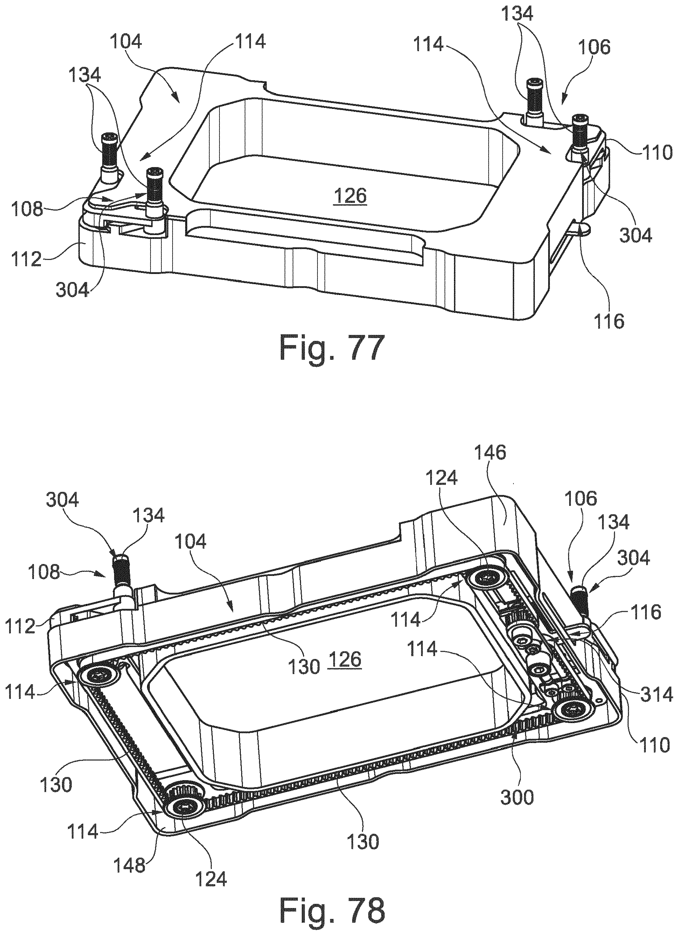

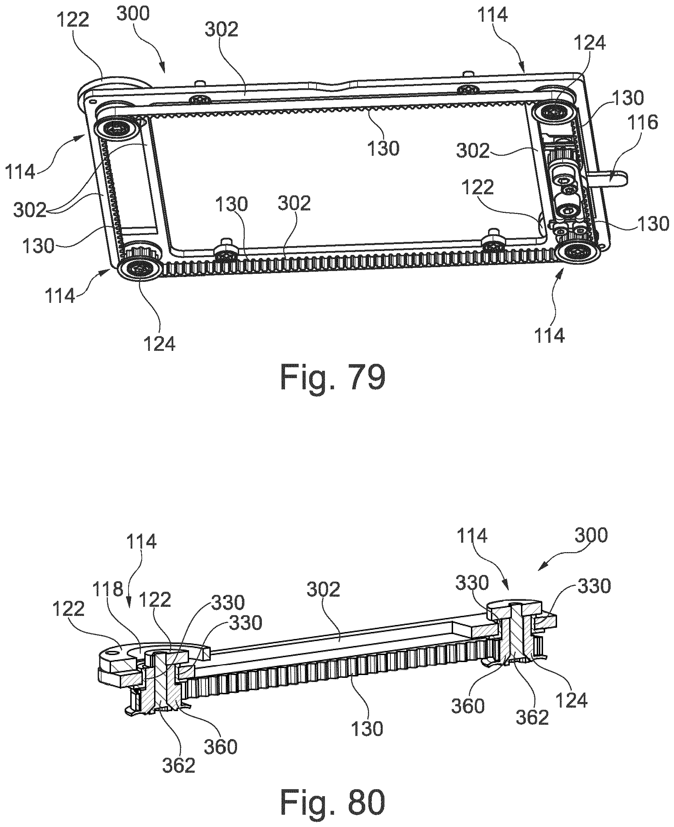

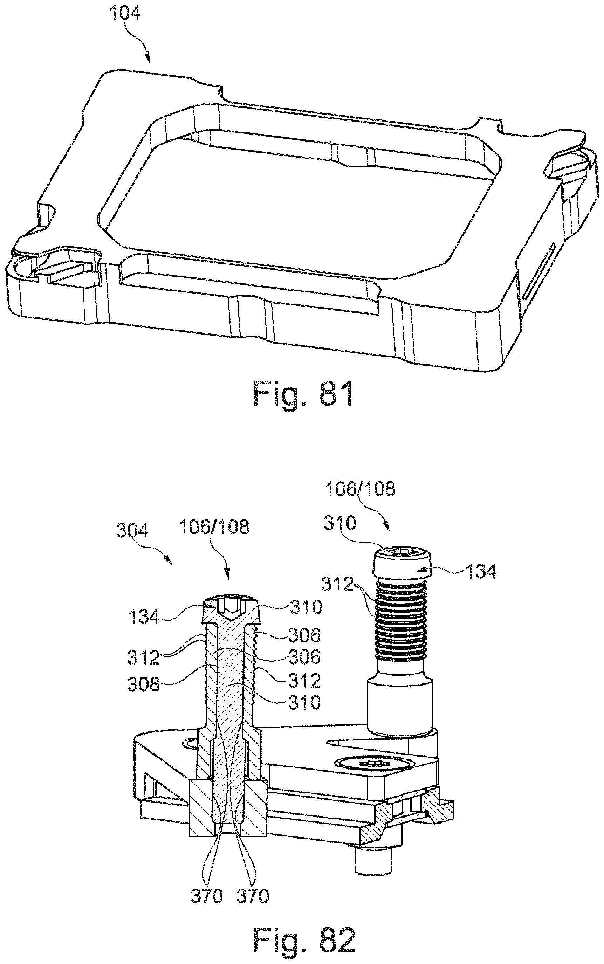

**Figur 77** zeigt eine dreidimensionale oberseitige Ansicht eines Grundbauteils 104 mit Positionieranschlägen 106, 108 und Fixiermechanismus 114 eines Laborgeräts 100 gemäß einem anderen exemplarischen Ausführungsbeispiel der Erfindung. **Figur 78** zeigt eine dreidimensionale unterseitige Ansicht des Grundbauteils 104 mit Positionieranschlägen 106, 108 und Fixiermechanismus 114 gemäß Figur 77. **Figur 79** zeigt eine dreidimensionale unterseitige Ansicht einer Funktionsbaugruppe 300 des Laborgeräts 100 gemäß Figur 77 und Figur 78. **Figur 80** zeigt eine Querschnittsansicht der Funktionsbaugruppe 300 gemäß Figur 79. **Figur 81** zeigt eine dreidimensionale Ansicht eines einstückigen Grundbauteils 104 des Laborgeräts 100 gemäß Figur 77 bis Figur 80.

Figur 77 bis Figur 81 zeigen ein als Objektlagervorrichtung ausgebildetes Laborgerät 100 mit automatisierbarer Feststellvorrichtung in Form des Fixiermechanismus 114 und mit zwei beweglichen Positionieranschlägen 106, 108. Das in Figur 77 bis Figur 81 dargestellte Ausführungsbeispiel zeichnet sich durch eine besonders geringe Komplexität, eine besonders geringe Anzahl von Bauteilen und durch eine besonders einfache Montage der dargestellten Baugruppen und des daraus zu fertigenden Laborgeräts 100 aus. Ein Laborgerät 100 gemäß Figur 77 bis Figur 81 kann insbesondere, aber nicht ausschließlich, zur Temperierung, Durchmischung und/oder Manipulation von biologischen Proben in einem Laborautomatisierungssystem eingesetzt werden.

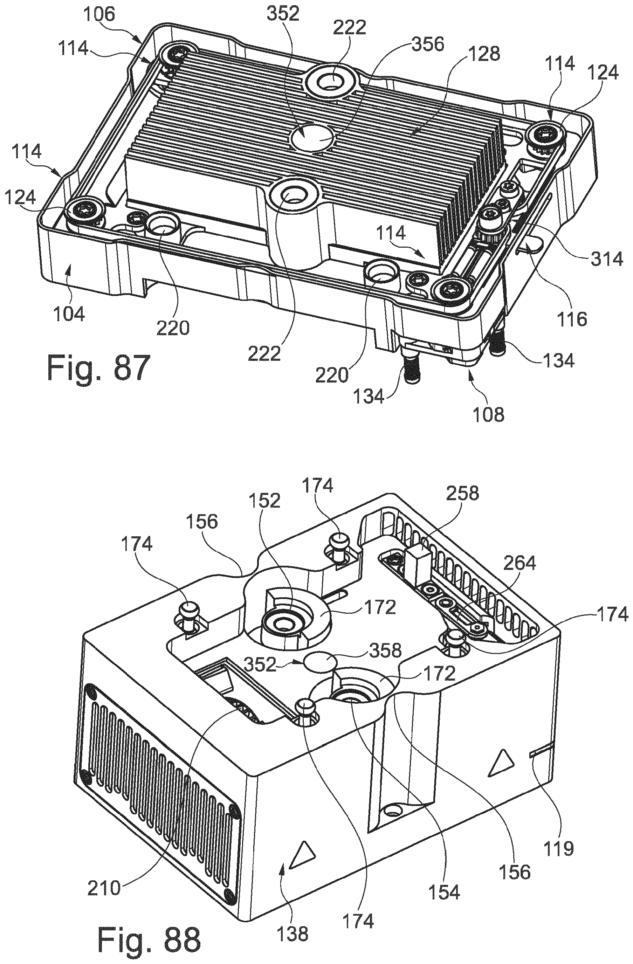

In Figur 78 (aber auch in Figur 87) ist eine Spannvorrichtung 314 gezeigt, die zum toleranzausgleichenden Spannen des ringförmig geschlossenen Kraftübertragungsmechanismus 130 ausgebildet ist. Der Kraftübertragungsmechanismus 130 gemäß Figur 78 ist ein Zahnriemen, der mittels der Spannvorrichtung 314 im Bereich der Betätigungseinrichtung 116 lokal gespannt bzw. umgeleitet werden kann, um Toleranzen zwischen den Dimensionen des Zahnriemens und den Dimensionen und Positionen der Komponenten der Betätigungseinrichtung 116 und des Fixiermechanismus 114 auszugleichen. Dies hat den Vorteil, dass an die Toleranzen der genannten Komponenten keine besonders strengen Anforderungen gestellt werden müssen, ohne die Betriebsgenauigkeit des Laborgeräts 100 negativ zu beeinflussen. Selbst größere Toleranzen können mittels der Spannvorrichtung 314 in einfacher Weise ausgeglichen werden.

Figur 79 zeigt die Funktionsbaugruppe 300 mit einem als strukturiertes Blech ausgebildeten Plattenträger 302, an dem Komponenten der Betätigungseinrichtung 116 und des Fixiermechanismus 114 vormontiert sind. Genauer gesagt zeigt Figur 79 eine Vormontagebaugruppe in Form der Funktionsbaugruppe 300 ohne Grundbauteil 104 und ohne Positionierbaugruppen 304 (siehe Figur 82). Die beschriebene Konfiguration führt zu einer besonders einfachen Fertigung und Vormontage. Die vertikal kompakte und in effizienter Weise vormontierbare Funktionsbaugruppe 300 führt zu einer geringen Bauhöhe und zu einer einfachen Herstellbarkeit des Laborgeräts 100. Zudem ist, wie in Figur 81 dargestellt, das Grundbauteil 104 einstückig und einstoffig ausgebildet und zum Aufnehmen der vormontierten Funktionsbaugruppe 300 sowie von Positionierbaugruppen 304 ausgebildet, die den ersten Positionieranschlag 106 bzw. den zweiten Positionieranschlag 108 bilden und zum Beispiel ausgebildet sein können, wie in Figur 82 dargestellt. Durch Montage der genannten Baugruppen kann die in Figur 78 dargestellte Konfiguration erhalten werden.

Figur 80 zeigt einen Schnitt durch die Lagerung einer Führungsscheibe 122 (bzw. Kurvenscheibe) und einer Umlenkrolle 124 (wobei bei Vorsehen von vier Positionieranschlägen an der Stelle der Umlenkrolle 124 auch eine jeweilige weitere Kurvenscheibe bzw. Führungsscheibe 122 montiert werden kann). Zu sehen ist in Figur 80, dass für die drehbare Lagerung sämtlicher Führungsscheiben 122 und Umlenkrollen 124 des Zahnriementriebs Gleitlager 330 verwendet werden können. Dies erlaubt eine einfache und kostengünstige Fertigung sowie einen robusten Betrieb. Alternativ zu den Gleitlagern 330 können aber auch andere Lagertypen verwendet werden, zum Beispiel Kugellager. Der Plattenträger 302 ist hier als Basisblech ausgebildet. Bezugszeichen 360 zeigt eine Zahnriemenscheibe mit Wellenfortsatz. Darüber hinaus ist ein zum Beispiel als Schraube ausgebildetes Befestigungselement 362 vorgesehen. In Figur 80 ist also zu erkennen, dass die als Führungsscheibe 122 ausgebildete Führungsstruktur mittels eines Gleitlagers 330 drehbar an dem Grundbauteil 104 gelagert werden kann. Wie ebenfalls in Figur 80 gezeigt ist, ist die als Führungsscheibe 122 ausgebildete Führungsstruktur in einer anderen Ecke des Grundbauteils 104 angeordnet als eine ebenfalls mittels eines weiteren Gleitlagers 330 gelagerte Umlenkrolle 124. Die Verwendung eines jeweiligen Gleitlagers 130 stellt eine mechanisch einfache Konfiguration dar, die zu einem kompakten und einfach herstellbaren Laborgerät 100 führt. Vorteilhaft können zur drehbaren Lagerung sämtlicher Führungsscheiben 122 (insbesondere Kurvenscheiben) und Umlenkrollen 124 des Zahnriemenmechanismus Gleitlager 330 vorgesehen werden, wie in Figur 80 dargestellt.

Das Laborgerät 100 ist aus dem in Figur 81 dargestellten Grundbauteil 104 als Basisteil, in Figur 82 gezeigten Positionierbaugruppen 304 (auch als Baugruppe Positionierschieber bezeichnet) und der auf einem blechförmigen Basisteil vormontierten Funktionsbaugruppe 300 gemäß Figur 79 aufgebaut. Das Grundbauteil 104 gemäß Figur 81 ist für das Anbringen von zwei Positionieranschlägen 106, 108 konfiguriert. Die Funktionsbaugruppe 300 nimmt sämtliche Bauteile des Fixiermechanismus 114 und der Betätigungseinrichtung 116 auf. Die Positionierschieber bzw. Positionierbaugruppen 304 gemäß Figur 82 können daran im Rahmen einer Endmontage montiert werden. Die Funktionsbaugruppe 300 gemäß Figur 79 kann komplett vormontiert und eingestellt werden. Dies vereinfacht den Herstellungsaufwand deutlich.

Zur Fertigmontage werden die vormontierten Positionierbaugruppen 304 (oder Positionierschieber) gemäß Figur 82 in die Führungen des Grundbauteils 104 (oder Basisteils) gemäß Figur 81 eingesetzt und dann die Funktionsbaugruppe 300 gemäß Figur 79 in das Grundbauteil 104 eingeschraubt.

**Figur 82** zeigt eine Querschnittsansicht einer Positionierbaugruppe 304 mit Positionieranschlägen 106, 108 eines Laborgeräts 100 gemäß einem exemplarischen Ausführungsbeispiel der Erfindung.

Insbesondere ist in Figur 82 dargestellt, dass ein jeweiliger des ersten Positionieranschlags 106 und des zweiten Positionieranschlags 108 eine Positionierhülse 306 mit einem Durchgangsloch 308 aufweisen kann. Ein zum Beispiel als Schraube ausgebildetes Befestigungselement 310 kann zum Befestigen der Positionierhülse 306 in das Durchgangsloch 308 eingeführt werden. Das Befestigungselement 310 kann ein Außengewinde aufweisen, das mit einem optionalen Innengewinde 370 der Positionierhülse 306 verschraubt werden kann.

Ebenfalls in Figur 82 dargestellt ist, dass ein jeweiliger des ersten Positionieranschlags 106 und des zweiten Positionieranschlags 108 eine außenseitige Profilierung 312 aufweisen kann, die im dargestellten Ausführungsbeispiel ein Außengewinde an einer Außenseite der Positionierhülse 306 ist. Anschaulich dient die Profilierung 312 zum Ineingriffnehmen des Objektträgers 102 während des Betriebs des Laborgeräts 100. Beispielsweise kann das Außengewinde ein Stück weit in Kunststoffmaterial eines zum Beispiel als Mikrotiterplatte ausgebildeten Objektträgers 102 eindringen und dadurch den Objektträger 102 sicher zwischen den Positionieranschlägen 106, 108 halten. Insbesondere kann dadurch ein unerwünschtes vertikales Abheben des Objektträgers 102 in Betrieb vermieden werden.

Somit ist in Figur 82 dargestellt, dass die Positionierhülsen 306 der Positionierstifte 134 mit einem Außengewinde oder einer anderen Profilierung 312 ausgestattet werden können. Diese Positionierhülsen 306 können mit dem im dargestellten Ausführungsbeispiel als Schraube ausgebildeten Befestigungselement 310 mit dem Schieber verbunden werden, was einen einfachen Wechsel im Falle notwendiger Anpassungen ermöglicht. Die hier als Außengewinde realisierte Profilierung 312 kann als zylindrisches Gewinde oder als ein Kegelgewinde ausgebildet werden, wenn die Positionierhülse 306 konisch ist. Aufgrund der resultierenden Rauheit kann auf diese Weise eine zuverlässige reibschlüssige Verbindung zu meist aus Kunststoff bestehenden Objektträgern 102 (insbesondere Laborgefäße wie zum Beispiel Mikrotiterplatten) ausgebildet werden. Hierdurch kann ein guter und sicherer Halt zum Beispiel, aber nicht ausschließlich, beim Einsatz des Laborgeräts 100 als Mischvorrichtung erzielt werden.

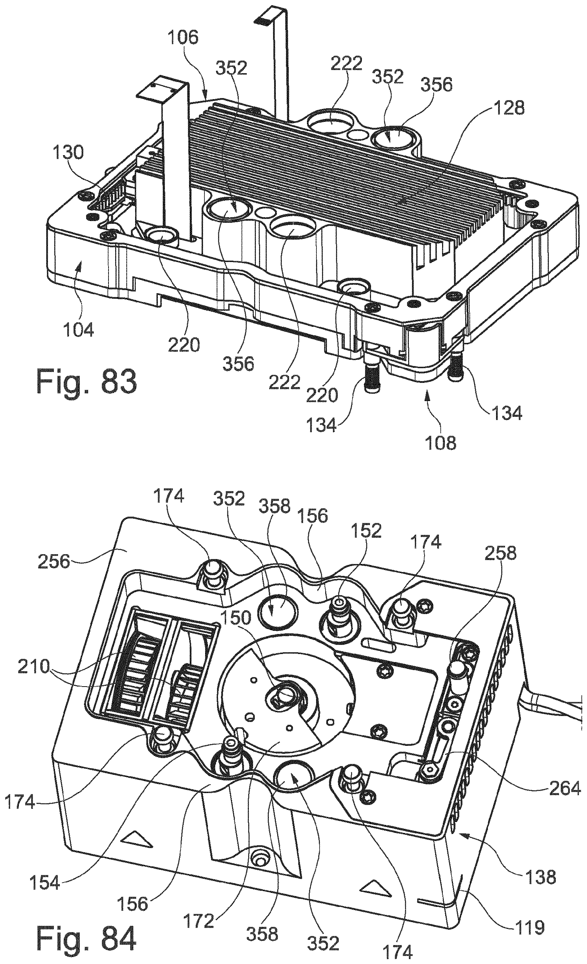

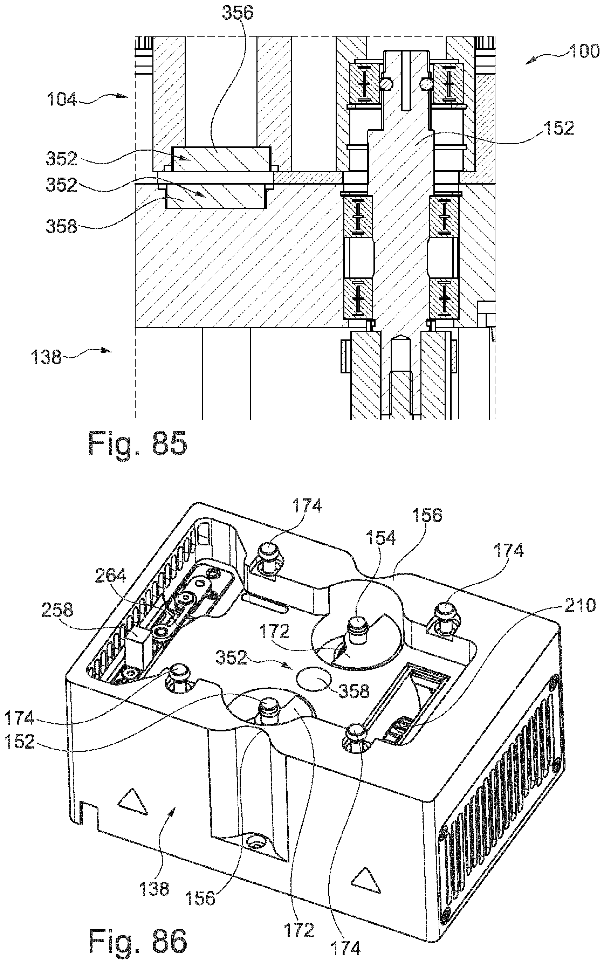

**Figur 83** zeigt eine dreidimensionale unterseitige Ansicht eines Grundbauteils 104 mit Positionieranschlägen 106, 108 und Fixiermechanismus 114 sowie einer als Kühlkörper ausgebildeten Wechselwirkungseinrichtung 128 eines Laborgeräts 100. Vorteilhaft ist besagtes Laborgerät 100 mit einem Teil einer im Weiteren näher beschriebenen Normalkrafterzeugungseinrichtung 352 ausgerüstet. **Figur 84** zeigt eine dreidimensionale oberseitige Ansicht eines Trägerkörpers 138 des Laborgeräts 100 mit einem anderen Teil der Normalkrafterzeugungseinrichtung 352 zum Zusammenwirken mit dem Grundbauteil 104 gemäß Figur 83. **Figur 85** zeigt eine Querschnittsansicht eines Laborgeräts 100 mit Normalkrafterzeugungseinrichtung 352 gemäß einem exemplarischen Ausführungsbeispiel der Erfindung und zeigt einen Kopplungsbereich zwischen dem Grundbauteil 104 gemäß Figur 83 und dem Trägerkörper 138 gemäß Figur 84. Das Laborgerät 100 gemäß Figur 83 bis Figur 85 kann zum Beispiel als Mischvorrichtung für Objekte, wie zum Beispiel Probenbehälter, ausgebildet sein.

Wie bereits angesprochen, weist das Laborgerät 100 gemäß Figur 83 bis Figur 85 die Normalkrafterzeugungseinrichtung 352 zum Erzeugen einer Normalkraft zum Hemmen eines Abhebens des bewegbaren Grundbauteils 104 von dem Trägerkörper 138 bzw. genauer gesagt der Pendelstützen 174 zwischen dem Trägerkörper 138 und dem Grundbauteil 104 auf. Anschaulich erzeugt die Normalkrafterzeugungseinrichtung 352 eine vertikale Anziehungskraft zwischen Trägerkörper 138 und Grundbauteil 104. Gemäß Figur 83 und Figur 84 weist die Normalkrafterzeugungseinrichtung 352 zwei Normalkrafterzeugungsmagnete 356 am Grundbauteil 104 sowie zwei damit zusammenwirkende Normalkrafterzeugungsmagnete 358 am Trägerkörper 138 auf. Die Normalkrafterzeugungsmagnete 356, 358 gemäß Figur 83 bis Figur 85 sind einander anziehend ausgebildet. Nah beieinander angeordnete anziehende Normalkrafterzeugungsmagnete 356, 358 haben den Vorteil, die Elektronik des Laborgeräts 100 allenfalls geringfügig zu beeinflussen. Durch die Konfiguration der Normalkrafterzeugungseinrichtung 352 und der Mischantriebsmechanismus 140 gemäß Figur 83 bis Figur 85 ist die Normalkrafterzeugung mittels der Normalkrafterzeugungseinrichtung 352 funktional von einer Horizontalkrafterzeugung mittels des Mischantriebsmechanismus 140 entkoppelt.

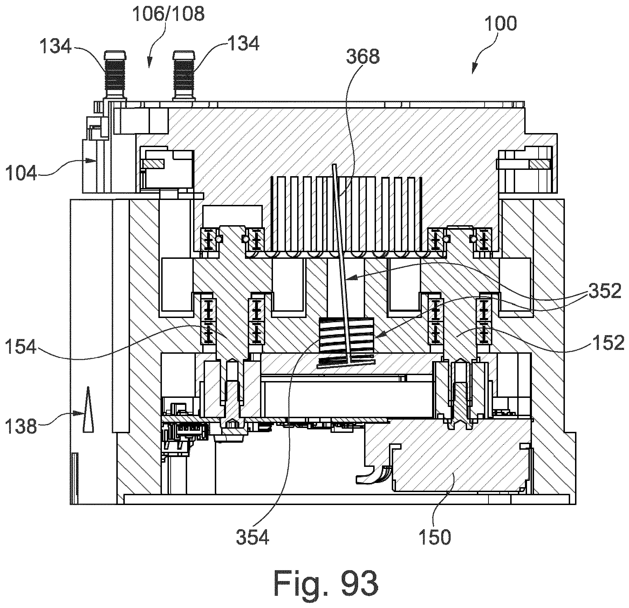

Genauer gesagt wird die mittels der Normalkrafterzeugungseinrichtung 352 erzeugte Normalkraft auf die Pendelstützen 174 übertragen. Eine solche Normalkrafterzeugungseinrichtung 352 kann beispielsweise mit Magneten (wie in Figur 83 bis Figur 85) und/oder mit Federelementen (siehe Figur 93) realisiert werden. Die Normalkrafterzeugungsmagnete 356, 358 können direkt an Trägerkörper 138 (auch als Gestell bezeichnet) bzw. an Grundbauteil 104 (auch als Schütteltablar bezeichnet) angebracht werden. Dies hat den Vorteil, dass die erzeugte Normalkraft Kugellager 222 der Exzenter 152, 154 nicht mehr als notwendig axial belastet. Die mittels der Normalkrafterzeugungseinrichtung 352 erzeugte Normalkraft ist vorteilhaft, um sicherzustellen, dass das Grundbauteil 104 bei seiner Bewegung stets auf Lagerelementen (im dargestellten Ausführungsbeispiel realisiert als Pendelstützen 174) aufliegt.

Eine Übertragung von Axialkräften direkt über Rotationslager (insbesondere über Lagerinnenring - Wälzkörper - Lageraußenring) wäre im Fall großer Lasten oder Kippmomente und der Verwendung von Rillenkugellagern (hohe Radialkräfte, geringe Axialkräfte) nicht ideal und zwänge zur Wahl geometrisch großer Lager, die konstruktiv untergebracht werden müssen.

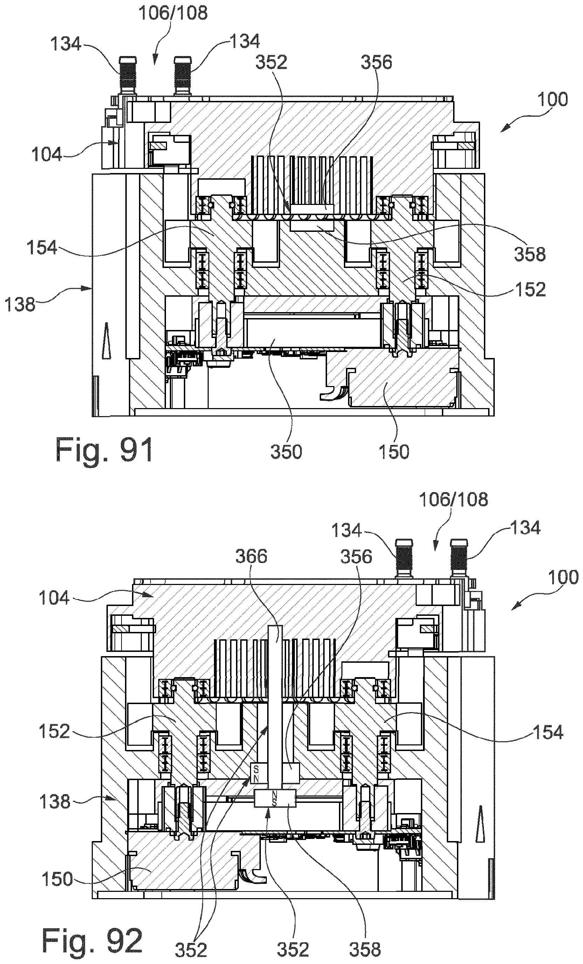

Ideal ist es hingegen, wie bei dem Ausführungsbeispiel gemäß Figur 83 bis Figur 85, die Erzeugung der Normalkraft direkt zwischen den beteiligten Bauteilen ohne die Beteiligung eines Rotations-Lagers vorzunehmen. Dies ist gemäß Figur 83 bis Figur 85 dadurch ermöglicht, dass im Trägerkörper 138 und im Grundbauteil 104 als Permanentmagnete ausgebildete Normalkrafterzeugungsmagnete 356, 358 implementiert werden und diese attraktiv (oder repulsiv, siehe Figur 92) miteinander gekoppelt werden.

In Figur 83 ist das als Schütteltablar ausgebildete Grundbauteil 104 von unten dargestellt. Zu sehen sind zwei als Permanentmagnete ausgebildete Normalkrafterzeugungsmagnete 356, die im Tablar in der Nähe der Lager (alternativ oder ergänzend aber auch an anderen Stellen möglich) eingeklebt werden können und zusammen mit einem jeweiligen weiteren attraktivem Normalkrafterzeugungsmagnet 358 im als Gestell ausgebildeten Trägerkörper 138 für eine Normalkraft in Richtung Gestell (somit auf die Pendelstützen 174) sorgen.

Mit Vorteil wird dadurch die Normal- oder Axialkraft direkt über die Normalkrafterzeugungsmagnete 356, 358 (attraktiv oder abstoßend) zwischen den Bauteilen (d.h. Trägerkörper 138 und Grundbauteil 104) erzeugt.

Figur 84 zeigt den als Gestell ausgebildeten Trägerkörper 138 von oben. Zu sehen sind hier zwei als Permanentmagnete ausgebildete Normalkrafterzeugungsmagnete 358, die für eine Normalkraft in Richtung des als Schütteltablar ausgebildeten Grundbauteils 104 sorgen.

Vorteilhaft wird mit der Konfiguration gemäß Figur 83 und Figur 84 die Normalkraft daher nicht über die jeweilige exzentrische Welle geleitet. Dadurch werden die Lager (insbesondere Kugellager 222) der Exzenter 152, 154 axial allenfalls sehr geringfügig belastet, was zu einer hohen Zuverlässigkeit und einer großen Lebensdauer führt.

Figur 85 zeigt einen Schnitt durch eine Exzenterwelle für das Beispiel für ein attraktives Permanentmagnetpaar gemäß Figur 83 und Figur 84. Andere Geometrien sind möglich. Vorteilhaft sind Geometrien, bei denen die Axialkraft nicht über die Welle übertragen wird, sondern direkt von Schütteltablar zu Gestell.

Die im Weiteren beschriebenen Ausführungsbeispiele gemäß Figur 86 bis Figur 90 zeigen als Mischvorrichtung ausgebildete Laborgeräte 100 mit zwei Exzentern 152, 154 mit Exzenterwellen, von denen eine direkt von einer als Motor ausgebildeten Antriebseinrichtung 150 angetrieben wird und nur ein einziger Zahnriementrieb zum indirekten Antreiben der anderen Exzenterwelle benötigt wird.

**Figur 86** zeigt eine dreidimensionale Ansicht eines Trägerkörpers 138 eines Laborgeräts 100 mit Normalkrafterzeugungseinrichtung 352 gemäß einem exemplarischen Ausführungsbeispiel der Erfindung. **Figur 87** zeigt eine dreidimensionale unterseitige Ansicht eines Grundbauteils 104 mit Positionieranschlägen 106, 108 und Fixiermechanismus 114 sowie einem Kühlkörper eines Laborgeräts 100 mit Normalkrafterzeugungseinrichtung 352 zum Zusammenwirken mit dem Trägerkörper 138 gemäß Figur 86.

Somit zeigt Figur 86 eine alternative Ausführung eines Gestells oder Trägerkörpers 138 mit zwei Exzentern 152, 154 in einer Ansicht von oben. Bei diesem Ausführungsbeispiel kann eine Normalkraft über einen einzigen attraktiven Permanentmagneten als Normalkrafterzeugungsmagnet 358 erzeugt werden. In entsprechender Weise zeigt Figur 87 eine alternative Ausführung eines Schütteltablars oder Grundbauteils 104 in einer Ansicht von unten, bei dem die Normalkraft über einen einzigen attraktiven Permanentmagneten als Normalkrafterzeugungsmagnet 356 erzeugt werden kann. Gemäß Figur 86 und Figur 87 hat also der Trägerkörper 138 nur einen einzigen
Normalkrafterzeugungsmagnet 358 und hat das Grundbauteil 104 nur einen einzigen Normalkrafterzeugungsmagnet 356. Alternativ kann eine andere mittige Magnet- oder Federanordnung implementiert werden, bei der die Axialkraft nicht über die Exzenterwellen und -lager geleitet wird, sondern direkt zwischen dem Grundbauteil 104 und dem Trägerkörper 138. Es kann zum Beispiel auch eine Feder oder ein anderes Krafterzeugungselement mittig angeordnet werden, welches zum Erzeugen einer Kraft zwischen dem Grundbauteil 104 und dem Trägerkörper 138 beitragen kann.

Gemäß Figur 86 sind Ausgleichsmassen 172 direkt am jeweiligen Exzenter 152, 154 angebracht. Dadurch können mit Vorteil Unwuchten beim Betrieb der Exzenter 152, 144 direkt am Ort der Entstehung ausgeglichen werden. Dies verringert die auf diverse Bauteile des Laborgeräts 100 einwirkenden Kräfte, vermindert daher Verschleiß und führt zu einer erhöhten Lebensdauer.

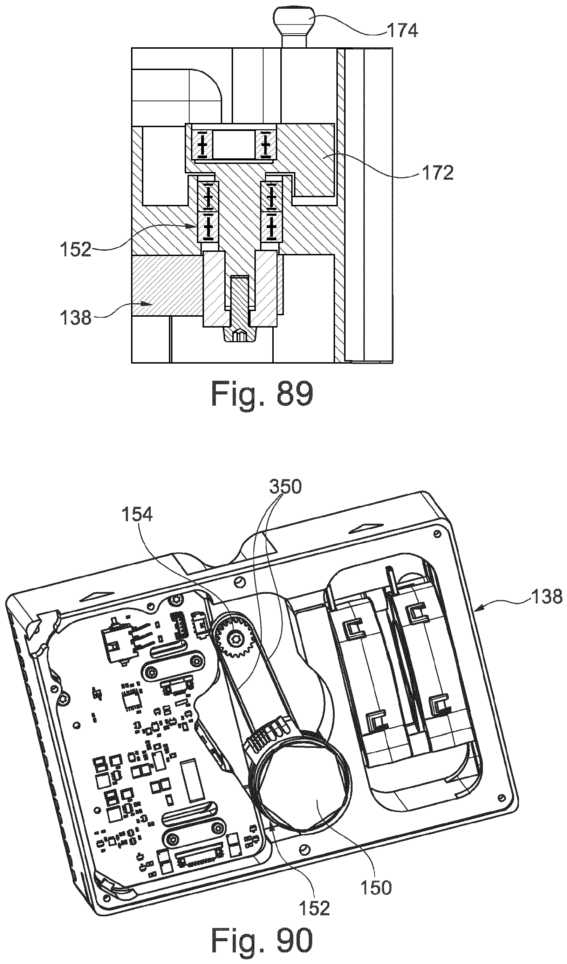

**Figur 88** zeigt eine dreidimensionale Ansicht eines Trägerkörpers 138 eines Laborgeräts 100 mit einem Teil einer Normalkrafterzeugungseinrichtung 352 gemäß einem anderen exemplarischen Ausführungsbeispiel der Erfindung. **Figur 89** zeigt eine Querschnittsansicht eines Laborgeräts 100 mit Normalkrafterzeugungseinrichtung 352 gemäß einem exemplarischen Ausführungsbeispiel der Erfindung, bei welcher der Trägerkörper 138 gemäß Figur 88 implementiert sein kann.

Figur 88 zeigt eine alternative Ausführung eines als Gestell ausgebildeten Trägerkörpers 138 mit zwei Ausgleichsmassen 172 direkt an dem jeweiligen Exzenter 152, 154 von oben. Eine Normalkraft kann hier zum Beispiel auch über einen attraktiven Permanentmagneten erzeugt werden, oder durch eine andere mittige Magnet- oder Federanordnung, bei der die Axialkraft nicht über die Exzenterwellen und Lager geleitet wird, sondern direkt zwischen den Bauteilen Gestell und Schütteltablar erzeugt wird. Es kann auch eine Feder mittig angeordnet sein oder ein anderes Element, welches eine Kraft zwischen den Bauteilen erzeugen kann.

Figur 89 zeigt einen Schnitt durch eine Ausgleichsmasse 172 mit exzentrisch eingesetztem Lager. Im Grundbauteil 104 stehen bei diesem Ausführungsbeispiel nur zwei feste Stifte in den Innenring des Lagers hinein, wodurch dieses ausgelenkt wird.

Das beschriebene Ausführungsbeispiel hat Vorteile: So ist eine Anpassung der Exzentrizität bzw. der Amplitude des Laborgerät 100 durch den bloßen Austausch der Ausgleichsmasse 172 möglich. In einer Standardkonfiguration (separate Ausgleichsmasse 172 und Welle des jeweiligen Exzenters 152, 154) können beide Bauteile (Exzenterwelle Amplitude/Exzentrizität und Ausgleichsmasse Unwuchtvermögen) angepasst werden. Änderungen der Mischamplitude können beim Mischen mittels orbitaler Kreisbewegung vorkommen.

**Figur 90** zeigt eine dreidimensionale Ansicht eines Trägerkörpers 138 eines Laborgeräts 100 gemäß einem exemplarischen Ausführungsbeispiel der Erfindung. **Figur 91** zeigt eine Querschnittsansicht des Laborgeräts 100 gemäß Figur 90.

Gemäß Figur 90 und Figur 91 ist der erste Exzenter 152 direkt auf der Antriebseinrichtung 150 montiert. Der zweite Exzenter 154 hingegen ist mittels eines Kraftübertragungsriemens 350 mit dem ersten Exzenter 152 und der Antriebseinrichtung 150 kraftgekoppelt. Dadurch können Bauteile zum Koppeln des ersten Exzenters 152 mit der Antriebseinrichtung 150 entfallen, wodurch das zugehörige Laborgerät 100 kompakt und einfach ausgebildet werden kann. Somit kann gemäß Figur 90 und Figur 91 eine der beiden Exzenterwellen direkt vom Motor angetrieben werden. Es ist nur ein (beispielsweise als Zahnriemen ausgebildeter) Kraftübertragungsriemen 350 ausreichend, und die Konstruktion kommt mit einer besonders geringen Anzahl von Bauteilen und Lagern aus.

Da bei dem Ausführungsbeispiel gemäß Figur 90 und Figur 91 sämtliche entstehenden Unwuchten direkt an einer Lagerstelle ausgeglichen werden, ergibt sich eine besonders hohe Zuverlässigkeit und Lebensdauer.

In der Schnittansicht gemäß Figur 91 ist zu erkennen, dass das Laborgerät 100 mit einem einzigen mittig angeordneten Paar von Permanentmagneten als Normalkrafterzeugungseinrichtung 352 auskommt. Genauer gesagt hat gemäß Figur 90 und Figur 91 das Grundbauteil 104 nur einen Normalkrafterzeugungsmagnet 356 und hat der Trägerkörper 138 nur einen Normalkrafterzeugungsmagnet 358.

**Figur 92** zeigt eine Querschnittsansicht eines Laborgeräts 100 mit Normalkrafterzeugungseinrichtung 352 gemäß einem anderen exemplarischen Ausführungsbeispiel der Erfindung.

Gemäß Figur 92 weist die Normalkrafterzeugungseinrichtung 352 ein mit einem ersten Normalkrafterzeugungsmagnet 358 starr verbundenes und durch einen zweiten Normalkrafterzeugungsmagnet 356 hindurchgeführtes starres Element 366 auf, zum Beispiel ein Bolzen. Das starre Element 366 ist an dem Grundbauteil 104 angebracht, wohingegen der zweite Normalkrafterzeugungsmagnet 356 an dem Trägerkörper 138 angebracht ist. Bewegt sich das Grundbauteil 104 samt dem daran angebrachten starren Element 366 von Trägerkörper 138 weg, wird der erste Normalkrafterzeugungsmagnet 358 mitgenommen und dadurch in Richtung des ortsfest am Trägerkörper 138 angebrachten zweiten Normalkrafterzeugungsmagnet 356 bewegt. Sind die Normalkrafterzeugungsmagnete 356, 358 abstoßend, führt der beschriebene Mechanismus zu einer magnetischen Abstoßungskraft, die das Grundbauteil 104 zum Trägerkörper 138 zurückzieht.

Bei dem Ausführungsbeispiel gemäß Figur 92 sind die zwei Normalkrafterzeugungsmagnete 356, 358 also einander abstoßend ausgebildet. Dies ist anhand der Bezeichnung "S" für Südpol bzw. "N" für Nordpol ersichtlich. Figur 92 zeigt einen Schnitt durch das Laborgerät 100, das die beschriebene Normalkrafterzeugungseinrichtung 352 zur Erzeugung der Normalkraft durch repulsive Permanentmagnete als Normalkrafterzeugungsmagnete 356, 358 aufweist. Das starre Element 366 (zum Beispiel ein Bolzen) am als Schütteltablar ausgebildeten Grundbauteil 104 ragt durch einen hier als Scheibenmagnet bzw. Ringmagnet ausgebildeten zweiten Normalkrafterzeugungsmagnet 356 im als Gestell ausgebildeten Trägerkörper 138 hindurch. Ferner wird am Ende des starren Elements 366 ein weiterer (insbesondere als Permanentmagnet ausgebildeter) Normalkrafterzeugungsmagnet, nämlich der erste Normalkrafterzeugungsmagnet 358, befestigt. Ein Scheibenmagnet ist vorteilhaft, um die exzentrische Bewegung zwischen Gestell und Schütteltablar zu fördern. Insbesondere kann der erste Normalkrafterzeugungsmagnet 358 einstückig mit dem starren Element 366 verbunden werden. Der zweite Normalkrafterzeugungsmagnet 356 kann fest im Trägerkörper 138 verankert werden. Da sich der zweite Normalkrafterzeugungsmagnet 356 nicht bewegen kann und der erste Normalkrafterzeugungsmagnet 358 eine abstoßende Kraft nach unten erfährt, wird das Grundbauteil 104 zum Trägerkörper 138 gezogen.

**Figur 93** zeigt eine Querschnittsansicht eines Laborgeräts 100 mit Normalkrafterzeugungseinrichtung 352 gemäß einem anderen exemplarischen Ausführungsbeispiel der Erfindung.

Gemäß Figur 93 weist die Normalkrafterzeugungseinrichtung 352 eine das Grundbauteil 104 mit dem Trägerkörper 138 koppelnde Normalkrafterzeugungsfeder 354 auf. Ferner weist gemäß Figur 93 die Normalkrafterzeugungseinrichtung 352 ein mit der Normalkrafterzeugungsfeder 354 wirkverbundenes biegbares Element 368 auf, wobei das biegbare Element 368 an dem Grundbauteil 104 angebracht ist und die Normalkrafterzeugungsfeder 354 an dem Trägerkörper 138 angebracht ist. Das biegbare Element 368 kann in Zugrichtung starr, aber quer zur Zugrichtung flexibel sein. Das an dem Grundbauteil 104 angebrachte biegbare Element 368 (zum Beispiel ein Seil oder Draht) kann aufgrund seiner Biegbarkeit Mischbewegungen in einer Horizontalebene folgen. Die an dem Trägerkörper 138 angebrachte und vorgespannte Normalkrafterzeugungsfeder 354 kann ein Abheben des Grundbauteils 104 vom Trägerkörper 138 hemmen und mittels des biegbaren Elements 368 das Grundbauteil 104 nach unten zurückziehen.

Wiederum zeigt Figur 93 einen Schnitt durch das Laborgerät 100, bei dem eine Erzeugung der Normalkraft durch ein vorgespanntes Federelement in Form der Normalkrafterzeugungsfeder 354 und ein biegbares Element 368 (zum Beispiel ein Seil, ein Draht, etc.) bewerkstelligt wird. Das biegbare Element 368 dient zum Ausgleichen der Amplitude und/oder der Exzentrizität zwischen Trägerkörper 138 und Grundbauteil 104. Anschaulich zieht die Normalkrafterzeugungsfeder 354 das biegbare Element 368 nach unten, wodurch das Grundbauteil 104 zum Trägerkörper 138 gezogen wird. Die Konfiguration mit einer Normalkrafterzeugungsfeder 354 erlaubt eine flüssigkeitsdichte Realisierung von Grundbauteil 104 bzw. Trägerkörper 138, was von Vorteil sein kann, wenn zum Beispiel bei Kühlanwendungen des Laborgeräts 100 Kondensat entsteht, das dann nicht ins Innere eindringen kann. Die flüssigkeitsdichte Konfiguration kann anschaulich dadurch erreicht werden, dass im Grundbauteil 104 von oben her keine Durchbrüche zur Vorspannung der Feder notwendig sind.

Gemäß Figur 93 kann durch ein oder mehrere Federelemente eine Normalkraft direkt zwischen Trägerkörper 138 (auch als Gestell bezeichnet) und Grundbauteil 104 (auch als Schütteltablar bezeichnet) erzeugt werden, ohne die Rotationslager der Exzenter 152, 154 zu belasten. Dies verringert die mechanische Belastung und somit den Verschleiß der Exzenter 152, 154 und vergrößert daher deren Lebensdauer. Alternativ zu der Konstruktion gemäß Figur 93 ist es zum Beispiel auch möglich, eine Zugfeder zwischen Grundbauteil 104 und Trägerkörper 138 einzuhängen.

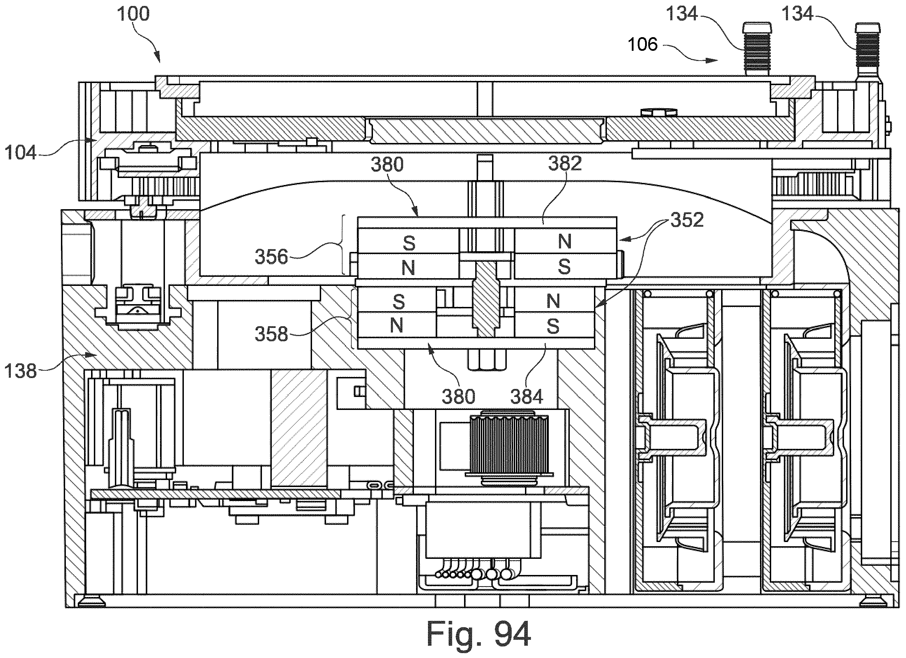

**Figur 94** zeigt eine Querschnittsansicht eines Laborgeräts 100 mit einer Normalkrafterzeugungseinrichtung 352 und einer Magnetfeldabschirmeinrichtung 380 gemäß einem anderen exemplarischen Ausführungsbeispiel der Erfindung.

Gemäß Figur 94 weist die Normalkrafterzeugungseinrichtung 352 eine Magnetfeldabschirmeinrichtung 380 auf, die durch zwei einander gegenüberliegende ferromagnetische Abschlussbleche ausgebildet ist. Die Magnetfeldabschirmeinrichtung 380 dient zum Abschirmen eines von den Normalkrafterzeugungsmagneten 356, 358 erzeugten Magnetfelds. Genauer gesagt sind gemäß Figur 94 die Normalkrafterzeugungsmagnete 356 des Grundbauteils 104 und die Normalkrafterzeugungsmagnete 358 des Trägerkörpers 138 einander paarweise anziehend ausgebildet. Das Grundbauteil 104 weist zwei zueinander antiparallel orientierte Normalkrafterzeugungsmagnete 358 auf. In entsprechender Weise weist der Trägerkörper 138 zwei zueinander antiparallel orientierte Normalkrafterzeugungsmagnete 356 auf. Jeder der Normalkrafterzeugungsmagnete 358 ist einem jeweiligen der Normalkrafterzeugungsmagnete 356 gegenüberliegend angeordnet, sodass zwischen dem jeweiligen Paar von Normalkrafterzeugungsmagneten 358, 356 eine anziehende magnetische Kraft erzeugt wird. An einer den Normalkrafterzeugungsmagneten 358 abgewandten Seite der Normalkrafterzeugungsmagnete 356 ist ein erstes ferromagnetisches Abschirmblech 382 der Magnetfeldabschirmeinrichtung 380 angeordnet. In entsprechender Weise ist an einer den Normalkrafterzeugungsmagneten 356 abgewandten Seite der Normalkrafterzeugungsmagnete 358 ist ein zweites ferromagnetisches Abschirmblech 384 der Magnetfeldabschirmeinrichtung 380 angeordnet.

In dem Ausführungsbeispiel gemäß Figur 94 sind somit die Normalkrafterzeugungsmagnete 356, 358 als anziehende Permanentmagnete ausgebildet, die mit magnetischen Rückschlussblechen in Form der Abschirmbleche 382, 384 versehen sind. Bei dem Laborgerät 100 gemäß Figur 94 werden also die anziehenden Permanentmagnete zusätzlich mittels ferromagnetischer Rückschlussbleche gekoppelt. In der Schnittdarstellung gemäß Figur 94 ist ein als Mischvorrichtung ausgebildetes Laborgerät 100 gezeigt, bei dem vier Permanentmagnete (zwei oben im beweglichen Grundbauteil 104, zwei unten im ortsfesten Gestell bzw. im Trägerkörper 138) anziehend zueinander angeordnet und auf der Rückseite durch Rückschlussbleche miteinander gekoppelt. Durch Verwendung der besagten Rückschlussbleche wird die magnetische Energie zumindest teilweise (insbesondere überwiegend oder vollständig) auf die Anziehungsfläche konzentriert und die räumliche Wirkung des Magnetfeldes begrenzt. Auf diese Weise kann einer unerwünschten Aufmagnetisierung der Umgebung oder der Beeinflussung der im Laborgerät 100 umliegenden Elektronikkomponenten vorgebeugt werden. Anschaulich können durch die Abschirmbleche 382, 384 die magnetischen Feldlinien auf den Bereich der Magnetfeldabschirmeinrichtung 380 konzentriert bzw. fokussiert werden.

## Patentansprüche

1. Laborgerät (100) zum Fixieren eines Objektträgers (102), wobei das Laborgerät (100) aufweist:
ein Grundbauteil (104) zum Aufnehmen des Objektträgers (102);
einen bewegbaren ersten Positionieranschlag (106) zum Anschlagen an einen ersten Randbereich des Objektträgers (102);
einen zweiten Positionieranschlag (108) zum Anschlagen an einen zweiten Randbereich des Objektträgers (102);
einen Fixiermechanismus (114) zum Fixieren des Objektträgers (102) auf dem Grundbauteil (104) zwischen dem ersten Positionieranschlag (106) und dem zweiten Positionieranschlag (108) mittels Bewegens zumindest des ersten Positionieranschlags (106); und
eine Betätigungseinrichtung (116) zum Betätigen des Fixiermechanismus (114) zum Überführen zumindest des ersten Positionieranschlags (106) zwischen einem den Objektträger (102) fixierenden Betriebszustand und einem den Objektträger (102) freigebenden Betriebszustand;
wobei der Fixiermechanismus (114) mindestens einen derart in mindestens einer Führungsaussparung (118) führbaren Führungskörper (120) aufweist, dass eine Betätigungskraft zum Betätigen der Betätigungseinrichtung (116) zum Überführen des Fixiermechanismus (114) in den den Objektträger (102) freigebenden Betriebszustand kleiner ist als eine von dem Objektträger (102) auszuübende Lösekraft zum Lösen des fixierten Objektträgers (102);
wobei die Führungsaussparung (118) bahnförmig gekrümmt ist.

2. Laborgerät (100) gemäß Anspruch 1, wobei der Führungskörper (120) ein Führungsstift ist.

3. Laborgerät (100) gemäß Anspruch 1 oder 2, wobei die Führungsaussparung (118) bogenförmig gekrümmt ist.

4. Laborgerät (100) gemäß einem der Ansprüche 1 bis 3, wobei die Führungsaussparung (118) in einer Führungsstruktur, insbesondere einer Führungsscheibe (122), gebildet ist.

5. Laborgerät (100) gemäß Anspruch 4, wobei die Führungsstruktur drehbar an dem Grundbauteil (104) gelagert ist, insbesondere mittels eines Gleitlagers (330).

6. Laborgerät (100) gemäß Anspruch 4 oder 5, wobei die Führungsstruktur in einer Ecke des Grundbauteils (104) angeordnet ist, wobei insbesondere in mindestens einer anderen Ecke eine, weiter insbesondere mittels eines Gleitlagers (330) gelagerte, Umlenkrolle (124) angeordnet ist.

7. Laborgerät (100) gemäß einem der Ansprüche 1 bis 6, wobei der Führungskörper (120) starr an dem ersten Positionieranschlag (106) angebracht ist.

8. Laborgerät (100) gemäß einem der Ansprüche 1 bis 7, wobei der Fixiermechanismus (114) zwei Führungsaussparungen (118) aufweist, wobei in jeder der Führungsaussparungen (118) ein jeweiliger Führungskörper (120) führbar ist.

9. Laborgerät (100) gemäß Anspruch 8, wobei jede der Führungsaussparungen (118) in einer jeweiligen Führungsstruktur, insbesondere in einer jeweiligen Führungsscheibe (122), angeordnet ist, und wobei insbesondere die Führungsstrukturen in einander gegenüberliegenden Ecken des Grundbauteils (104) angeordnet sind.

10. Laborgerät (100) gemäß einem der Ansprüche 1 bis 9, wobei der Fixiermechanismus (114) derart ausgebildet ist, dass bei Ausüben der Lösekraft durch den Objektträger (102) zum Lösen des fixierten Objektträgers (102) eine Verschiebekraft auf den Führungskörper (120) winkelig, insbesondere quer, zu der Führungsaussparung (118) wirkt.

11. Laborgerät (100) gemäß einem der Ansprüche 1 bis 10, wobei der Fixiermechanismus (114) derart ausgebildet ist, dass bei Betätigen der Betätigungseinrichtung (116) zum Überführen des Fixiermechanismus (114) in den den Objektträger (102) freigebenden Betriebszustand eine Verschiebekraft auf den Führungskörper (120) entlang der Führungsaussparung (118) wirkt.

12. Laborgerät (100) gemäß einem der Ansprüche 1 bis 11, wobei der Fixiermechanismus (114) entlang zumindest eines Teils eines Umfangs des Grundbauteils (104) unter Freilassung eines von dem Umfang umgebenen Zentralbereichs (126) des Grundbauteils (104) angeordnet ist.

13. Laborgerät (100) gemäß einem der Ansprüche 1 bis 12, wobei der Fixiermechanismus (114) entlang einer dem Objektträger (102) abgewandten Unterseite des Grundbauteils (104) angeordnet ist.

14. Laborgerät (100) gemäß Anspruch 12 oder 13, wobei der Fixiermechanismus (114) entlang des gesamten Umfangs des Grundbauteils (104) verläuft.

15. Laborgerät (100) gemäß einem der Ansprüche 12 bis 14, aufweisend mindestens eine Wechselwirkungseinrichtung (128), die zumindest teilweise in dem freigelassenen Zentralbereich (126) des Grundbauteils (104) angeordnet ist und/oder durch den freigelassenen Zentralbereich (126) des Grundbauteils (104) hindurch auf den Objektträger (102) wirkend ausgebildet ist.

16. Laborgerät (100) gemäß Anspruch 15, wobei die Wechselwirkungseinrichtung (128) aus einer Gruppe ausgewählt ist, die besteht aus einer Temperiereinrichtung zum Temperieren eines Mediums in dem Objektträger (102), einer optischen Apparatur zum optischen Wechselwirken mit einem Medium in dem Objektträger (102), und einem Magnetmechanismus zum magnetischen Wechselwirken mit einem Medium in dem Objektträger (102).

17. Laborgerät (100) gemäß einem der Ansprüche 12 bis 16, wobei der Fixiermechanismus (114) einen ringförmig geschlossenen Kraftübertragungsmechanismus (130), insbesondere einen Zahnriemen, entlang des Umfangs des Grundbauteils (104) aufweist.

18. Laborgerät (100) gemäß einem der Ansprüche 1 bis 17, wobei der Fixiermechanismus (114) in mindestens einer Ecke des Grundbauteils (104) eine Führungsstruktur, insbesondere eine Führungsscheibe (122), mit einer Führungsaussparung (118) und einen darin führbaren Führungskörper (120) aufweist.

19. Laborgerät (100) gemäß einem der Ansprüche 1 bis 18, wobei der Fixiermechanismus (114) in mindestens einer Ecke des Grundbauteils (104) eine Umlenkrolle (124) aufweist.

20. Laborgerät (100) gemäß den Ansprüchen 17 bis 19, wobei die mindestens eine Führungsstruktur und die mindestens eine Umlenkrolle (124) mittels des ringförmig geschlossenen Kraftübertragungsmechanismus (130) kraftgekoppelt sind.

21. Laborgerät (100) gemäß einem der Ansprüche 1 bis 20, wobei der erste Positionieranschlag (106) beim Überführen zwischen dem den Objektträger (102) fixierenden Betriebszustand und dem den Objektträger (102) freigebenden Betriebszustand mittels einer Linearführung (132) linear verschiebbar ist.

22. Laborgerät (100) gemäß einem der Ansprüche 1 bis 21, wobei der erste Positionieranschlag (106) mindestens einen ersten Positionierstift (134) und/oder der zweite Positionieranschlag (108) mindestens einen zweiten Positionierstift (134) aufweist, zwischen welchen Positionierstiften (134) der Objektträger (102) in Eingriff nehmbar ist.

23. Laborgerät (100) gemäß Anspruch 22, wobei zumindest einer des mindestens einen ersten Positionierstifts (134) und des mindestens einen zweiten Positionierstifts (134) ein Rückhalteprofil (136) aufweist, das ausgebildet ist, ein Lösen des Objektträgers (102) von dem Grundbauteil (104) in vertikaler Richtung zu hemmen, insbesondere zu verunmöglichen.

24. Laborgerät (100) gemäß einem der Ansprüche 1 bis 23, aufweisend den auf dem Grundbauteil (104) aufgenommenen Objektträger (102), insbesondere eine Probenträgerplatte, weiter insbesondere eine Mikrotiterplatte.

25. Verfahren zum Fixieren eines Objektträgers (102), wobei das Verfahren aufweist:
Aufnehmen des Objektträgers (102) auf einem Grundbauteil (104);
Betätigen einer Betätigungseinrichtung (116) zum Einwirken auf einen Fixiermechanismus (114) zum Fixieren des Objektträgers (102) auf dem Grundbauteil (104) zwischen einem beweglichen ersten Positionieranschlag (106) und einem zweiten Positionieranschlag (108) mittels Bewegens zumindest des ersten Positionieranschlags (106), sodass der erste Positionieranschlag (106) an einen ersten Randbereich des Objektträgers (102) und der zweite Positionieranschlag (108) an einen zweiten Randbereich des Objektträgers (102) anschlägt; und
Führen mindestens eines Führungskörpers (120) in mindestens einer Führungsaussparung (118) des Fixiermechanismus (114) derart, dass eine Betätigungskraft zum Überführen des Fixiermechanismus (114) in einen den Objektträger (102) freigebenden Betriebszustand kleiner ist als eine von dem Objektträger (102) auszuübende Lösekraft zum Lösen des fixierten Objektträgers (102);
wobei die Führungsaussparung (118) bahnförmig gekrümmt ist.

26. Verfahren gemäß Anspruch 25, wobei das Verfahren aufweist:
Anordnen des Fixiermechanismus (114) entlang zumindest eines Teils eines Umfangs des Grundbauteils (104) unter Freilassung eines von dem Umfang umgebenen Zentralbereichs (126) des Grundbauteils (104).

## Claims

1. A laboratory apparatus (100) for fixing a slide (102), wherein the laboratory apparatus (100) includes:
a base component (104) for accommodating the slide (102);
a movable first positioning stop (106) for butting against a first edge region of the slide (102);
a second positioning stop (108) for butting against a second edge region of the slide (102);
a fixing mechanism (114) for fixing the slide (102) on the base component (104) between the first positioning stop (106) and the second positioning stop (108) by movement of at least the first positioning stop (106); and
an actuating device (116) for actuating the fixing mechanism (114) for shifting at least the first positioning stop (106) between an operating state that fixes the slide (102) and an operating state that releases the slide (102);
wherein the fixing mechanism (114) includes at least one guide body (120) that can be guided in at least one guide slot (118) in such a way that an actuating force for operating the actuating device (116) to shift the fixing mechanism (114) into the operating state in which the slide (102) is released is less than a releasing force that must be exerted by the slide (102) in order to release the fixed slide (102);
wherein the guide slot (118) is curved in the form of a track.

2. The laboratory apparatus (100) according to Claim 1, wherein the guide body (120) is a guide pin.

3. The laboratory apparatus (100) according to Claim 1 or 2, wherein the guide slot (118) is curved in the form of an arc.

4. The laboratory apparatus (100) according to any one of Claims 1 to 3, wherein the guide slot (118) is formed in a guide structure, in particular a guide disc (122).

5. The laboratory apparatus (100) according to Claim 4, wherein the guide structure is mounted rotatably on the base component (104), in particular by means of a slide bearing (330).

6. The laboratory apparatus (100) according to 4 or 5, wherein the guide structure is arranged in a corner of the base component (104), wherein in particular a deflection roller (124) is arranged in at least one other corner, also particularly supported by means of a slide bearing (330).

7. The laboratory apparatus (100) according to any one of Claims 1 to 6, wherein the guide body (120) is attached rigidly to the first positioning stop (106).

8. The laboratory apparatus (100) according to any one of Claims 1 to 7, wherein the fixing mechanism (114) has two guide slots (118), wherein a respective guide body (120) can be guided in each of the guide slots (118).

9. The laboratory apparatus (100) according to Claim 8, wherein each of the guide slots (118) is arranged in a respective guide structure, in particular in a respective guide disc (122), and wherein in particular the guide structures are arranged in opposite corners of the base component (104).

10. The laboratory apparatus (100) according to any one of Claims 1 to 9, wherein the fixing mechanism (114) is designed in such manner that when the releasing force is exerted by the slide (102) to release the fixed slide (102), a displacement force acts on the guide body (120) at an angle, in particular transversely, to the guide slot (118).

11. The laboratory apparatus (100) according to any one of Claims 1 to 10, wherein the fixing mechanism (114) is designed in such manner that when the actuating device (116) is operated to shift the fixing mechanism (114) into the operating state that releases the slide (102), a displacement force acts on the guide body (120) along the guide slot (118).

12. The laboratory apparatus (100) according to any one of Claims 1 to 11, wherein the fixing mechanism (114) is arranged along at least a part of a perimeter of the base component (104), exposing a central region (126) of the base component (104) that is surrounded by the perimeter.

13. The laboratory apparatus (100) according to any one of Claims 1 to 12, wherein the fixing mechanism (114) is arranged alone an underside of the base component (104) facing away from the slide (102).

14. The laboratory apparatus (100) according to Claim 12 or 13, wherein the fixing mechanism (114) extends along the entire perimeter of the base component (104).

15. The laboratory apparatus (100) according to any one of Claims 12 to 14, having at least one interaction device (128), which is arranged at least partly in the exposed central region (126) of the base component (104), and/or is designed to act on the slide (102) through the exposed central region (126) of the base component (104).

16. The laboratory apparatus (100) according to Claim 15, wherein the interaction device (128) is selected from a group that consists of a temperature control device for controlling the temperature of a medium in the slide (102), an optical apparatus for optical interaction with a medium in the slide (102), and a magnetic mechanism for magnetic interaction with a medium in the slide (102).

17. The laboratory apparatus (100) according to any one of Claims 12 to 16, wherein the fixing mechanism (114) includes a closed force transmission mechanism (130) in the form of a ring, in particular a toothed belt, along the perimeter of the base component (104).

18. The laboratory apparatus (100) according to any one of Claims 1 to 17, wherein the fixing mechanism (114) has a guide structure, in particular a guide disc (122), with a guide slot (118) and a guide body (120) that can be guided therein, in at least one corner of the base component (104).

19. The laboratory apparatus (100) according to any one of Claims 1 to 18, wherein the fixing mechanism (114) has a deflection roller (124) in at least one corner of the base component (104).

20. The laboratory apparatus (100) according to Claims 17 to 19, wherein the at least one guide structure and the at least one deflection roller (124) are forcecoupled by means of the ring-like closed force transmission mechanism (130).

21. The laboratory apparatus (100) according to any one of Claims 1 to 20, wherein the first positioning stop (106) can be displaced linearly by means of a linear guide (132) when shifting between the slide (102) fixing operating state and the slide (102) releasing operating state.

22. The laboratory apparatus (100) according to any one of Claims 1 to 21, wherein the first positioning stop (106) has at least one first positioning pin (134), and/or the second positioning stop (108) has at least one second positioning pin (134), between which positioning pins (134) the slide (102) can be engaged.

23. The laboratory apparatus (100) according to Claim 22, wherein at least one of the at least one first positioning pin (134) and the at least one second positioning pin (134) has a retaining profile (136) which is designed to block, and in particular prevent the slide (102) from becoming detached from the base component (104) in the vertical direction.

24. The laboratory apparatus (100) according to any one of Claims 1 to 23, with the slide (102), in particular a sample carrier plate, further in particular a microtiter plate, being mounted on the base component (104).

25. A method for fixing a slide (102), wherein the method includes:
mounting the slide (102) on a base component (104);
operating an actuating device (116) to act on a fixing mechanism (114) for fixing the slide (102) on the base component (104) between a movable first positioning stop (106) and a second positioning stop (108) by moving at least the first positioning stop (106), so that the first positioning stop (106) abuts against a first edge region of the slide (102) and the second positioning stop (108) abuts against a second edge region of the slide (102); and
guiding at least one guide body (120) in at least one guide slot (118) of the fixing mechanism (114) in such manner that an actuating force for shifting the fixing mechanism (114) into an operating state that releases the slide (102) is less than a releasing force to be exerted by the slide (102) in order to release the fixed slide (102);
wherein the guide slot (118) is curved in the form of a track.

26. The method according to Claim 25, wherein the method includes:
arranging the fixing mechanism (114) along at least a part of a perimeter of the base component (104), exposing a central region (126) of the base component (104) that is surrounded by the perimeter.

## Revendications

1. Appareil de laboratoire (100) destiné à fixer un porte-objet (102), sachant que l'appareil de laboratoire (100) présente :
un composant de base (104) destiné à réceptionner le porte-objet (102) ;
une première butée de positionnement (106) mobile destinée à venir en butée contre une première zone de bord du porte-objet (102) ;
une deuxième butée de positionnement (108) destinée à venir en butée contre une deuxième zone de bord du porte-objet (102) ;
un mécanisme de fixation (114) destiné à fixer le porte-objet (102) sur le composant de base (104) entre la première butée de positionnement (106) et la deuxième butée de positionnement (108) par déplacement d'au moins la première butée de positionnement (106) ; et
un dispositif d'actionnement (116) destiné à actionner le mécanisme de fixation (114) pour transférer au moins la première butée de positionnement (106) entre un état de fonctionnement fixant le porte-objet (102) et un état de fonctionnement libérant le porte-objet (102) ;
sachant que le mécanisme de fixation (114) présente au moins un corps de guidage (120) pouvant être guidé dans au moins un évidement de guidage (118) de telle manière qu'une force d'actionnement destinée à actionner le dispositif d'actionnement (116) pour transférer le mécanisme de fixation (114) dans l'état de fonctionnement libérant le porte-objet (102) soit plus petite qu'une force de desserrage à exercer par le porte-objet (102) pour desserrer le porte-objet (102) fixé ;
sachant que l'évidement de guidage (118) est incurvé en forme de bande.

2. Appareil de laboratoire (100) selon la revendication 1, sachant que le corps de guidage (120) est un pion de guidage.

3. Appareil de laboratoire (100) selon la revendication 1 ou 2, sachant que l'évidement de guidage (118) est incurvé en forme d'arc.

4. Appareil de laboratoire (100) selon l'une des revendications 1 à 3, sachant que l'évidement de guidage (118) est formé dans une structure de guidage, en particulier un disque de guidage (122).

5. Appareil de laboratoire (100) selon la revendication 4, sachant que la structure de guidage est logée de manière rotative au niveau du composant de base (104), en particulier moyennant un palier lisse (330).

6. Appareil de laboratoire (100) selon la revendication 4 ou 5, sachant que la structure de guidage est disposée dans un coin du composant de base (104), sachant qu'en particulier dans au moins un autre coin est disposé un galet de renvoi (124) logé plus particulièrement moyennant un palier lisse (330).

7. Appareil de laboratoire (100) selon l'une des revendications 1 à 6, sachant que le corps de guidage (120) est apposé de manière rigide au niveau de la première butée de positionnement (106).

8. Appareil de laboratoire (100) selon l'une des revendications 1 à 7, sachant que le mécanisme de fixation (114) présente deux évidements de guidage (118), sachant qu'un corps de guidage (120) respectif peut être guidé dans chacun des évidements de guidage (118).

9. Appareil de laboratoire (100) selon la revendication 8, sachant que chacun des évidements de guidage (118) est disposé dans une structure de guidage respective, en particulier dans un disque de guidage (122) respectif, et sachant qu'en particulier les structures de guidage sont disposées dans des coins opposés l'un à l'autre du composant de base (104).

10. Appareil de laboratoire (100) selon l'une des revendications 1 à 9, sachant que le mécanisme de fixation (114) est constitué de telle manière que, lors de l'exercice de la force de desserrage par le porte-objet (102) pour desserrer le porte-objet (102) fixé, une force de translation agisse sur le corps de guidage (120) angulairement, en particulier transversalement, par rapport à l'évidement de guidage (118).

11. Appareil de laboratoire (100) selon l'une des revendications 1 à 10, sachant que le mécanisme de fixation (114) est constitué de telle manière que, lors de l'actionnement du dispositif d'actionnement (116) pour transférer le mécanisme de fixation (114) dans l'état de fonctionnement libérant le porte-objet (102), une force de translation agisse sur le corps de guidage (120) le long de l'évidement de guidage (118).

12. Appareil de laboratoire (100) selon l'une des revendications 1 à 11, sachant que le mécanisme de fixation (114) est disposé le long d'au moins une partie d'un pourtour du composant de base (104) en dégageant une zone centrale (126) du composant de base (104) qui est entourée par le pourtour.

13. Appareil de laboratoire (100) selon l'une des revendications 1 à 12, sachant que le mécanisme de fixation (114) est disposé le long d'une face inférieure du composant de base (104) qui est tournée du côté opposé au porte-objet (102).

14. Appareil de laboratoire (100) selon la revendication 12 ou 13, sachant que le mécanisme de fixation (114) passe le long de tout le pourtour du composant de base (104).

15. Appareil de laboratoire (100) selon l'une des revendications 12 à 14, présentant au moins un dispositif d'interaction (128) qui est disposé au moins en partie dans la zone centrale (126) dégagée du composant de base (104) et/ou est constitué de manière à agir sur le porte-objet (102) à travers la zone centrale (126) dégagée du composant de base (104).

16. Appareil de laboratoire (100) selon la revendication 15, sachant que le dispositif d'interaction (128) est sélectionné dans un groupe qui est composé d'un dispositif de mise à température destiné à mettre à température un fluide dans le porte-objet (102), d'un appareillage optique destiné à interagir optiquement avec un fluide dans le porte-objet (102), et d'un mécanisme magnétique destiné à interagir magnétiquement avec un fluide dans le porte-objet (102).

17. Appareil de laboratoire (100) selon l'une des revendications 12 à 16, sachant que le mécanisme de fixation (114) présente un mécanisme de transmission de force (130) fermé en forme annulaire, en particulier une courroie dentée, le long du pourtour du composant de base (104).

18. Appareil de laboratoire (100) selon l'une des revendications 1 à 17, sachant que le mécanisme de fixation (114) présente, dans au moins un coin du composant de base (104), une structure de guidage, en particulier un disque de guidage (122), avec un évidement de guidage (118) et un corps de guidage (120) pouvant être guidé dans celui-ci.

19. Appareil de laboratoire (100) selon l'une des revendications 1 à 18, sachant que le mécanisme de fixation (114) présente un galet de renvoi (124) dans au moins un coin du composant de base (104).

20. Appareil de laboratoire (100) selon les revendications 17 à 19, sachant que l'au moins une structure de guidage et l'au moins un galet de renvoi (124) sont couplés en termes de force moyennant le mécanisme de transmission de force (130) fermé en forme annulaire.

21. Appareil de laboratoire (100) selon l'une des revendications 1 à 20, sachant que la première butée de positionnement (106) est translatable linéairement moyennant un guidage linéaire (132) lors du transfert entre l'état de fonctionnement fixant le porte-objet (102) et l'état de fonctionnement libérant le porte-objet (102).

22. Appareil de laboratoire (100) selon l'une des revendications 1 à 21, sachant que la première butée de positionnement (106) présente au moins un premier pion de positionnement (134) et/ou la deuxième butée de positionnement (108) au moins un deuxième pion de positionnement (134) entre lesquels pions de positionnement (134) le porte-objet (102) peut être mis en prise.

23. Appareil de laboratoire (100) selon la revendication 22, sachant qu'au moins un de l'au moins un premier pion de positionnement (134) et de l'au moins un deuxième pion de positionnement (134) présente un profil de retenue (136) qui est constitué pour entraver, en particulier empêcher, un desserrage du porte-objet (102) par rapport au composant de base (104) en direction verticale.

24. Appareil de laboratoire (100) selon l'une des revendications 1 à 23, présentant le porte-objet (102) réceptionné sur le composant de base (104), en particulier une plaque porte-éprouvettes, plus particulièrement une plaque microtitre.

25. Procédé destiné à fixer un porte-objet (102), sachant que le procédé présente :
la réception du porte-objet (102) sur un composant de baes (104) ;
l'actionnement d'un dispositif d'actionnement (116) pour agir sur un mécanisme de fixation (114) destiné à fixer le porte-objet (102) sur le composant de base (104) entre une première butée de positionnement (106) mobile et une deuxième butée de positionnement (108) par déplacement d'au moins la première butée de positionnement (106) de telle sorte que la première butée de positionnement (106) vienne en butée contre une première zone de bord du porte-objet (102) et la deuxième butée de positionnement (108) contre une deuxième zone de bord du porte-objet (102) ; et
le guidage d'au moins un corps de guidage (120) dans au moins un évidement de guidage (118) du mécanisme de fixation (114) de telle manière qu'une force d'actionnement pour transférer le mécanisme de fixation (114) dans un état de fonctionnement libérant le porte-objet (102) soit plus petite qu'une force de desserrage à exercer par le porte-objet (102) pour desserrer le porte-objet (102) fixé ;
sachant que l'évidement de guidage (118) est incurvé en forme de bande.

26. Procédé selon la revendication 25, sachant que le procédé présente :
la disposition du mécanisme de fixation (114) le long d'au moins une partie d'un pourtour du composant de base (104) en dégageant une zone centrale (126) du composant de base (104) qui est entourée par le pourtour.
